# EUROPEAN PATENT APPLICATION

(11) **EP 4 439 171 A1**
(43) Date of publication of application: **02.10.2024**
(21) Application number: 22897937.3
(22) Date of filing: 25.11.2022
(51) Int. Cl.: G03B 13/06, G02B 7/02, G02B 7/09

(54) **DRIVE COMPONENT AND ZOOM CAMERA MODULE**

(30) Priority: 25.11.2021 CN 202111414230; 25.11.2021 CN 202111416180; 25.11.2021 CN 202111416166; 25.11.2021 CN 202111414246; 25.11.2021 CN 202111416177; 26.11.2021 CN 202111422651; 26.11.2021 CN 202111424290; 26.11.2021 CN 202111424275
(71) Applicant: Ningbo Sunny Opotech Co., Ltd., Ningbo, Zhejiang 315400 (CN)
(72) Inventor: ZHAO, Bojie, Zhejiang 315400 (CN); YAO, Lifeng, Zhejiang 315400 (CN); LU, Xiaofeng, Zhejiang 315400 (CN); KONG, Yanxia, Zhejiang 315400 (CN); YANG, Yi, Zhejiang 315400 (CN)
(74) Representative: Barker Brettell LLP
(86) International application number: PCT/CN2022/134378
(87) International publication number: WO 2023/093855

(57) **Abstract**

A drive component (940). In the drive component (940), guide devices (947, 948) for guiding carriers (942, 943) to move are made of a special material. and cooperate with magnetic attraction members (9511. 9512) to generate a magnetic attraction force by means of which the guide devices (947, 948) are positioned and held in a predetermined position, such that the guide devices(947, 948) can smoothly guide the carriers (942, 943) to move. In addition, a zoom camera module is further provided.

## Description

### Technical Field

The present invention relates to the field of camera modules, in particular, to a drive component and a zoom camera module, wherein a guiding device in the drive component for guiding the movement of the carrier is made of a special material to produce a magnetic attraction force that keeps the guiding device positioned in a predetermined position in cooperation with the magnetic attraction component, so that the guiding device can smoothly guide the movement of the lens carrier; a driving element for driving the carrier to move along an optical axis and a guiding element for guiding the carrier to move along the optical axis direction are provided at the same side of the carrier in the drive component, by such a special configuration, rotation of the carrier with respect to the guiding element is avoided when the carrier being driven to move.

### Background

With the popularity of mobile electronic devices, the technology related to camera modules that are used in mobile electronic devices to help users obtain images has been rapidly developed and advanced. Currently, in the market, with the improvement of living standards, consumers have higher and more diverse functional requirements for camera modules configured in mobile electronic devices (such as smartphones), they not only require the camera modules configured in terminal devices to achieve optical image stabilization to reduce the impact of image quality caused by shaking during shooting, but also require the ability to achieve zoom shooting to capture clear images of the subject at different distances through optical zoom.

In order to achieve zoom shooting, a current solution is to configure a zoom lens in the camera module to form a zoom camera module. An optical zoom camera module achieves the purpose of zooming by adjusting the distance between two of the optical lenses to changing the focal length of the lens to achieve the purpose of optical zoom, which is able to capture can capture clear images of the subject at different distances.

In an optical zoom camera module, the zoom lens typically comprises multiple lens portions, for example, typically comprising three lens portions: a fixed portion, a zooming lens part, and a focusing lens part. The optical zoom camera module is respectively configured with a driving element for the zooming lens part and the focusing lens part. In the zoom process, the current practice is to first move the zooming lens part to a preset position through a driving element; then, move the focusing lens part through another driving element to focus, so as to achieve clear imaging of the optical zoom camera module, and complete the optical zoom process in this way. However, with the increasing requirements of consumers for zoom accuracy, zoom speed, and the size of the optical zoom camera module, the existing structural design schemes and zoom driving schemes of the optical zoom camera module have gradually become difficult to meet the requirements.

Specifically, in the current zoom scheme of the optical zoom camera module, it chooses to drive the zooming lens part and the focusing lens part separately in batches for optical zoom, that is, first move the zooming lens part, and then move the focusing lens part. It should be noted in particular that, during the zoom process, because it is not known where the zooming lens part should be moved to, it is necessary to move the zooming lens part to the preset position almost throughout the entire distance of run, which will result in a relatively low zoom speed and affect the user's shooting experience.

Secondly, in order to obtain clear imaging, when driving the focusing lens part through a second driving element, it is necessary to control the focusing lens part to run throughout the entire distance of run, that is, the focus lens portion needs to run from the farthest position to the nearest position to determine the clear imaging position. The above method lacks efficiency on the one hand, and on the other hand, it will also produce image blur when focusing to infinity, affecting the user's shooting experience.

Therefore, an optimized zoom module design solution is expected.

### Summary

An advantage of the present invention is to provide a drive component and a zoom camera module, wherein the zoom camera module adopts a "parent-child" drive scheme to provide support for the zoom driving mechanism, and the "parent-child" drive scheme can drive the zoom camera module to achieve the optical performance of optical zoom and/or optical focus adjustment at a relatively faster speed.

Another advantage of the present invention is to provide a drive component and a zoom camera module, wherein the "parent-child" drive scheme comprises two driving elements, and one driving element can drive two lens parts to move in unison through a special structural configuration, while the other driving element can only drive one lens part to move, in this way, the zoom camera module can adjust the optical performance such as optical zoom and/or optical focus at a relatively faster speed.

Another advantage of the present invention is to provide a zoom camera module, wherein a guiding device in the drive component for guiding the movement of the carrier is made of a special material to produce a magnetic attraction force that keeps the guiding device positioned in a predetermined position in cooperation with the magnetic attraction component, so that the guiding device can smoothly guide the movement of the lens carrier. That is, the guiding device not only guides the movement of the lens carrier, but also plays a self-positioning role.

Another advantage of the present invention is to provide a zoom camera module, wherein a special relative positional relationship exists between the first driving element for driving the first carrier to move and the first guiding device for guiding the movement of the first carrier in the drive component, so that the first carrier does not rotate during the movement under the action of the first driving element and the first guiding device.

Another advantage of the present invention is to provide a zoom camera module, wherein in some embodiments of the present invention, the first driving element and the second driving element of the zoom camera module are not both electromagnetic motors, so as to effectively avoid electromagnetic interference between the two driving elements.

Still other advantages and features of the present invention will become apparent from the description below and may be realized by the means and combinations specifically pointed out in the claims.

In order to achieve at least one of the above advantages, the present invention provides a zoom camera module, which comprises:
a driver housing;
a first carrier accommodated in the driver housing and adapted for receiving a first lens part therein, wherein the first lens part has an optical axis;
a first driving element for driving the first carrier to move within the driver housing along the optical axis; and
a first guiding device for guiding the first carrier to move within the driver housing along the optical axis, wherein the first guiding device is clamped between the first carrier and the driver housing.

In the drive component according to the present invention, the drive component further comprises a second magnetic attraction component that is provided at the first carrier, and the first guiding device is clamped between the first carrier and the driver housing by the magnetic attraction force between the second magnetic attraction component and the first carrier.

In the drive component according to the present invention, the magnetic attraction force has a direction perpendicular to the guiding direction of the first guiding device.

In the drive component according to the present invention, the first guiding device comprises a first guiding element and a second guiding element, which are provided between a bottom surface of the first carrier and an inner bottom surface of the driver housing, and the first guiding element and the second guiding element are extended along the optical axis and are symmetrically arranged with respect to the optical axis.

In the drive component according to the present invention, the second magnetic attraction component comprises a pair of second magnets, wherein one of the second magnets is installed at the first carrier and corresponded to the first guiding element, and the other of the second magnets is installed at the second carrier and corresponded to the second guiding element, wherein the first guiding element and the second guiding element are made of magnetic material to respectively cooperate with the second magnets to generate the magnetic attraction force.

In the drive component according to the present invention, the first guiding element is a first guiding rod fixed to the driver housing and extended between the bottom surface of the first carrier and the inner bottom surface of the driver housing along the optical axis, and the second guiding element is a second guiding rod fixed to the driver housing and extended between the bottom surface of the first carrier and the inner bottom surface of the driver housing along the optical axis.

In the drive component according to the present invention, one of the second magnets and another second magnet are symmetrically arranged on the first carrier with respect to the optical axis.

In the drive component according to the present invention, the center of one of the second magnets, the center of another second magnet and the center of gravity of the first carrier are in the same horizontal line.

In the drive component according to the present invention, the center of one of the second magnets, the center of the other of the second magnets and the center of gravity of the first carrier have the same height with respect to the inner bottom surface of the driver housing.

In the drive component according to the present invention, the first driving element is a piezoelectric actuator, and the piezoelectric actuator is disposed between an inner upper surface of the driver housing and the first carrier, and the piezoelectric actuator and the first guiding element are located at the same side of the first carrier, and the second guiding element and the piezoelectric actuator are located at different sides of the first carrier.

In the drive component according to the present invention, the piezoelectric actuator comprises a piezoelectric driving part and a friction driving part that is drivably coupled with the piezoelectric driving part, and the friction driving part comprises at least one friction head pressed against a top surface of the first carrier, wherein the drive component further comprises a pre-pressure force device disposed between the inner upper surface of the driver housing and the first driving element, and the first carrier further comprises a friction member formed on its top surface, and the friction head of the first driving element is pressed against the friction member.

In the drive component according to the present invention, the drive component further comprises a second carrier that is accommodated within the driver housing and movably installed at the first carrier, wherein the second carrier is adapted for receiving a second lens part therein, and a second driving element for driving the second carrier to move with respect to the first carrier, wherein the second driving element is a voice coil motor.

In the drive component according to the present invention, the drive component further comprises a second guiding device formed between the first carrier and the second carrier and used for guiding the second carrier to move with respect to the first carrier along the optical axis, and the second guiding device is clamped between the first carrier and the second carrier.

In the drive component according to the present invention, the drive component further comprises a first magnetic attraction component, wherein the first magnetic attraction component comprises a first magnet provided in the second carrier and a first magnetic attraction element provided in the first carrier and corresponded to the first magnet, so as to make the second guiding device be clamped between the second carrier and the first carrier by the magnetic attraction force between the first magnet and the first magnetic attraction element.

In the drive component according to the present invention, the first carrier has a second groove inwardly recessed from a bottom surface thereof, wherein the second magnet is held in the second groove by the magnetic attraction force of the first magnetic attraction component.

The present invention further provides a driver component, which comprises:
a driver housing;
a first carrier accommodated in the driver housing and adapted for receiving a first lens part therein, wherein the first lens part has an optical axis;
a first driving element for driving the first carrier to move within the driver housing along the optical axis; and
a first guiding device, wherein the first driving element and the first guiding device are arranged at two opposite sides of the first carrier,
wherein the first guiding device comprises a first guiding element for guiding the first carrier to move along the optical axis in the driver housing, and an actuation point where the first driving element acts on the first carrier is aligned with a center of a cross-section of the first guiding element in the height direction defined by the drive component.

In the drive component according to the present invention, the first guiding element is a piezoelectric actuator, wherein the piezoelectric actuator comprises a piezoelectric driving part and a friction driving part that is drivably coupled with the piezoelectric driving part, and the friction driving part comprises at least one friction head pressed against a top surface of the first carrier, wherein the position of the friction head pressed against the top surface of the first carrier is the position where the first driving element acts on the first carrier.

In the drive component according to the present invention, the first guiding element is a first guiding rod clamped between a bottom surface of the first carrier and an inner bottom surface of the driver housing, wherein the position where the friction head is pressed against the top surface of the first carrier is aligned with the center of the cross-section of the first guiding rod in the height direction defined by the drive component.

In the drive component according to the present invention, the line connecting the center of the cross-section of the first guiding rod and the center of the cross-section of the friction head is perpendicular to the straight line defined by the first guiding rod.

In the drive component according to the present invention, the first guiding device further comprises a second guiding rod clamped and disposed between the bottom surface of the first carrier and the inner bottom surface of the driver housing, and the second guiding rod and the first guiding rod are symmetrically arranged with respect to the optical axis.

In the drive component according to the present invention, the first guiding rod and the first driving element are located at the same side of the first carrier, and the second guiding rod and the first driving element are located at different sides of the first carrier.

In the drive component according to the present invention, the drive component further comprises a second magnetic attraction component that is provided at the first carrier, and the first guiding rod and the second guiding rod of the first guiding device is clamped between the first carrier and the driver housing by the magnetic attraction force between the second magnetic attraction component and the first guiding device.

In the drive component according to the present invention, the second magnetic attraction component comprises a pair of second magnets, wherein one of the second magnets is installed at the first carrier and corresponded to the first guiding rod, and another of the second magnets is installed at the second carrier and corresponded to the second guiding rod, wherein the first guiding rod and the second guiding rod are made of magnetic material to respectively cooperate with the second magnets to generate the magnetic attraction force.

In the drive component according to the present invention, the drive component further comprises a pre-pressure force device disposed between the inner upper surface of the driver housing and the first driving element, and the first carrier further comprises a friction member formed on its top surface, and the friction head of the first driving element is pressed against the friction member.

The present invention further provides a driver component, which comprise:
a driver housing;
a first carrier accommodated in the driver housing and having a first mounting chamber for installing a first lens part therein, wherein the first lens part has an optical axis;
a first driving element for driving the first carrier to move within the driver housing along the optical axis; and
a conductive component comprising a third circuit board and a fourth circuit board, wherein the third circuit board includes a first electric connection terminal and a second electric connection terminal opposite to the first electric connection terminal, and the first electric connection terminal is electrically connected to the first driving element,
wherein the fourth circuit board comprises a first segment having a third electric connection terminal and a second segment having a fourth electric connection terminal, wherein the first segment is fixed at the first carrier, the second segment is fixed at the drive housing, and at least a part of the first segment and at least a part of the second segment are overlapped with each other in the height direction defined by the drive component.

In the drive component according to the present invention, the fourth circuit board further comprises a second bending portion bent and extended between the first segment and the second segment.

In the drive component according to the present invention, the first segment of the fourth circuit board is fixed at the top surface of the first carrier, and the second segment of the fourth circuit board is fixed at the inner bottom surface of the driver housing.

In the drive component according to the present invention, the first segment of the fourth circuit board is fixed at the first carrier by fixing the third electric connection terminal at the top surface of the first carrier, and the second segment of the fourth circuit board is fixed at the driver housing by fixing the second electric connection terminal at the inner bottom surface of the driver housing.

In the drive component according to the present invention, the first segment is parallel to the second segment.

In the drive component according to the present invention, the extension direction of the first segment and the second segment is consistent with the direction defined by the optical axis.

In the drive component according to the present invention, the first carrier comprises a first part and a second part adjacent to each other along a direction defined by the optical axis, wherein the first mounting chamber is located in the first part, wherein the third electric connection terminal of the first segment of the fourth circuit board is extended from the second part to the first part of the first carrier, and the second segment of the fourth circuit board is bent and extended from the first part to the second part of the first carrier, and the second bending portion is extended between the first segment and the second segment.

In the drive component according to the present invention, the first segment, the second segment, and the second bending portion define a U-shaped structure.

In the drive component according to the present invention, the sum of the lengths of the first segment and the second segment is greater than the stroke requirement of the first carrier.

In the drive component according to the present invention, when the first driving element drives the first carrier to move with respect to the driver housing in a direction along the optical axis, a length of the first straight segment changing is equal to a length of the second straight segment changing.

In the drive component according to the present invention, the second electric connection terminal of the third circuit board is extended to an outer side of the driver housing and is adapted to be electrically connected with a photosensitive component, wherein the third circuit board further comprises a first bending portion bent and extended between the first electric connection terminal and the second electric connection terminal , wherein the fourth electric connection terminal of the fourth circuit board is electrically connected with the third circuit board.

In the drive component according to the present invention, the first carrier further has a second mounting chamber located in the second part, wherein the drive component further comprises a second carrier installed movably in the second mounting chamber and a second driving element for driving the second carrier to move with respect to the first carrier in a direction along the optical axis.

In the drive component according to the present invention, the conductive component further comprises a second circuit board disposed in the second part, wherein one end of the second circuit board is electrically connected with the second driving element, and another end of the second circuit board is electrically connected with the third electric connection terminal of the fourth circuit board.

In the drive component according to the present invention, the second circuit board is disposed on an outer surface of the second carrier, or the second circuit board is disposed on an inner side of the second part of the first carrier.

The present invention further provides a driver component, which comprises:
a driver housing;
a first carrier accommodated in the driver housing and having a first mounting chamber for installing a first lens part therein, wherein the first lens part has an optical axis;
a first driving element for driving the first carrier to move within the driver housing in a direction along the optical axis;
a pre-pressure force device disposed between the first driving element and the driver housing, adapted to provide a pre-pressure force that causes the first driving element to be pressed against the first carrier, wherein a first end of the pre-pressure force device is fixed at one side of the driver housing, and a second end of the pre-pressure force device is fixed at another side of the driver housing, wherein the first end of the pre-pressure force device and the second end of the pre-pressure force device are opposite to each other, and the one side of the driver housing and the another side of the driver housing are opposite to each other.

In the drive component according to the present invention, the pre-pressure force device is extended between the opposite sides of the driver housing in the direction along the optical axis.

In the drive component according to the present invention, the pre-pressure force device is extended between two opposite sides of the driver housing along the width direction defined by the driver housing.

In the drive component according to the present invention, the pre-pressure force device comprises a first fixed portion and a second fixed portion fixed respectively between two opposite sides of the drive housing, a first deforming portion extended from the first fixed portion and a second deforming portion extended from the second fixed portion, and a main body portion extended between the first deforming portion and the second deforming portion, wherein an end of the first fixed portion forms the first end, and an end of the second fixed portion forms the second end, the main body portion is pressed against the first driving element to apply a pre-pressure force on the first driving element through the main body portion, so as to make the first driving element contact the first carrier.

In the drive component according to the present invention, the first fixed portion, the second fixed portion, and the main body portion are located in the same height plane.

In the drive component according to the present invention, the first fixed portion and the second fixed portion are located in the same height plane, and the main body portion is lower than the height plane where the first fixed portion and the second fixed portion are located.

In the drive component according to the present invention, the extension directions of the first fixed portion, the second fixed portion, and the main body portion are consistent with the extension direction of the first driving element.

In the drive component according to the present invention, the first driving element is a piezoelectric actuator, and the piezoelectric actuator is provided between a top surface of the first carrier and the driver housing, wherein the piezoelectric actuator comprises a piezoelectric driving part and a friction driving part movably connected to the piezoelectric driving part, wherein the friction driving part is pressed against a top surface of the first carrier by the pre-pressure force provided by the pre-pressure force device.

In the drive component according to the present invention, the drive component further comprises a first guiding device for guiding the first carrier to move within the driver housing in the direction defined by the optical axis, wherein the direction of the pre-pressure force applied on the first driving element by the pre-pressure force device is perpendicular to a guiding direction of the first guiding device.

In the drive component according to the present invention, the first guiding device comprises a first guiding element and a second guiding element, which are provided at two opposite sides of the first carrier, wherein the first guiding element and the pre-pressure force device are located at the same side of the first carrier, and the second guiding element and the pre-pressure force device are located at two different sides of the first carrier.

In the drive component according to the present invention, the direction of the pre-pressure force applied to the first driving element by the pre-pressure force device is perpendicular to the extension direction of the first guiding element.

In the drive component according to the present invention, the first guiding element is a first guiding rod extended in a direction defined by the optical axis.

In the drive component according to the present invention, the drive component further comprises a second carrier movably installed at the first carrier, wherein the second carrier is adapted for receiving a second lens part therein, and a second driving element for driving the second carrier to move with respect to the first carrier.

In the drive component according to the present invention, the drive component further comprises a second guiding device disposed between the first carrier and the second carrier for guiding the second carrier to move with respect to the first carrier in a direction defined by the optical axis, wherein the pre-pressure force device provides a pre-pressure force acting on the first driving element in a direction perpendicular to the guiding direction of the second guiding device.

The present invention further provides a driver component, which comprises:
a driver housing;
a first carrier movably installed in the driver housing and adapted for receiving a first lens part therein;
a second carrier movably installed in the first carrier and adapted for receiving a second lens part therein, wherein the first lens part and the second lens part define an optical axis;
a driving element for driving the first carrier and/or the second carrier to move; and
a plurality of magnetic attraction components comprising a first magnetic attraction component and a second magnetic attraction component, wherein the first magnetic attraction component comprises at least one first magnet provided at the second carrier and a first magnetic attraction element provided at the first carrier and corresponded to the first magnet, and the second magnetic attraction component comprises at least one second magnet provided at the first carrier, wherein the at least one first magnet, the first magnetic attraction element and the at least one second magnet are stacked in the height direction defined by the drive component.

In the drive component according to the present invention, the first magnetic attraction element is located between the first magnet and the second magnet in the height direction defined by the drive component.

In the drive component according to the present invention, the size of the first magnetic attraction element is larger than the stroke requirement of the first magnet.

In the drive component according to the present invention, the first carrier has at least one second groove inwardly recessed from a bottom surface thereof, wherein at least one second magnet is held in at least one second groove by the magnetic attraction force between the at least one second magnet and the first magnetic attraction element.

In the drive component according to the present invention, the drive component further comprises further comprises a first guiding device for guiding the first carrier to move in the direction along the optical axis in the drive housing, wherein the first guiding device is clamped between the first carrier and the driver housing by the magnetic attraction force between the second magnetic attraction component and the first guiding device.

In the drive component according to the present invention, the first guiding device comprises a first guiding element and a second guiding element symmetrically arranged with respect to the optical axis, and the first guiding element and/or the second guiding element are made of magnetic attraction material.

In the drive component according to the present invention, the at least one second magnet comprises a pair of second magnets, wherein one of the pair of second magnets is corresponded to the first guiding element, and another of the pair of second magnets is corresponded to the second guiding element.

In the drive component according to the present invention, one of the pair of second magnets and another of the pair of second magnet have the same height with respect to a bottom surface of the drive housing.

In the drive component according to the present invention, the drive component further comprises a second guiding device for guiding the second carrier to move with respect to the first carrier in a direction along the optical axis, wherein the second guiding device is clamped between the first carrier and the second carrier by a magnetic attraction force between the first magnet and the first magnetic attraction element.

In the drive component according to the present invention, the drive component further comprises a first guide groove and a second guide groove formed between the first carrier and the second carrier, wherein the first guide groove and the second guide groove are symmetrically defined with respect to the optical axis, and the second guiding device comprises at least one first ball installed in the first guide groove and at least one second ball installed in the second guide groove.

In the drive component according to the present invention, the at least one first magnet comprises a pair of first magnets, wherein one of the first magnets is installed in the first guide groove, and the other of the first magnets is installed in the second guide groove.

In the drive component according to the present invention, the second carrier further comprises a pair of first grooves inwardly recessed from a bottom surface of the second carrier and located within the first guide groove and the second guide groove, wherein the pair of the first magnets are respectively installed in the pair of first grooves.

In the drive component according to the present invention, a pair of the first magnets is corresponded to a first magnetic attraction element at the same time.

The present invention further provides a driver component, which comprises:
a driver housing;
a first carrier movably installed in the driver housing, wherein the first carrier is adapted to be used for installing a first lens part thereon, and the first lens part has an optical axis;
a first driving element for driving the first carrier to move within the driver housing along the optical axis; and
a first guiding device for guiding the first carrier to move within the driver housing along the direction defined by the optical axis, wherein the first guiding device comprises a first guiding element extended along the direction defined by the optical axis;
wherein, the first guiding element and the first driving element are located at a first side of the first carrier, and the first guiding element is located at the first driving element.

In the drive component according to the present invention, the first driving element is provided at a lower portion of the first carrier, and the first guiding element is provided at an upper portion of the first carrier.

In the drive component according to the present invention, the first driving element is provided between an inner bottom surface of the driver housing and a lower surface of the first carrier, and the first guiding element is formed through the upper portion of the first carrier.

In the drive component according to the present invention, the first carrier has a first guiding hole formed through the upper portion thereof, and the first guiding element is passed through the first guiding hole and is fixed at two opposite sides of the driver housing.

In the drive component according to the present invention, the first carrier has at least three protruding portions extended inwardly from a hole wall of the first guiding hole, and the at least three protruding portions are in contact with the first guiding element.

In the drive component according to the present invention, the driver housing comprises a base and a top cover that are engaged with each other, and an inner bottom surface of the base defines the inner bottom surface of the driver housing, wherein the base has a base through groove formed between its inner bottom surface and its outer bottom surface, and the first driving element is installed in the base through groove.

In the drive component according to the present invention, an acting point where the first driving element acts on the first carrier is aligned with a cross section center of a first guiding element.

In the drive component according to the present invention, the acting point where the first driving element acts on the first carrier is located at one side of the cross section center of the first guiding element, which is far away from the optical axis.

In the drive component according to the present invention, the first driving element is a piezoelectric actuator, and the piezoelectric actuator comprises a piezoelectric driving part and a friction driving part drivably connected with the piezoelectric driving part, wherein the friction driving part is in contact with the first carrier frictionally, wherein a contact point between the friction driving part and the first carrier is the acting point where the first driving element acts on the first carrier.

In the drive component according to the present invention, the first driving element is a piezoelectric actuator, and the piezoelectric actuator comprises a piezoelectric driving part and a friction driving part drivably connected with the piezoelectric driving part, wherein at least a part of the piezoelectric driving part is located inside the base through groove, and the friction driving part is extended out of the base through groove and is in contact with the first carrier frictionally.

In the drive component according to the present invention, the base through groove has a base receiving through groove inwardly recessed from the inner bottom surface of the base and a base receiving recess inwardly recessed from the outer bottom surface of the base, wherein the base receiving through groove is communicated with the base receiving recess, wherein at least a part of the piezoelectric driving part is disposed inside the base receiving through groove.

In the drive component according to the present invention, the drive component further comprises a first circuit board partially disposed inside the base receiving recess and electrically connected with the piezoelectric driving part.

In the drive component according to the present invention, the drive component further comprises a pre-pressure force component disposed in the base receiving recess to enable the friction driving part to be contacted with the friction driving part of the piezoelectric actuator and the first carrier frictionally.

In the drive component according to the present invention, the pre-pressure force component comprises a first spring fixing portion, a second spring fixing portion corresponded to the first spring fixing portion, and a spring body portion extended between the first spring fixing portion and the second spring fixing portion, wherein the first spring fixing portion and the second spring fixing portion are fixed at two opposite sides of the base through groove, and the spring body portion is abutted against the piezoelectric actuator or the at least a part of the first circuit board provided inside the base receiving recess to provide a pre-pressure force for contacting the friction driving part of the piezoelectric actuator with the first carrier frictionally.

In the drive component according to the present invention, the drive component further comprises a first magnetic attraction component enabling the first carrier to be attracted to the driver housing, and the first magnetic attraction component is disposed at a second side of the first carrier, which is opposite to the first side.

In the drive component according to the present invention, the first magnetic attraction component comprises a first magnet provided on the bottom surface of the first carrier, and a first magnetic attraction element provided on the inner bottom surface of the base and corresponded to the first magnet.

In the drive component according to the present invention, the first guiding device comprises a first supporting component disposed between the first carrier and the driver housing, and the first supporting component is located at the second side of the first carrier, which is opposite to the first side.

In the drive component according to the present invention, the drive component further comprises a second carrier movably installed at the first carrier, and the drive component further comprises a second driving element for driving the second carrier to move with respect to the first carrier.

The present invention further provides a drive component, which comprises:
a driver housing;
a first carrier movably installed in the driver housing and adapted for receiving a first lens part therein;
a second carrier movably installed in the first carrier and adapted for receiving a second lens part therein, wherein the first lens part and the second lens part are coaxially arranged along the optical axis defined by the first lens part and the second lens part;
a first driving element for driving the first carrier to move the first carrier and the second carrier along the direction defined by the optical axis simultaneously;
a first driving element for driving the second carrier to move with respect to the first carrier along the direction defined by the optical axis;
a first guiding device comprising a first guiding rod for guiding the first carrier to move with respect to the driver housing along the direction defined by the optical axis; and
a second guiding device comprising a second guiding rod for guiding the second carrier to move along the direction defined by the optical axis on the first carrier;
wherein the first guiding rod and the second guiding rod are located at two opposite sides of the drive component.

In the drive component according to the present invention, the first guiding rod is extended along the direction defined by the optical axis, and the second guiding rod is extended along the direction defined by the optical axis, and the first guiding rod and the second guiding rod are parallel to each other.

In the drive component according to the present invention, the first guiding rod and the second guiding rod are provided in the same height plane defined by the driver housing.

In the drive component according to the present invention, the first guiding rod runs through the upper portion of the first carrier along the direction defined by the optical axis, and the second guiding rod runs through the upper portion of the second carrier along the direction defined by the optical axis.

In the drive component according to the present invention, the first driving element is provided in the lower portion of the first carrier, which is opposite to the upper portion.

In the drive component according to the present invention, the first driving element and the second driving element are arranged on opposite sides of the drive component.

In the drive component according to the present invention, the first driving element is a piezoelectric actuator, and the second driving element is a voice coil motor.

In the drive component according to the present invention, the first guiding device further comprises a first supporting component disposed between the first carrier and the driver housing, wherein the first supporting component and the first guiding rod are located at two opposite sides of the first carrier.

In the drive component according to the present invention, the second guiding device further comprises a second supporting component arranged between the first carrier and the second carrier, and the second supporting component and the second guiding rod are located at two opposite sides of the second carrier.

In the drive component according to the present invention, the drive component further comprises a first magnetic attraction component for enabling the first carrier to be attracted to the driver housing, wherein the first magnetic attraction component comprises a first magnet arranged on the first carrier and a first magnetic attraction element arranged on the inner bottom surface of the driver housing and corresponded to the first magnet, so as to enable the first carrier to be attracted to the driver housing by the magnetic attraction force between the first magnet and the first magnetic attraction element.

In the drive component according to the present invention, the first magnetic attraction component and the first supporting component are located at the same side of the drive component.

In the drive component according to the present invention, the drive component further comprises a second magnetic attraction component for enabling the second carrier to be attracted to the first carrier, the second magnetic attraction component comprising a second magnet disposed on the second carrier and a second magnetic attraction element disposed on the first carrier and corresponded to the second magnet, so as to enable the second carrier to be attracted to the first carrier by the magnetic attraction force between the second magnet and the second magnetic attraction element.

In the drive component according to the present invention, the second magnetic attraction component and the second supporting component are located at the same side of the drive component.

In the drive component according to the present invention, the first magnet of the first magnetic attraction component is embedded in the first carrier and the first magnet is embedded in a position of the first carrier, which is far away from the second carrier.

In the drive component according to the present invention, the second carrier has a magnetic attraction protrusion extended outwardly, and the first carrier has a magnetic absorbing through hole running therethrough, wherein the magnetic attraction protrusion is extended into the magnetic absorbing through hole, wherein the second magnetic attraction element of the second magnetic attraction component is disposed in the magnetic absorbing through hole, and the second magnet of the second magnetic attraction component is provided at the magnetic protrusion and corresponded to the second magnetic attraction element.

The present invention further provides a drive component, which comprises:
a driver housing;
a first carrier movably installed in the driver housing, wherein the first carrier is adapted to be used for installing a first lens part therein, and the first lens part has an optical axis;
a first driving element for driving the first carrier to move within the driver housing along the direction defined by the optical axis;
a first guiding device comprising a first guiding rod for guiding the first carrier to move with respect to the driver housing along the direction defined by the optical axis; and
a first magnetic attraction component for making the first carrier be attracted to the driver housing;
wherein the first guiding rod and the first magnetic attraction component are located at two opposite sides of the drive component.

In the drive component according to the present invention, the first driving element and the first guiding rod are located at the first side of the drive component.

In the drive component according to the present invention, the first driving element is provided at a lower portion of the first carrier, and the first guiding rod is provided at an upper portion of the first carrier.

In the drive component according to the present invention, the first guiding rod runs through the upper portion of the first carrier along the direction defined by the optical axis.

In the drive component according to the present invention, the first carrier has a first guiding hole formed through the upper portion thereof, and the first guiding rod is passed through the first guiding hole and is fixed at two opposite sides of the driver housing.

In the drive component according to the present invention, the first carrier has at least three protruding portions extended inwardly from a hole wall of the first guiding hole, and the at least three protruding portions are abutted against the first guiding rod.

In the drive component according to the present invention, the first magnetic attraction component comprises a first magnet provided at the first carrier and a first magnetic attraction element provided on the inner bottom surface of the driver housing and corresponded to the first magnet, so as to enable the first carrier to be attracted to the driver housing by the magnetic attraction force between the first magnet and the first magnetic attraction element.

In the drive component according to the present invention, the first guiding device further comprises a first supporting component disposed between the driver housing and the first carrier, wherein the first supporting component and the first magnetic attraction element are located at the same side of the drive component, and the first supporting component and the first guiding rod are located at two opposite sides of the drive component.

In the drive component according to the present invention, the first supporting component is located at one side of the first magnetic attraction component, which is close to the optical axis.

In the drive component according to the present invention, the drive component further comprises a second carrier movably installed at the first carrier and a second driving element for driving the second carrier to move with respect to the first carrier.

In the drive component according to the present invention, the drive component further comprises:
a second guiding device comprising a second guiding rod for guiding the second carrier to move with respect to the first carrier along the direction defined by the optical axis; and
a second magnetic attraction component for making the second carrier be attracted to the first carrier;
wherein the second guiding rod and the second magnetic attraction component are located at two opposite sides of the drive component.

In the drive component according to the present invention, the second guiding rod runs through the upper portion of the second carrier along the direction defined by the optical axis, and two ends of the second guiding rod are fixed at the first carrier.

In the drive component according to the present invention, the second guiding rod and the second driving element are located at the same side of the second carrier, and the second driving element and the second magnetic attraction component are located at two opposite sides of the second carrier.

In the drive component according to the present invention, the second magnetic attraction component comprising a second magnet disposed on the second carrier and a second magnetic attraction element disposed on the first carrier and corresponded to the second magnet, so as to enable the second carrier to be attracted to the first carrier by the magnetic attraction force between the second magnet and the second magnetic attraction element.

In the drive component according to the present invention, the second guiding device further comprises a second supporting component provided between the first carrier and the second carrier, the second supporting component and the second guiding rod are located at two opposite sides of the second carrier, and the second supporting component and the second magnetic attraction component are located at the same side of the second carrier.

In the drive component according to the present invention, the second supporting component is located at one side of the second magnetic attraction component, which is close to the optical axis.

According to another aspect of the present invention, a zoom camera module is provided, comprising:
the drive component as described above;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

In the zoom camera module according to the present invention, the zoom camera module further comprises: a light inflecting element for inflecting an imaging light, wherein the third lens part, the second lens part and the first lens part are held on a light inflecting path of the light inflecting element.

Still further objects and advantages of the present invention will become apparent from a consideration of the ensuing description and drawings.

These and other objectives, features, and advantages of the present invention will become apparent from the following detailed description, the accompanying drawings, and the appended claims.

### Brief Description of the Drawings

The above and other objects, features and advantages of the present invention will become more apparent from the detailed description of the embodiments of the present invention in conjunction with the accompanying drawings. The accompanying drawings are used to provide a further understanding of the embodiments of the present invention, constitute a part of the specification, and are used to explain the present invention together with the embodiments of the present invention, and do not constitute a limitation to the present invention. In the drawings, the same reference numbers generally refer to the same components or steps.
FIG. 1 is a perspective schematic diagram of a zoom camera module according to an embodiment of the present invention.
FIG. 2 is a perspective exploded schematic diagram of the zoom camera module according to an embodiment of the present invention.
FIG. 3 is another perspective exploded schematic diagram of the zoom camera module according to an embodiment of the present invention.
FIG. 4 is a perspective schematic diagram of a driving carrier of the zoom camera module according to an embodiment of the present invention.
FIG. 5 is a perspective exploded schematic diagram of a driving carrier according to an embodiment of the present invention.
FIG. 6 is a plan schematic diagram of the zoom camera module according to an embodiment of the present invention.
FIGS. 7A to 7D are schematic views of the first driving element driving the first carrier in the zoom camera module according to an embodiment of the present invention.
FIG. 8 is another perspective exploded schematic diagram of the zoom camera module according to an embodiment of the present invention.
FIG. 9 is a top schematic diagram of the zoom camera module according to an embodiment of the present invention.
FIG. 10 is another perspective schematic diagram of the zoom camera module according to an embodiment of the present invention.
FIG. 11 is another perspective schematic diagram of the zoom camera module according to the above embodiment of the present invention.
FIG. 12 is another plan schematic diagram of the zoom camera module according to an embodiment of the present invention.
FIG. 13 is another perspective exploded schematic diagram of the zoom camera module according to an embodiment of the present invention.
FIG. 14 is another plan schematic diagram of the zoom camera module according to an embodiment of the present invention.
FIG. 15 is another plan schematic diagram of the zoom camera module according to an embodiment of the present invention.
FIG. 16 is another perspective exploded schematic diagram of the zoom camera module according to an embodiment of the present invention.
FIG. 17 is another perspective exploded schematic diagram of the zoom camera module according to an embodiment of the present invention.
FIG. 18 is another plan schematic diagram of the zoom camera module according to an embodiment of the present invention.
FIG. 19 is another plan schematic diagram of the zoom camera module according to an embodiment of the present invention.
FIG. 20 is another plan schematic diagram of the zoom camera module according to an embodiment of the present invention.
FIG. 21 is another perspective schematic diagram of the zoom camera module according to an embodiment of the present invention.
FIG. 22 is another perspective exploded schematic diagram of the zoom camera module according to an embodiment of the present invention.
FIG. 23 is a perspective schematic diagram of the zoom camera module according to an embodiment of the present invention.
FIG. 24 is a schematic diagram of an optical system of the zoom camera module according to an embodiment of the present invention.
FIG. 25 is a schematic diagram of the photosensitive component of the zoom camera module according to an embodiment of the present invention.
FIG. 26 is a perspective exploded schematic diagram of a drive component of the zoom camera module according to an embodiment of the present invention.
FIG. 27A is another perspective exploded schematic diagram of the drive component of the zoom camera module according to an embodiment of the present invention.
FIG. 27B a bottom schematic diagram of the drive component of the zoom camera module according to an embodiment of the present invention.
FIG. 28A is a perspective sectional schematic diagram of the drive component of the zoom camera module according to an embodiment of the present invention.
FIG. 28B is a partial enlarged schematic diagram of the drive component of the zoom camera module according to an embodiment of the present invention.
FIG. 29A is another perspective exploded schematic diagram of the drive component of the zoom camera module according to an embodiment of the present invention.
FIG. 29B is another perspective schematic diagram of the drive component of the zoom camera module according to an embodiment of the present invention.
FIG. 29C is a perspective sectional schematic diagram of the drive component of the zoom camera module according to an embodiment of the present invention.
FIG. 30 is another perspective exploded schematic diagram of the drive component of the zoom camera module according to an embodiment of the present invention.
FIG. 31A is another perspective schematic diagram of the drive component of the zoom camera module according to an embodiment of the present invention.
FIG. 31B is another perspective exploded schematic diagram of the drive component of the zoom camera module according to an embodiment of the present invention.
FIG. 31C is a perspective sectional schematic diagram of the drive component of the zoom camera module according to an embodiment of the present invention.
FIG. 32A is another perspective schematic diagram of a conductive component of the drive component of the zoom camera module according to an embodiment of the present invention.
FIG. 32B is another perspective schematic diagram of the drive component of the zoom camera module according to an embodiment of the present invention.

### Detailed Description of the Embodiments

Hereinafter, example embodiments according to the present application will be described in detail with reference to the accompanying drawings. Obviously, the described embodiments are only a portion of the embodiments of the present application and not all of the embodiments of the present application, and it should be understood that the present application is not limited by the exemplary embodiments described herein.

### Exemplary zoom camera module

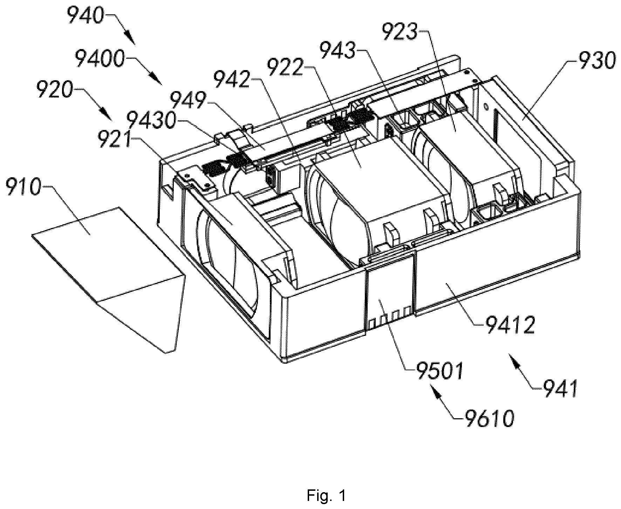

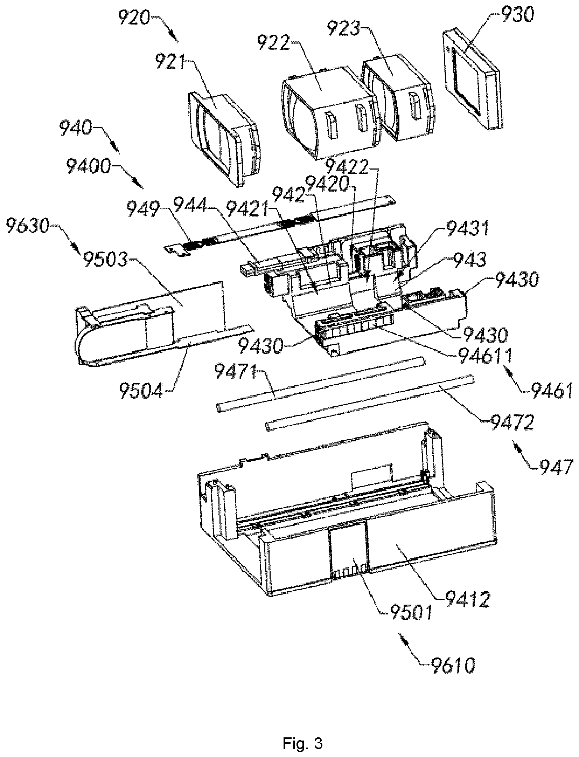

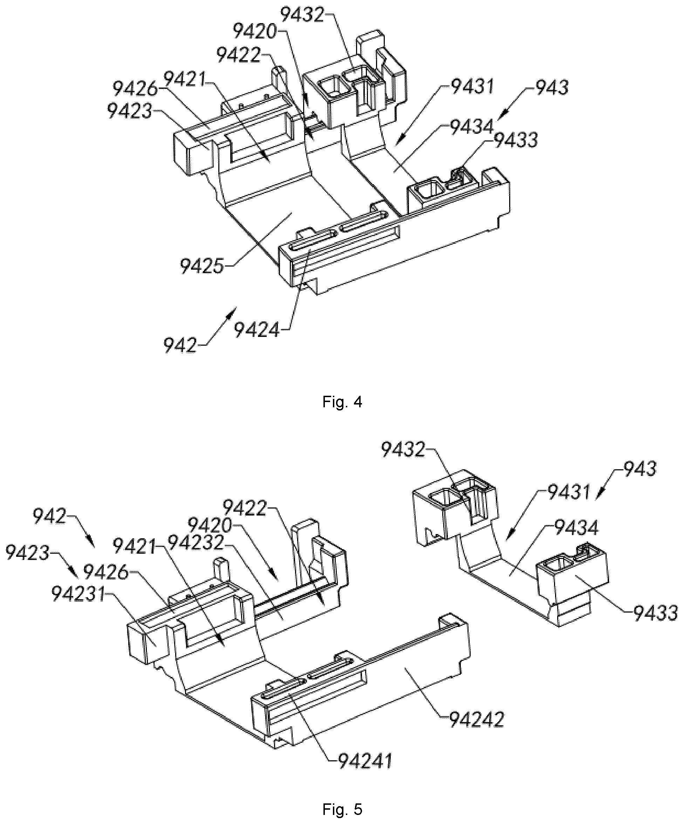

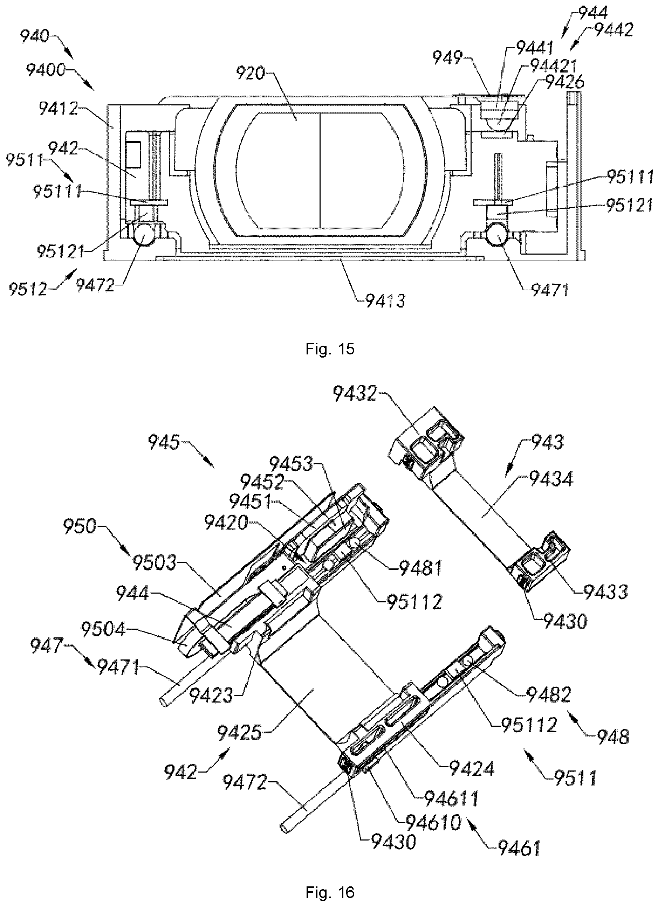

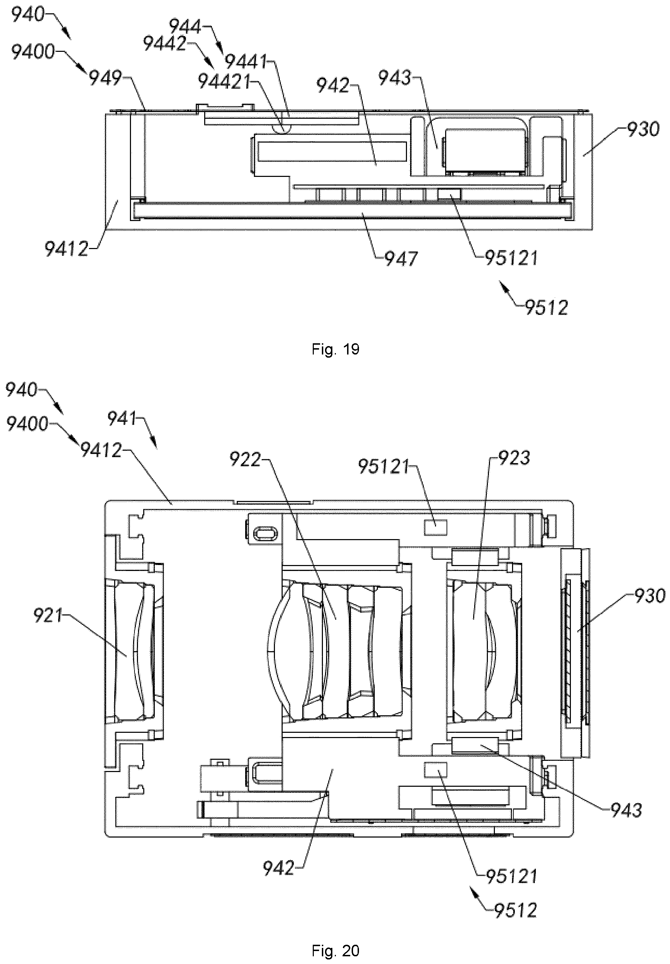

As shown in FIGS. 1 to 22, a zoom camera module according to an exemplary embodiment of the present invention is illustrated, wherein the zoom camera module is implemented as a zoom periscope camera module comprising: a light inflecting element 910, a zoom lens 920, a photosensitive component 930, and a drive component 940. It should be understood that in other embodiments of the present invention, the zoom camera module can also be implemented as other types of camera modules, such as conventional upright zoom camera modules, which is not a limitation of the present invention.

As shown in FIG. 1, in an embodiment of the present invention, the light inflecting element 910 is used to receive imaging light from the subject being photographed and inflect the imaging light to the zoom lens 920. Specifically, in an embodiment of the present invention, the light inflecting element 910 is configured to inflect the imaging light from the subject being photographed by 90°, so that the overall height dimension of the zoom camera module can be reduced. Here, considering manufacturing tolerances, in actual operation, there may be an error of up to 1 ° in the angle at which the light inflecting element 910 refracts the imaging light, which should be those skilled in the art.

In a specific example of the present invention, the light inflecting element 910 can be implemented as a reflecting mirror (e.g., a planar reflecting mirror), or a light refracting prism (e.g., a triangular prism). For example, when the light inflecting element 910 is implemented as a light refracting prism, the incident light surface of the light refracting prism is perpendicular to an emergent light surface thereof, and a light reflecting surface of the light refracting prism is inclined at a 45° angle with respect to the incident light surface and the emergent light surface, in this way, when the imaging light can undergo at a 90° angle at the incident light surface and exit from the emergent light surface in a direction perpendicular to the emergent light surface.

Of course, in other examples of the present invention, the light inflecting element 910 can also be implemented as other types of optical elements, which is not a limitation of the present invention. Additionally, in an embodiment of the present invention, the zoom camera module may also comprise a greater number of light inflecting elements 910, one reason for this is that the introduction of the light inflecting element 910 serves to deflect the imaging light, allowing the optical system of the zoom camera module with a longer total track length (TTL) to be folded in structural dimensions. Accordingly, when the total track length (TTL) of the zoom camera module is too long, a greater number of light inflecting elements 910 can be employed to meet the size requirement of the zoom camera module, for example, the light inflecting elements 910 can be arranged at an image side of the zoom camera module or between two optical lenses.

It is worth mentioning that in some examples of the present invention, a light refractive driving element (not shown) can also be provided for the light inflecting element 910, which is used to drive the light inflecting element 910 to perform pitching and/or yawing movements, thereby achieving optical stabilization of the zoom periscope camera module.

As shown in FIG. 1, in the embodiment of the present invention, the zoom lens 920 is held in the light inflecting path of the light inflecting element 910 to receive the imaging light from the light inflecting element 910 and converge the imaging light. Accordingly, the zoom lens 920 comprises a third lens part 921, a first lens part 923, and a second lens part 922 (i.e., the third lens part 921, the first lens part 923, and the second lens part 922 are sequentially arranged from the incident light side to the exiting light side of the zoom camera module) are coaxially arranged along the optical axis defined by the zoom lens 920), wherein the first lens part 923 and the second lens part 922 can be adjusted with respect to the third lens part 921 under the action of the drive component 940, thereby adjusting the optical performance of the zoom camera module, including but not limited to optical focusing and optical zoom functions. Specifically, the first lens part 923 and the second lens part 922 can be adjusted by the drive component 940 to adjust the focal length of the zoom lens 920 of the zoom camera module, so as to clearly capture objects at different distances.

The third lens part 921 comprises a third lens barrel and at least one optical lens disposed within the third lens barrel. In a specific example of the present invention, the third lens part 921 is implemented as a fixed lens part, wherein the fixed lens part is adapted at be fixed to a non-moving part of the drive component 940, so as to maintain the fixed lens part at a constant position in the zoom lens 920.

It is worth mentioning that, in other examples of the present invention, the third lens part 921 may also not be provided with the third lens barrel, and it only comprises the at least one optical lens, for example, it only comprises multiple optical lenses that are mutually fitted together. In other examples of the present invention, the third lens part 921 can be implemented as a "bare lens".

The first lens part 923 comprises a first lens barrel and at least one optical lens disposed within the first lens barrel. In a specific example of the present invention, the first lens part 923 is implemented as a zooming lens part, wherein the zooming lens part is adapted for being driven by the drive component 940 to move along the optical axis direction defined by the zoom lens 920, thereby achieving the optical zoom function of the zoom camera module, so that the zoom camera module can achieve clear shooting of objects at different distances.

In this embodiment of the present invention, the second lens part 922 comprises a second lens barrel and at least one optical lens disposed within the second lens barrel. In a specific example of the present invention, the second lens part 922 is implemented as a focusing lens part, wherein the focusing lens part is adapted to be driven by the drive component 940 to move along the optical axis direction defined by the zoom lens 920, thereby achieving the focusing function of the zoom camera module. More specifically, the optical focusing achieved by driving the focusing lens part can compensate the focus shift caused by the movement of the zooming lens part, thereby compensating the imaging performance of the zoom camera module and ensuring that its imaging quality meets the predetermined requirements.

It is worth mentioning that, in other examples of the present invention, the second lens part 922 may also not be provided with the second lens barrel, and it only comprises the at least one optical lens, for example, it only comprises multiple optical lenses that are mutually fitted together. In other examples of the present invention, the second lens part 922 can be implemented as a "bare lens".

It is worth mentioning that, in other examples of the present invention, the first lens part 923 may also not be provided with the first lens barrel, and it only comprises the at least one optical lens, for example, it only comprises multiple optical lenses that are mutually fitted together. In other examples of the present invention, the first lens part 923 can also implemented as a "bare lens".

More specifically, as shown in FIG. 1, in the embodiment of the present invention, from the incident light side to the exiting light side of the zoom periscope camera module, the third lens part 921, the first lens part 923, and the second lens part 922 are sequentially arranged, wherein the incident light side is adjacent to the light inflecting element 910, and the exiting light side is adjacent to the photosensitive component 930. In a specific example of the present invention, the second lens part 922, the first lens part 923, and the third lens part 921 are respectively implemented as a focusing lens part, a zooming lens part, and a fixed lens part, that is, in the zoom lens 920, the zooming lens part is located between the fixed lens part and the focusing lens part, that is, when the imaging light from the light inflecting element 910 passes through the zoom lens 920, it will sequentially pass through the fixed lens part, then through the zooming lens part, and then through the focusing lens part.

In other examples of the present invention, the relative positional relationship between the fixed lens part, the zooming lens part, and the focusing lens part can also be adjusted. For example, in a specific embodiment, the focusing lens part is provided between the fixed lens part and the zooming lens part. Accordingly, the third lens part 921, the second lens part 922, and the first lens part 923 can still be implemented as the fixed lens part, the focusing lens part, and the zooming lens part, respectively. In another specific embodiment of the present invention, the fixed lens part is provided between the zooming lens part and the focusing lens part. It should be understood that, in the embodiment of the present invention, the relative positional relationship between the fixed lens part, the zooming lens part, and the focusing lens part can be adjusted according to the optical design requirements and structural design requirements of the zoom camera module.

Considering the structural design of the zoom camera module, preferably, the focusing lens part and the zooming lens part are adjacently arranged. That is, according to the positions of the various parts of the zoom lens 920 described in the present invention, preferably configured as follows: the zooming lens part is located between the fixed lens part and the focusing lens part, or the focusing lens part is located between the fixed lens part and the zooming lens part. It should be understood that the zooming lens part and the focusing lens part are the parts that need to be moved in the zoom lens 920, therefore, arranging the focusing lens part and the zooming lens part adjacent to each other can facilitate the arrangement of the drive component 940, which will be further described in detail in the specific description of the drive component 940.

It is worth mentioning that, in the example shown in FIG. 1, although the zoom lens 920 is exemplified as comprising a first lens part 923, a second lens part 922, and a third lens part 921, those skilled in the art should understand that in other examples of the present invention, the specific number selections of the first lens part 923, the second lens part 922, and the third lens part 921 are not limited to the present invention, and can be adjusted according to the optical design requirements of the zoom camera module.

As shown in FIG. 1, in the embodiment of the present invention, the photosensitive component 930 is corresponded to the zoom lens 920, which is used to receive imaging light from the zoom lens 920 and perform imaging, wherein the photosensitive component 930 comprises a circuit board, a photosensitive chip electrically connected to the circuit board, and a filter element held on the photosensitive path of the photosensitive chip. In a specific example, the photosensitive component 930 further comprises a lens holder provided on the circuit board, wherein the filter element is installed at the lens holder to be held on the photosensitive path of the photosensitive chip.

Accordingly, in the present invention embodiment, the photosensitive chip is used to receive the external light captured by the zoom lens 920 and is electrically connected to the mobile electronic device (e.g., smartphone) via the circuit board, wherein the photosensitive chip comprises a photosensitive area and a non-photosensitive area, and the photosensitive chip is electrically connected to the circuit board through bonding pads located in the non-photosensitive area, for example, the photosensitive chip is electrically connected to the circuit board through wire bonding, soldering, FC process (flip chip), or RDL (redistribution layer) technology. In some examples of the present invention, the photosensitive chip is attached to an upper surface of the circuit board through an adhesive (here, defining a surface of the circuit board facing the zoom lens 920 as the upper surface of the circuit board, and an opposite surface of the circuit board as a lower surface of the circuit board).

It is worth mentioning that, in some examples of the present invention, in order to reduce the overall height dimension of the photosensitive component 930, a groove or through hole is opened in the middle area of the circuit board, and the photosensitive chip is installed in the groove or through hole to reduce the overall height dimension of the photosensitive component 930.

In the embodiment of the present invention, the circuit board comprises a circuit board body, a connecting strip extended from the circuit board body, a connector part provided at an end of the connecting strip, and a connector connected to the connector part (the connecting strip, the connector part, and the connector are not shown in the FIGS. ), wherein the connecting strip connects the circuit board body and the connector part to achieve electrical conduction between the circuit board body and the connector part, wherein the circuit board body can be a PCB hard board, PCB soft board, flexible-rigid combination board, ceramic substrate, etc.

In the embodiment of the present invention, the filter element is held on the photosensitive path of the photosensitive chip for filtering the imaging light entering the photosensitive chip. In a specific example, the filter element is installed at the lens holder of the photosensitive component 930 and corresponded to at least the photosensitive region of the photosensitive chip. In the specific example, the lens holder is implemented as a separately molded plastic bracket, which is attached to the upper surface of the circuit board by an adhesive medium and used to support other components.

It is worth mentioning that in other examples of the present invention, the lens holder can be implemented as other types of lens holders, for example, the lens holder can be implemented as a molded lens holder, which is integrally formed on the upper surface of the circuit board at a predetermined position through a molding process, of course, injection molding or other processes can also be used to integrally form the lens holder on the circuit board. Further, the lens holder can be a combination of a plastic bracket and a molded base, wherein the molded base can be integrally formed in the non-photosensitive area of the photosensitive chip, and the plastic bracket is stacked on the molded base. It is worth mentioning that when a molded lens holder is used, the molded lens holder or the molded base can encapsulate electronic components disposed on the circuit board to provide isolation and protection for the electronic components.

Moreover, the specific implementation of the filter element held on the photosensitive path of the photosensitive chip is not limited in the present invention, for example, the filter element can be implemented as a filter film coated on a surface of a certain optical lens of the zoom lens 920 to achieve the filtering effect, and additionally, the photosensitive component 930 may further include a filter element holder (not shown) mounted on the bracket, wherein the filter element is held on the photosensitive path of the photosensitive chip in a manner of being mounted on the filter element holder.

In the zoom process, in order to achieve optical zoom, the current practice is to first move the zooming part to a preset position through a driving element; and then, move the focusing part through another driving element to focus, so as to achieve clear imaging of the optical zoom camera module, and complete the optical zoom process in this way. However, with the increasing requirements of consumers for zoom accuracy, zoom speed, and the size of the optical zoom camera module, these design schemes have gradually become difficult to meet the requirements.

Accordingly, in the present invention embodiment, the zoom camera module adopts a "parent-child" drive scheme to provide a drive support for zoom drive, and the "parent-child" drive scheme can drive the zoom camera module to achieve optical zoom and/or optical focus adjustment at a relatively faster speed.

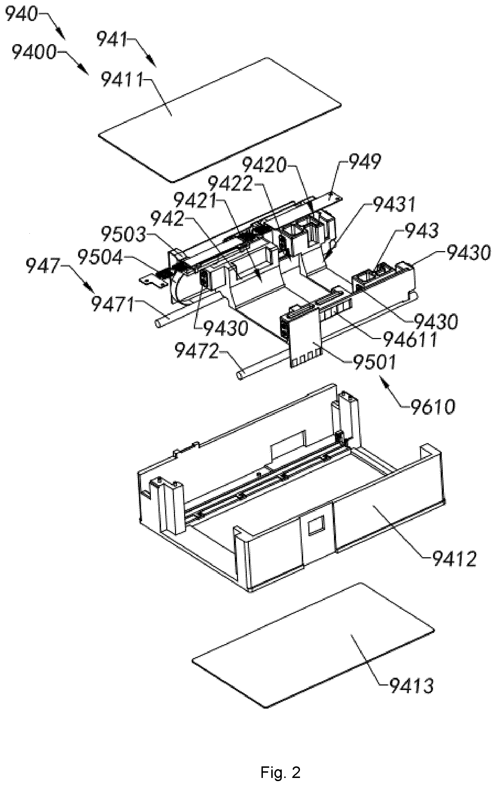

Specifically, as shown in FIGS. 2 to 22, the drive component 940 comprises: a driver housing 941, a first driving part and a second driving part located within the driver housing 941, wherein the first drive part is movably disposed within the driver housing 941, and the second drive part is movably disposed at the first drive part. In the embodiment of the present invention, the third lens part 921 is fixedly installed in the driver housing 941, the first lens part 923 is suitable for being installed at the first driving part, and the second lens part 922 is suitable for being installed in the second driving part, thus, when the first driving part moves with respect to the driver housing 941, the second driving part can move along with the first driving part with respect to the driver housing 941, that is, when the first driving part is driven within the driver housing 941, the first lens part 923 installed in the first driving part and the second lens part 922 installed in the second driving part can move simultaneously.

Further, the second driving part, which is movably installed at the first driving part, can move with respect to the first driving part after being driven, so that the second lens part 922 can independently move with respect to the first lens part 923 to adjust the effective focal length of the zoom lens 920 of the camera module by adjusting the relative distance between the first lens part 923 and the second lens part 922.

In the embodiment of the present invention, the first driving part is configured to simultaneously drive the first lens part 923 and the second lens part 922 to move along the direction defined by the optical axis after being started, the second driving part is configured to independently drive the second lens part 922 to move along the direction defined by the optical axis after being started, for ease of explanation, this optical zoom driving scheme is defined as a "parent-child type", where the main driving part is the first driving part and the assist driving part is the second driving part.

As shown in FIG. 2, in the embodiment of the present invention, the driver housing 941 comprises a top cover 9411 and a base 9412, wherein the top cover 9411 and the base 9412 can be interlocked with each other to form a receiving cavity therebetween, wherein the receiving cavity is used to receive the first driving part, the second driving part, the zoom lens 920 and other components therein, in this way, not only can protect various components of the drive component 940 from impact damage, but it can also prevent dust, dirt, or stray light from entering the interior of the drive component 940.

Specifically, in the embodiment of the present invention, the top cover 9411 is engaged with the base 9412 from above. In the embodiment of the present invention, the base 9412 has a first side and a second side that are opposite to each other, and a third side and a fourth side that are perpendicular to the first and second sides respectively, wherein the third side serves as the incident light side of the drive component 940, while the fourth side serves as the exiting light side of the drive component 940. The base 9412 comprises a first side wall and a second side wall that are respectively formed on the first side and the second side of the base 9412 and extended upward from a bottom of the base 9412 along the height direction defined by the drive component 940, and a third wall and a fourth side wall that are respectively formed on the third side and fourth side of the base 9412 and extended upward from the bottom of the base 9412 along the height direction defined by the drive component 940, here, the height direction refers to the direction perpendicular to the plane in which the optical axis lies.

Specifically, in the embodiment of the present invention, the third side wall and the fourth side wall define openings corresponded to the photosensitive component 930, so that light reflected by an object can reach the photosensitive component 930. Corresponding to the driver housing 941, the drive component 940 also has a first side, a second side, a third side and a fourth side.

Specifically, in the embodiment of the present invention, the third lens part 921 is provided at the third side wall of the base 9412, more specifically, the third lens part 921 is installed at the opening of the third side wall, that is, the third lens part 921 is fixed on the non-moving part of the driver housing 941 of the drive component 940, in other words, in the zoom lens 920, the position of the third lens part 921 remains constant as a fixed lens part.

More specifically, in the embodiment of the present invention, the photosensitive component 930 is provided at the fourth side wall of the base 9412. More specifically, the photosensitive component 930 is arranged at the opening of the fourth side wall to receive imaging light from the zoom lens 920. That is, in the embodiment of the present invention, the imaging light enters from the third side of the drive component 940, exits from the fourth side of the drive component 940, and reaches the photosensitive component 930.

In the embodiment of the present invention, as shown in FIG. 2, a notch is provided at the bottom of the base 9412, and the notch is extended from a bottom surface of the bottom of the base 9412 to a top surface of the bottom of the base 9412, i.e., the notch is a through hole. Further, the driver housing 941 also comprises a sheltering sheet 9413, which is used to block the notch, in this way, the sheltering sheet 9413 not only blocks external stray light from entering the interior of the drive component 940, but also prevents dust, dirt, or scattered light from entering the interior of the drive component 940, and can increase the strength of the bottom of the base 9412. It is worth mentioning that since the bottom of the base 9412 needs to be as thin as possible to reduce the height of the camera module, however, if the bottom of the base 9412 is too thin, it will not only be difficult to form during the manufacturing process, but also reduce its reliability. Therefore, setting a notch at the bottom of the base 9412 facilitates its manufacturing and forming, and setting the sheltering sheet 9413 at the notch of the base 9412 can increase the reliability of the base 9412. Of course, in other examples of the present invention, the bottom of the base 9412 can also be a complete structure without a notch, which is not a limitation of the present invention.

As shown in FIGS. 1 to 22, in the embodiment of the present invention, the drive component 940 further comprises a driving carrier 9400, a driving element 9440, a pre-pressure force device 949, a guiding component and a conductive component 950 received within the driver housing, wherein among them, the driving element 9440 is used to drive the second lens part 922 and/or the first lens part 923 of the zoom lens 920, so as to adjust the distance between the second lens part 922, the first lens part 923 and the photosensitive component 930, thereby achieving the optical focusing and/or optical zooming function of the camera module. In the embodiment of the present invention, the second lens part 922 and the first lens part 923 of the zoom lens 920 are arranged in the driving carrier 9400, and the second lens part 922 and/or the first lens part 923 of the zoom lens 920 are driven to move by the driving element 9440 through the driving carrier 9400, so as to achieve the optical focusing and/or optical zooming function of the camera module. The pre-pressure force device 949 is provided between the driving carrier 9400 and the driver housing 941, and its function is to provide a certain pre-applied force to the driving element 9440, so that the driving element 9440 can maintain frictional contact with the driving carrier 9400 under the action of the pre-applied force. The guiding component is used to guide and control the movement direction of the driving carrier 9400 to achieve the guiding effect. The conductive component 950 is used to conduct the driving element 9440 to the photosensitive component 930, so as to provide the necessary electrical energy for the operation of the driving element 9440 through the circuit board of the photosensitive component 930.

As shown in FIGS. 2 to 5, specifically, in this embodiment of the present invention, the driving carrier 9400 comprises a first carrier 942, a second carrier 943, and an anti-collision structure 9430, wherein the first carrier 942 is movably disposed within the driver housing 941, and the second carrier 943 is movably provided at the first carrier 942, wherein the first lens part 923 is installed at the first carrier 942, and the second lens part 922 is installed at the second carrier 943.

Correspondingly, the first carrier 942 has a first mounting chamber 9421 and a second mounting chamber 9422, wherein the first lens part 923 is installed within the first mounting chamber 9421, and the second carrier 943 with the second lens part 922 is movably installed within the second mounting chamber 9422. The second carrier 943 has a third mounting chamber 9431, and the second lens part 922 is installed within the third mounting chamber 9431, with this structural design, when the first carrier 942 is driven to move with respect to the driver housing 941, the second carrier 943 can move along with the first carrier 942 with respect to the driver housing 941, so that the first carrier 942 and the second carrier 943 can drive the first lens part 923 and the second lens part 922 to move simultaneously.

Further, because the second carrier 943 is movably installed within the second mounting chamber 9422 of the first carrier 942, the second lens part 922 installed at the second carrier 943 can move with respect to the first lens part 923 installed at the first carrier 942, so as to adjust the focal length of the zoom lens 920 of the camera module by adjusting the relative distance between the first lens part 923 and the second lens part 922. Accordingly, in order to ensure that the second lens part 922 has a sufficient moving space with respect to the first lens part 923 to meet the travel requirements of the second lens part 922, the difference in size in the direction defined by the optical axis between the second mounting chamber 9422 and the second carrier 943 is greater than the travel requirements of the second lens part 922. That is, in this embodiment of the present invention, the length of the moving space of the second mounting chamber 9422 in the direction defined by the optical axis is greater than the difference in size between the second carrier 943 and the second lens part 922, so that the second carrier 943 and the second lens part 922 can move for a whole travel within the second mounting chamber 9422.

Specifically, in this embodiment of the present invention, the first carrier 942 comprises a first carrier side arm 9423 and a second carrier side arm 9424, which are opposite to each other, wherein the first carrier side arm 9423 and the second carrier side arm 9424 are respectively provided at a first side and a second side of the drive component 940, which are opposite to each other. Preferably, in this embodiment of the present invention, a first driving element 944 can be provided at the first carrier side arm 9423 or the second carrier side arm 9424, to avoid increasing the height of the drive component 940. The first carrier 942 further comprises a first carrier connecting portion 9425 extended between the first carrier side arm 9423 and the second carrier side arm 9424 at the bottom thereof, wherein the first carrier side arm 9423, the second carrier side arm 9424, and the first carrier connecting portion 9425 define a first mounting chamber 9421 and a second mounting chamber 9422 of the first carrier 942.

Specifically, in this embodiment of the present invention, the second carrier 943 comprises a third carrier side arm 9432 and a fourth carrier side arm 9433, which are opposite to each other, wherein the third carrier side arm 9432 and the fourth carrier side arm 9433 are respectively provided at a first side and a second side of the drive component 940, which are opposite to each other. Preferably, the second driving element 945 can be provided at the third carrier side arm 9432 or the fourth carrier side arm 9433, to avoid increasing the height of the drive component 940. Further, the second carrier 943 further comprises a second carrier connecting portion 9434 extended between the third carrier side arm 9432 and the fourth carrier side arm 9433 at the bottom thereof, wherein the third carrier side arms 9432, the fourth carrier side arms 9433, and the second carrier connecting portion 9434 define the third mounting chamber 9431 of the second carrier 943.

Specifically, in this embodiment of the present invention, the third carrier side arm 9432 has a length less than the first carrier side arm 9423, and the fourth carrier side arm 9433 has a length less than the second carrier side arm 9424, thereby providing a certain amount of movement space for the second carrier 943 within the second mounting chamber 9422. Correspondingly, the first carrier side arm 9423 of the first carrier 942 comprises a first front section 94231 and a first rear section 94232, and the second carrier side arm 9424 of the first carrier 942 comprises a second front section 94241 and a second rear section 94242, wherein the first front section 94231 and the second front section 94241 are close to the incident light side (i.e., the third side) of the first carrier 942, and the first rear section 94232 and the second rear section 94242 are close to the exiting light side (i.e., the fourth side) of the first carrier 942. Correspondingly, in this embodiment of the present invention, the first front section 94231 has a height greater than the first rear section 94232, and the second front section 94241 has a height greater than the second rear section 94242, preferably, the height of the first rear section 94232 is the same as the height of the second rear section 94242.

In a specific example of the present invention, the third carrier side arm 9432 of the second carrier 943 is provided at the first rear section 94232 of the first carrier side arm 9423, and the fourth carrier side arm 9433 of the second carrier 943 is provided at the second rear section 94232 of the second carrier side arm 9424, with this design, a top surface of the second carrier 943 is not higher than a top surface of the first carrier 942 after the second carrier 943 is placed on the first carrier 942, to avoid an increase of the overall height dimension of the drive component 940. At the same time, this design also allows the second carrier 943 to move smoothly within the first carrier 942, avoiding tilt.

Further, in this embodiment of the present invention, both of the incident light side and the exiting light side of the drive component 940 are provided with anti-collision structures 9430. For example, in a specific example, end surfaces of the exiting light side and the incident light side of the first carrier side arm 9423 and the second carrier side arm 9424 of the first carrier 942 are provided with the anti-collision structures 9430 respectively to prevent the first carrier 942 from colliding the driver housing 941 during movement, thereby avoiding any impact on the first lens part 923; at the same time, end faces of the incident light side and the exiting light side of the third carrier side arm 9432 and the fourth carrier side arm 9433 of the second carrier 943 are provided with the anti-collision structures 9430 respectively to prevent the second carrier 943 from colliding the first carrier 942 during movement, thereby avoiding any impact on the second lens part 922.

In this embodiment, preferably, the anti-collision structures 9430 are made of a material having an elastic modulus smaller than the first carrier 942 and the second carrier 943, such as silicone, wherein the anti-collision structures 9430 can be fixed at the predetermined positions of the first carrier 942 and the second carrier 943 by adhesive bonding. Of course, in other specific examples of the present invention, the anti-collision structures 9430 can be integrally formed with the first carrier 942 and the second carrier 943 at the predetermined positions by secondary injection molding. It is also worth mentioning that in this embodiment, the number of anti-collision structures 9430 is more than two, and preferably, the anti-collision structures 9430 are symmetrically arranged on the incident light side and the exiting light side of the first carrier 942 or the second carrier 943 to avoid tilting of the first carrier 942 or the second carrier 943 due to the arrangement of the anti-collision structures 9430.

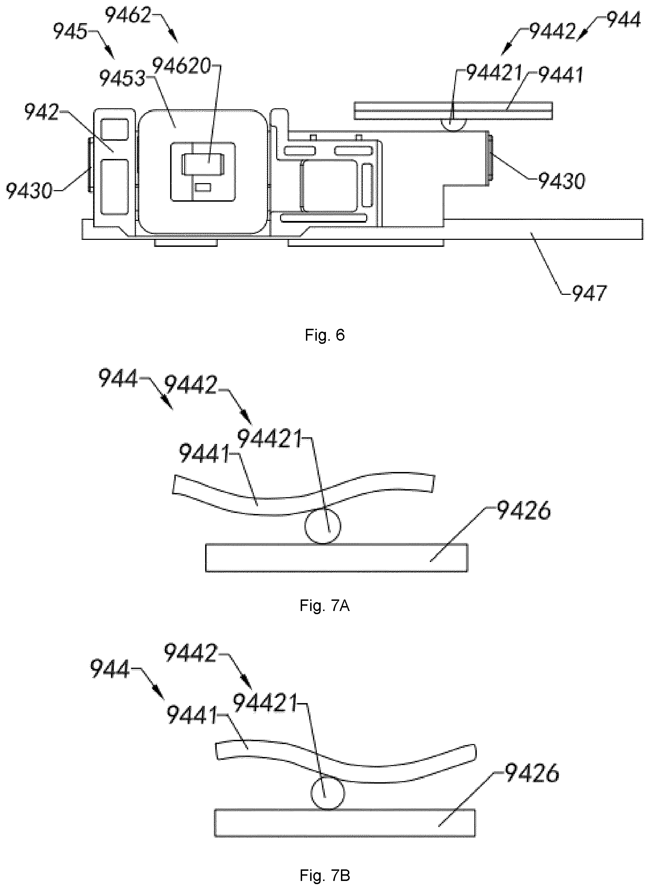

As shown in FIG. 6, in the embodiment of the present invention, the driving element 9440 comprises two driving elements 9440, for ease of explanation, defined as a first driving element 944 and a second driving element 945, wherein the first driving element 944 is configured to drive the first carrier 942 and the second carrier 943 to move along the direction defined by the optical axis after being started, so as to simultaneously drive the first lens part 923 and the second lens part 922 to move along the direction defined by the optical axis; the second driving element 945 is configured to drive the second carrier 943 to move along the direction defined by the optical axis after being started, so as to drive the second lens part 922 to move along the direction defined by the optical axis.

Accordingly, in the embodiment of the present invention, the first driving element 944 and the first carrier 942 form a first driving part, and the second driving element 945 and the second carrier 943 form the second driving part, it should be understood that in the embodiment of the present invention, the first driving part comprises not only the first driving element 944 and the first carrier 942, but also other components, since the driving correlation between the other components and the first driving part is not significant, the other components are not described in detail for the first driving part; similarly, the second driving part may comprise other components in addition to the second driving element 945 and the second carrier 943, since the driving correlation between the other components and the second driving part is not significant, the other components are not described in detail for the second driving part.

In a specific example of the present invention, the first driving element 944 and the second driving element 945 are provided at the same side of the drive component 940, for example, the first side or the second side of the drive component 940, in other words, the first driving element 944 and the second driving element 945 are arranged at the same side of the drive component 940, so that the conductive component 950 used to energize the first driving element 944 and the second driving element 945 can also be correspondingly provided at the same side of the drive component 940, to facilitate the deployment of the conductive component 950 and simplifying the electric connection of the drive component 940. Of course, in another specific example of the present invention, the first driving element 944 and the second driving element 945 can also be provided at different sides of the drive component 940, for example, the first driving element 944 and the second driving element 945 are respectively provided at the first side and second side of the drive component 940, which are opposite to each other, this arrangement can avoid an increase in the size of the drive component 940 and the camera module on one side, and can prevent interference between the first driving element 944 and the second driving element 945 during the driving process.

As shown in FIG. 6, in the embodiment of the present invention, the first driving element 944 is implemented as a piezoelectric actuator, wherein the piezoelectric actuator has a nanometer-level stepping accuracy, which can meet the more extreme optical system requirements, and the piezoelectric actuator is suitable for providing a larger driving force, thereby satisfying the driving force requirements of both the first carrier 942 and the second carrier 943. In a specific example, the piezoelectric actuator is implemented as a traveling wave-type piezoelectric actuator, which has the advantage of very low external magnetic interference.

Specifically, the piezoelectric actuator comprises a piezoelectric driving part 9441 and a friction driving part 9442 fixed to the piezoelectric driving part 9441. The piezoelectric driving part 9441 is composed of a very small piezoelectric ceramic, and by applying two 90° phase-shifted sinusoidal signals to the piezoelectric driving part 9441 of the first driving element 944 to make the piezoelectric driving part 9441 deform and resonate by using high-frequency AC voltage. A friction driving part 9442 is drivably connected with the piezoelectric driving part 9441, for example, the friction driving part 9442 is fixed to the piezoelectric driving part 9441, so that when the first driving element 944 is powered on, the piezoelectric driving part 9441 can drive the friction driving part 9442, so as to drive the first carrier 942 to move.

In this embodiment of the present invention, the friction driving part 9442 comprises at least one friction head 94421, wherein the first driving element 944 is in frictional contact with the first carrier 942 through the at least one friction head 94421 of the friction driving part 9442. The friction driving part 9442 is drivably connected with the piezoelectric driving part 9441, so that when the piezoelectric driving part 9441 is energized, the friction driving part 9442 can be drive to move in an unidirectional oscillatory motion along a predetermined direction (e.g., the optical axis direction) under a driving force of the piezoelectric driving part 9441, wherein the friction driving part 9442 provides the driving force for driving the first carrier 942 to move under the action of the piezoelectric driving part 9441.

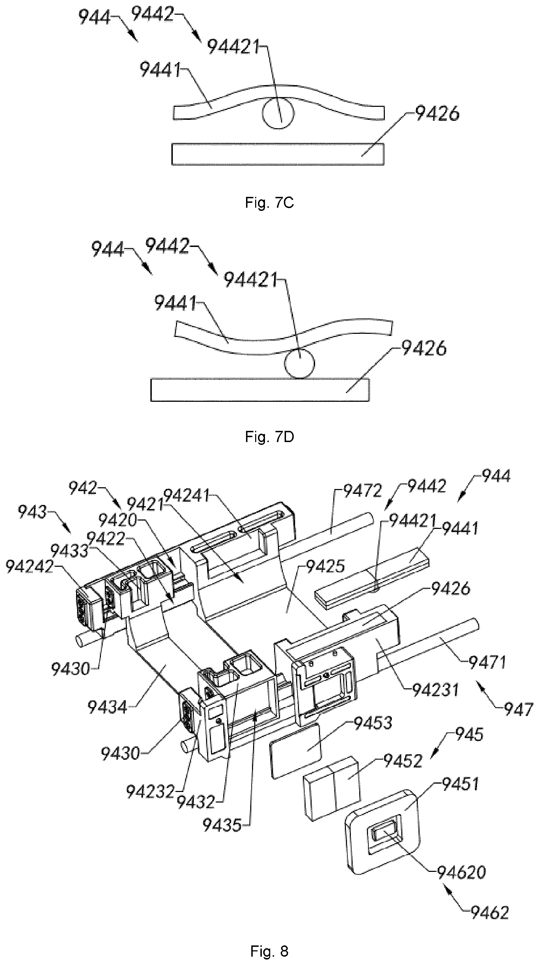

In this embodiment of the present invention, as shown in FIGS. 7A to 7D, the piezoelectric driving part 9441 is provided with a traveling wave signal, the piezoelectric driving part 9441 deforms under the inverse piezoelectric effect to drive the friction driving part 9442 to move in a traveling wave manner, and the deformation of the piezoelectric driving part 9441 is transmitted to the friction driving part 9442, and the driving force for driving the first carrier 942 is provided through the traveling wave motion of the friction driving part 9442. In another embodiment of the present invention, the piezoelectric driving part 9441 is supplied with a standing wave signal, and the deformation of the piezoelectric driving part 9441 drives the friction driving part 9442 to move in a standing wave manner along a predetermined direction, and the present invention is not limited to this embodiment.

Specifically, in this embodiment of the present invention, the first driving element 944 is arranged on the first carrier 942 (i.e., between the top surface of the first carrier 942 and the inner top surface of the driver housing 941), and the friction driving part 9442 of the first driving element 944 is in frictional contact with the top surface of the first carrier 942.

In order to increase the friction between the friction driving part 9442 and the first carrier 942, in a specific example of the present invention, as shown in FIG. 8, the first carrier 942 further comprises a friction member 9426, and the friction member 9426 is provided on a top of the first carrier side arm 9423 or the second carrier side arm 9424, so that the friction member 9426 is arranged with respect to the first driving element 944. In this embodiment of the present invention, the friction member 9426 can be directly provided on the top surface of the first carrier side arm 9423 or the second carrier side arm 9424. In another embodiment of the present invention, the friction member 9426 can be provided in a groove inwardly recessed from the top surface of the first carrier side arm 9423 or the second carrier side arm 9424, so as to reduce the installation height of the first driving element 944; in another embodiment of the present invention, the friction member 9426 can also be integrated with the first carrier side arm 9423 or the second carrier side arm 9424, that is, integrally formed with a side arm of the first carrier 942 through injection molding or molding process.

Further, as shown in FIG. 8, the friction member 9426 is a rectangular structure with a friction surface along the optical axis, that is, the friction driving part 9442 of the first driving element 944 is in frictional contact with the friction surface of the friction member 9426, thereby driving the friction member 9426 to move the first carrier 942. Wherein, the friction surface of the friction member 9426 has a length along the optical axis, which is greater than or equal to the moving stroke of the first carrier 942.

More specifically, in the embodiment of the present invention, one end of the friction driving part 9442 of the first driving element 944 is connected with the piezoelectric driving part 9441, and another end is in frictional contact with the friction member 9426 of the first carrier 942. After providing power excitation to the piezoelectric driving part 9441 of the first driving element 944, the piezoelectric driving part 9441 generates a surface deformation in the form of a traveling wave, thereby driving the friction driving part 9442 to generate unidirectional oscillatory motion along the optical axis , due to the frictional contact between the friction driving part 9442 and the friction member 9426, the friction member 9426 and the first carrier 942 are driven to move along the optical axis. After one motion cycle is completed, the piezoelectric driving part 9441 is lifted, and the friction driving part 9442 is separated from the friction member 9426. From the separation of the friction driving part 9442 and the friction member 9426 to the re-contact of the friction driving part 9442 and the friction member 9426, the friction driving part 9442, once repositioned and generate undergoes oscillatory motion along the optical axis by the piezoelectric driving part 9441, thereby driving the friction member 9426 and the first carrier 942 to continue moving along the optical axis, as shown in FIGS. 7A to 7D.

It is worth mentioning that, in this embodiment of the present invention, in an initial state, the friction driving part 9442 can be located in a middle position of the friction member 9426, wherein the friction member 9426 can be driven to move towards the incident light side or the exiting light side along the optical axis by the friction driving part 9442, that is, the friction member 9426 can move in two directions. In another embodiment of the present invention, in an initial state, the friction driving part 9442 can be located at an end of the friction member 9426, that is, at one end of the friction member 9426 which is close to the incident light side or at one end of the friction member 9426 which is close to the exiting light side, wherein the friction member 9426 can be driven to move towards another side along the optical axis by the friction driving part 9442.

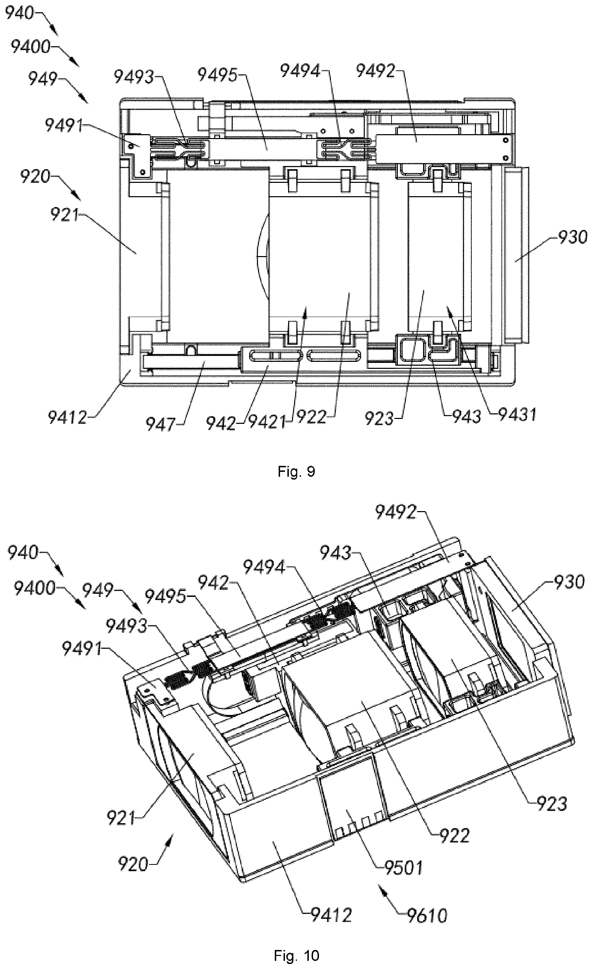

As shown in FIGS. 9 to 11, in this embodiment of the present invention, in order to ensure that the friction head 94421 of the friction driving part 9442 of the first driving element 944 can stably be in contact with an upper surface of the first carrier 942, the drive component 940 also provides a pre-pressure force device 949, which can provide a pressure force between the first driving element 944 and the first carrier 942, so that the friction driving part 9442 of the first driving element 944 can be frictionally engaged with the friction member 9426 of the first carrier 942, and drive the first carrier 942 to move along the optical axis through the friction driving part 9442.

As shown in FIGS. 9 to 11, the pre-pressure force device 949 has an elongated structure (i.e., the pre-pressure force device 949 has a relatively long length), wherein a first end of the pre-pressure force device 949 is fixed with one side of the driver housing 941, and a second end of the pre-pressure force device 949, which is opposite to the first end, is fixed with another side of the driver housing 941, which are opposite to each other, to provide a pre-pressure force to make the first driving element 944 be abutted against the first carrier 942 through the pre-pressure force device 949. That is, in this embodiment of the present invention, the pre-pressure force device 949 stretches across two opposite sides of the driver housing 941.

In this embodiment of the present invention, the pre-pressure force device 949 is extended between two opposite sides of the driver housing 941 along the direction defined by the optical axis (i.e., along a length direction defined by the driver housing 941), or the pre-pressure force device 949 is extended between two opposite sides of the driver housing 941 along a width direction defined by the driver housing 941, which is not a limitation of the present invention. Here, when the pre-pressure force device 949 is extended between the two opposite sides of the driver housing 941 along the direction defined by the optical axis, the first end of the pre-pressure force device 949 is fixed with the third side of the driver housing 941, and the second end of the pre-pressure force device 949 is fixed with the fourth side of the driver housing 941; when the pre-pressure force device 949 is extended between the two opposite sides of the driver housing 941 along the width direction defined by the driver housing 941, the first end of the pre-pressure force device 949 is fixed with the first side of the driver housing 941, and the second end of the pre-pressure force device 949 is fixed with the second side of the driver housing 941.

More specifically, in this embodiment of the present invention, the pre-pressure force device 949 is implemented as an elastic member, comprising a first fixed portion 9491 and a second fixed portion 9492 fixed respectively between the two opposite sides of the driver housing 941, a first deforming portion 9493 extended from the first fixed portion 9491 and a second deforming portion 9494 extended from the second fixed portion 9492, and a main body portion 9495 extended between the first deforming portion 9493 and the second deforming portion 9494, wherein the main body portion 9495 is pressed against the first driving element 944 to apply a pre-pressure force to the first driving element 944, so as to make the first driving element 944 abut against the first carrier 942. Accordingly, in this embodiment of the present invention, an end of the first fixed portion 9491 forms the first end, and an end of the second fixed portion 9492 forms the second end.

Specifically, in this embodiment of the present invention, when the pre-pressure force device 949 is provided between the driver housing 941 and the first driving element 944 along the optical axis direction, the two ends of the pre-pressure force device 949 are fixed with the third side and the fourth side of the driver housing 941, which are opposite to each other, and the pre-pressure force device 949 is positioned on the first driving element 944 and abutted against the first driving element 944, so that the first driving element 944 can generate a downward pre-pressure force along the height direction, at this time, the extension direction of the pre-pressure force device 949 is perpendicular to the direction of the pre-pressure force generated by the pre-pressure force device 949.

In a specific example of the present invention, the first fixed portion 9491 and the second fixed portion 9492 of the pre-pressure force device 949 are respectively fixed to the third side arm and the fourth side arm of the driver housing 941, so that the pre-pressure force device 949 is fixed to the third side and the fourth side of the driver housing 941, which are opposite to each other, wherein the main body portion 9495 is suspended and abutted against the piezoelectric driving part 9441 of the first driving element 944 through the first deforming portion 9493 and the second deforming portion 9494 of the pre-pressure force device 949, wherein the main body portion 9495 can generate a downward pre-pressure force along the height direction under the action of the first deforming portion 9493 and the second deforming portion 9494 to maintain the abutment between the main body portion 9495 and the piezoelectric driving part 9441, thereby making the friction driving part 9442 of the first driving element 944 be abutted against the friction member 9426 of the first carrier 942 through the pre-pressure force, so that the first driving element 944 is frictionally coupled with the first carrier 942. Preferably, the extension direction of the first fixed portion 9491, the second fixed portion 9492, and the main body portion 9495 is consistent with the extension direction of the first driving element 944.

In the present invention, the fixing method of the first fixed portion 9491 and the second fixed portion 9492 of the pre-pressure force device 949 can be adhesive fixing or riveting fixing. Moreover, in other examples of the present invention, the fixing position of the pre-pressure force device 949 can also be adjusted, for example, the first fixed portion 9491 and the second fixed portion 9492 of the pre-pressure force device 949 are fixed by being clamped between the top cover 9411 and the base 9412.

It is worth mentioning that the first deforming portion 9493 and the second deforming portion 9494 of the pre-pressure force device 949 have a certain length, and the length of the first deforming portion 9493 and the second deforming portion 9494 will affect the magnitude of the pre-pressure force generated by the pre-pressure force device 949. In one embodiment of the present invention, the more the first deforming portion 9493 and the second deforming portion 9494 are bent, the longer the length of the first deforming portion 9493 and the second deforming portion 9494, and the smaller the pre-pressure force generated by them, in another embodiment of the present invention, the less the first deforming portion 9493 and the second deforming portion 9494 are bent, the shorter the length of the first deforming portion 9493 and the second deforming portion 9494, and the greater the pre-pressure force generated by them. Of course, in other embodiments of the present invention, the pre-pressure force device 949 has certain flatness, thereby improving the stability of the first driving element 944. It will be understood by those skilled in the art that the pre-pressure force device 949 can also be an elastic adhesive, such as rubber, silicone gel, etc.

In this embodiment of the present invention, the pre-pressure force device 949 is a planar structure, that is, the first fixed portion 9491, the second fixed portion 9492, and the main body portion 9495 of the pre-pressure force device 949 are located at the same height plane, in other words, the first fixed portion 9491, the second fixed portion 9492, and the main body portion 9495 are extend along the length or width direction of the driver housing 941, rather than extended along the height direction of the driver housing 941, which ensures that the pre-pressure force device 949 can provide sufficient pre-pressure force while avoiding occupation of height space. In other embodiments of the present invention, the pre-pressure force device 949 can also have a ` ' or , shape, that is, the main body portion 9495 of the pre-pressure force device 949 has a certain height difference with the fixed portions, for example, the first fixed portion 9491 and the second fixed portion 9492 are located at the same height plane, and the main body portion 9495 is lower than the height plane where the first fixed portion 9491 and the second fixed portion 9492 are located.

As shown in FIG. 8, in this embodiment of the present invention, the second driving element 945 is implemented as a voice coil motor, using a VCM as the second driving element 945, this is because the technology of VCM is more mature, has higher feasibility and compatibility, moreover, this design can avoid electromagnetic interference between the first driving element 944 and the second driving element 945. Of course, in other examples of the present invention, the second driving element 945 can also be implemented as other types of drivers, such as a piezoelectric actuator or a shape memory alloy actuator.

Accordingly, when the second driving element 945 is implemented as a voice coil motor, that is, when the second driving element 945 is implemented as an electromagnetic motor, as shown in FIG. 8, the second driving element 945 comprises a driving coil 9451, a driving magnet 9452, and a driving magnetic conductive plate 9453. In a specific example of the present invention, the driving magnet 9452 is provided on an outer surface of the second carrier 943, the driving coil 9451 is provided on an inner surface of the first carrier 942 and corresponded to the driving magnet 9452, in this way, a driving force is generated between the driving coil 9451 and the driving magnet 9452 to drive the second carrier 943 to move along the optical axis direction, when the driving coil 9451 is energized.

It is worth mentioning that, in the present embodiment, the second carrier 943 has a second receiving groove recessed and formed on an outer surface thereof, the driving magnet 9452 is installed inside the second receiving groove 9435 to reduce the lateral space occupied by the drive component 940 of the camera module. For example, in a specific example of the present invention, the second receiving groove 9435 is inwardly recessed from an outer surface of the third carrier side arm 9432 or the fourth carrier side arm 9433 of the second carrier 943, and the driving magnet 9452 is installed inside the second receiving groove 9435. In another specific example of the present invention, the first carrier 942 has a first receiving groove 9420 inwardly recessed from an inner surface thereof, and the second receiving groove 9435 is arranged opposite to the first receiving groove 9420. For example, in a specific example of the present invention, the first receiving groove 9420 is inwardly recessed from the inner surface of the first carrier side arm 9423 or the second carrier side arm 9424 of the first carrier 942, wherein the driving coil 9451 is installed inside the first receiving groove 9420, and the driving coil 9451 is also arranged and corresponded to the driving magnet 9452. That is to say, the driving magnet 9452 is provided on the outer surface of the second carrier 943, and the driving coil 9451 is provided on the inner surface of the first carrier 942. the driving coil 9451 is corresponded to the driving magnet 9452, in this way, a driving force is generated between the driving coil 9451 and the driving magnet 9452 when the driving coil 9451 is energized, so as to independently drive the second carrier 943 to move along the optical axis direction and drive the second lens part 922 to move along the optical axis direction.

It is worth mentioning that, in other embodiments of the present invention, the first receiving groove 9420 and the second receiving groove 9435 can also be through-holes, that is, the second receiving groove 9435 passes through the third carrier side arm 9432 or the inner surface and the outer side arm of the fourth carrier side arm 9433 of the second carrier 943, and the first receiving groove 9420 passes through the first carrier side arm 9423 or the inner surface and the outer surface of the second carrier side arm 9424 of the first carrier 942.

It is worth mentioning that, in other embodiments of the present invention, the position of the driving coil 9451 and the position of the driving magnet 9452 can be exchanged, that is, the driving coil 9451 is provided at the second carrier 943, and the driving magnet 9452 is provided at the first carrier 942, accordingly, the first receiving groove 9420 can be used to install the driving magnet 9452, and the second receiving groove 9435 can be used to install the driving coil 9451.

In this embodiment of the present invention, the driving magnetic conductive plate 9453 is provided on a rear surface of the driving magnet 9452 facing the driving coil 9451, so that the magnetic lines of force of the driving magnet 9452 are concentrated towards the driving coil 9451 to increase the magnetic field strength of the second driving element 945, reduce the magnetic leakage of the driving magnet 9452 and avoid any impact on a photosensitive chip or a circuit board. In a specific example of the present invention, the driving magnetic conductive plate 9453 has an area greater than or equal to the driving magnet 9452, so that the driving magnetic conductive plate 9453 can completely cover the driving magnet 9452. Specifically, the driving magnetic conductive plate 9453 is flat and covers the rear surface of the driving magnet 9452; or, the driving magnetic conductive plate 9453 has a U-shaped opening facing the anti-shake coil, and the driving magnetic conductive plate 9453 covers the rear surface of the driving magnet 9452, and further, the driving magnetic conductive plate 9453 can wrap around at least a part of a side of the driving magnet 9452. Of course, the driving magnetic conductive plate 9453 can also be implemented as other structures, which is not a limitation of the present invention.

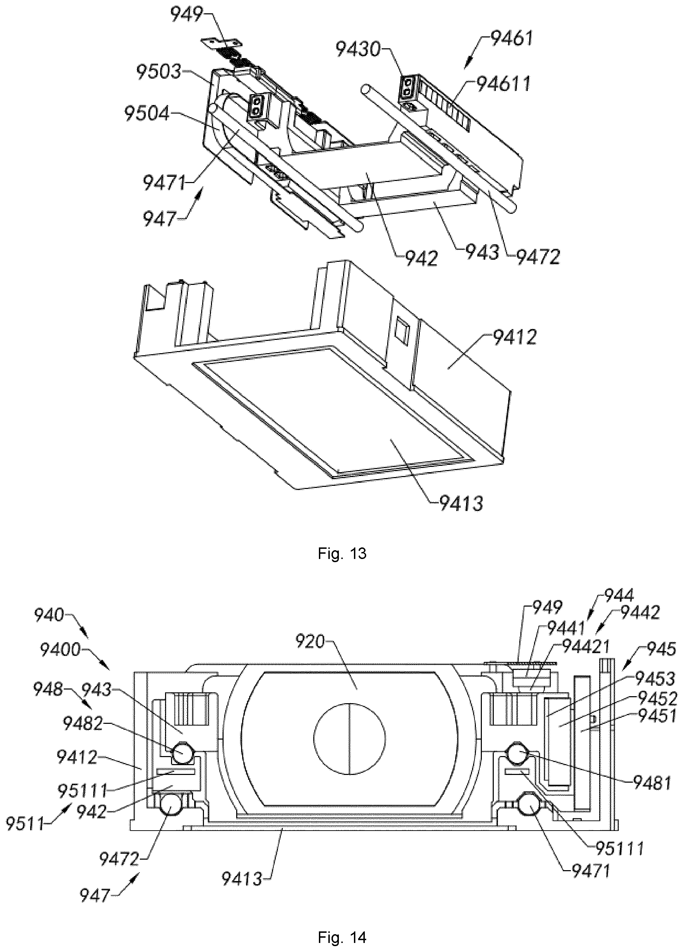

In order to make the movement of the first carrier 942 within the driver housing 941 smoother and more stable, and make the movement of the second carrier 943 on the first carrier 942 smoother and more stable, as shown in FIGS. 13 to 16, the drive component 940 further comprises a guiding component for driving the movement of the first carrier 942 and the second carrier 943. Accordingly, in this embodiment of the present invention, the guiding component comprises a first guiding device 947 and a second guiding device 948, wherein the first guiding device 947 is used to guide the movement of the first carrier 942 within the driver housing 941 along the direction defined by the optical axis, and the second guiding device 948 is used to guide the movement of the second carrier 943 on the first carrier 942 along the direction defined by the optical axis, so that the movements of the first lens part 923 and the second lens part 922 always follow the direction defined by the optical axis.

Specifically, in this embodiment of the present invention, the first guiding device 947 is provided between the driver housing 941 and the first carrier 942, and the second guiding device 948 is provided between the first carrier 942 and the second carrier 943, that is to say, in this embodiment of the present invention, the second guiding device 948 has a height higher than the first guiding device 947. In this embodiment of the present invention, the guiding directions defined by the first guiding device 947 and the second guiding device 948 are parallel to the optical axis.

In this embodiment of the present invention, the first guiding device 947 comprises at least one guiding element extended along a direction defined by the optical axis, for example, in a specific example of the present invention, the first guiding device 947 comprises at least one guiding element that is penetratingly arranged in the first carrier 942, and the guiding element can be implemented as a guiding rod.

Specifically, in this embodiment of the present invention, the first guiding device 947 and the second guiding device 948 have a special configuration to ensure that during optical zooming of the camera module, the first carrier 942 is always supported by the first guiding device 947 while moving with respect to the driver housing 941; during optical focusing of the camera module, the second carrier 943 is always supported by the second guiding device 948 while moving with respect to the first carrier 942, so that the first carrier 942 and the second carrier 943 can move smoothly and improve the stability of the camera module. In other words, the first guiding device 947 and the second guiding device 948 are specially configured, so that the first guiding device 947 is clamped between the first carrier 942 and the driver housing 941, and the second guiding device 948 is clamped between the first carrier 942 and the second carrier 943.

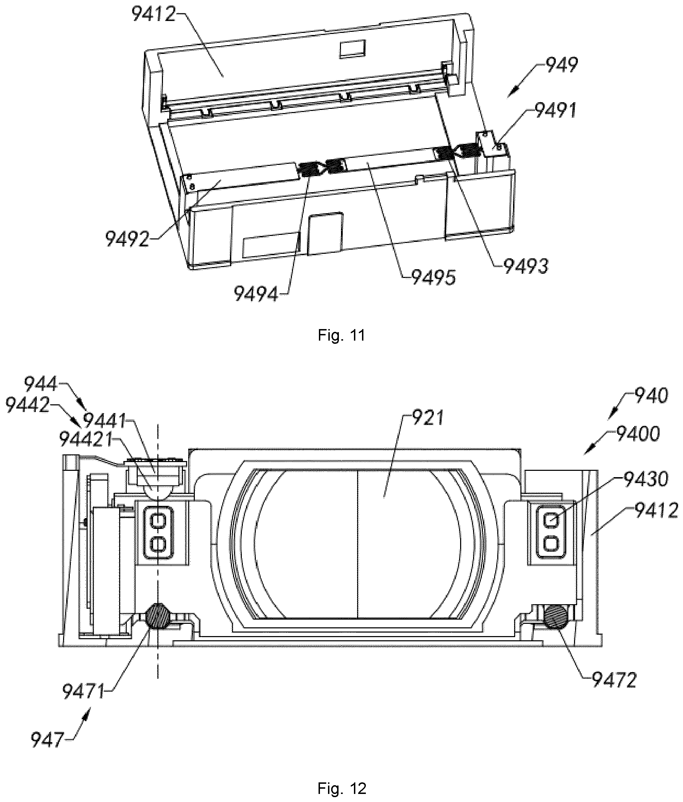

Specifically, in this embodiment of the present invention, as shown in FIGS. 12 to 17, the first guiding device 947 comprises a first guiding element 9471 and a second guiding element 9472, which are provided between a bottom surface of the first carrier 942 and an inner bottom surface of the driver housing 941, and the first guiding element 9471 and the second guiding element 9472 are extended along a direction defined by the optical axis and are symmetrically arranged with respect to the optical axis. In a specific example, the first guiding element 9471 and the second guiding element 9472 are implemented as a first guiding rod and a second guiding rod, respectively, wherein the first guiding rod and the second guiding rod are arranged between the bottom surface of the first carrier 942 and the inner bottom surface of the driver housing 941, wherein the first guiding rod and the second guiding rod are respectively movably connected with the first carrier 942, in this way, the first guiding rod and the second guiding rod of the first guiding device 947 cooperate with the first driving element 944 to provide guidance for the movement of the first carrier 942.

Specifically, in this particular example, two ends of the first guiding rod and two ends of the second guiding rod are respectively fixed with the third side arm and the fourth side arm of the driver housing 941, and the first guiding rod and the second guiding rod are arranged parallel to each other along the optical axis direction, so that the first guiding rod and the second guiding rod can be stably installed inside the drive component 940. That is to say, in this embodiment of the present invention, the first guiding rod and the second guiding rod are fixedly bridged between the third side and fourth side of the driver housing 941, which are opposite to each other. Preferably, the first guiding rod and the second guiding rod are at the same height to avoid tilting of the first carrier 942 during movement.

Specifically, in this embodiment of the present invention, the first driving element 944 drives the first carrier 942 to move along the optical axis direction, and the first guiding rod can be used as a main guiding rod to provide guidance for the movement of the first carrier 942, and the second guiding rod can be used as an auxiliary guiding rod to prevent tilting or rotation of the first carrier 942. That is to say, the first guiding rod and the second guiding rod cooperate with each other to have the functions of guiding direction and preventing tilting or rotation of the first carrier 942.

Specifically, in this embodiment of the present invention, as shown in FIGS. 12 to 17, the first guiding rod and the first driving element 944 are provided at the same side, and the second guiding rod is provided at the opposite sides of the first driving element 944, in other words, the first driving element 944 and the first guiding element 9471 are located at the same side of the first carrier 942, and the first driving element 944 and the second guiding element 9472 are located at different sides of the first carrier 942. It is worth noting that in this embodiment of the present invention, the first guiding rod is provided at the bottom of the first carrier 942, and the first driving element 944 is provided at the top of the first carrier 942, in other words, the first guiding element 9471 and the first driving element 944 are provided at two opposite sides of the first carrier 942, or in other words, the first guiding element 9471 is separated from the first driving element 944 to make full use of the available space of the drive component 940 and make the camera module structure more compact.

Further, in some embodiments of the present invention, if the components inside the drive component 940 are arranged along the optical axis direction, that is, in the plane defined by the width dimension and height dimension of the drive component 940, the first guiding rod is aligned with the first driving element 944, and the position where the first driving element 944 acts on the first carrier 942 is aligned with the center of the cross-section of the first guiding element 9471 in the height direction defined by the drive component 940, which ensures that the direction of the force applied by the first driving element 944 to the first carrier 942 is perpendicular to the first guiding rod, thereby avoiding rotation of the first carrier 942 during movement, as shown in FIG. 12. Of course, the downward pressure of the first driving element 944 of the present invention can be generated during the driving process of the first driving element 944, or it can be provided by the pre-pressure force device 949 to the first driving element 944, which is not a limitation of the present invention.

Specifically, in this embodiment of the present invention, as described above, the first guiding element 944 is a piezoelectric actuator, wherein the piezoelectric actuator comprises a piezoelectric driving part 9441 and a friction driving part 9442 that is drivably coupled with the piezoelectric driving part 9441, and the friction driving part 9442 comprises at least one friction head 94421 pressed against a top surface of the first carrier 942, wherein the position wherein the friction head 94421 is pressed against the top surface of the first carrier 942 is the position where the first driving element 944 acts on the first carrier 942.

Further, in the embodiment of the present invention, a pair of first lower tracks is provided on an inner bottom surface of the base 9412 of the driver housing 941, and a pair of first upper tracks is provided on the bottom surface of the first carrier 942, which are opposite to each other, wherein the pair of first lower tracks and the pair of first upper tracks define a pair of accommodating cavities therebetween, wherein the first guiding rod and the second guiding rod are respectively accommodated in the pair of accommodating cavities. In a specific example of the present invention, a pair of first lower tracks is provided on a bottom surface of the first carrier side arm 9423 of the first carrier 942 and a bottom surface of the second carrier side arm 9424 of the first carrier 942, and a pair of first upper tracks is provided on the inner bottom surface of the base 9412 of the driver housing 941.

Further, in this embodiment of the present invention, the shape of the first upper track is " 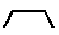 " or "-," and the shape of the first lower track is " 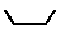 " or "-." . In a specific example of the present invention, the shape of one side of the first upper track is " 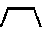 ," and the shape of another side of the first upper track is "-," correspondingly, the shape of one side of the first lower track is ""," and the shape of another side of the first lower track is ""." . The first guiding rod is placed between the first upper track and the first lower track at one side and serves as the main guiding rod for guiding the movement of the first carrier 942; the second guiding rod is placed between the first upper track and the first lower track at another side and serves as the auxiliary guiding rod for stabilizing the inclination or rotation of the first carrier 942.

It is worth mentioning that, in other embodiments of the present invention, the first guiding device 947 can also be a ball or slider, wherein the first guiding device 947 is installed in the accommodating cavities formed by the first upper tracks and the first lower tracks to support the first carrier 942 and provide guidance for the movement of the first carrier 942, which is not a limitation of the present invention.

In order to make the first guiding device 947 be clamped between the first carrier 942 and the driver housing 941, in particular, in the present embodiment, the first guiding element 9471 and the second guiding element 9472 are made of magnetic attraction material, that is, the first guiding rod and the second guiding rod are made of magnetic attraction material, such as iron, magnetic conductive stainless steel, and the like. Details regarding this part will be further explained when introducing the magnetic attraction component later.

As shown in FIGS. 12 to 17, in the present embodiment, the second guiding device 948 comprises a first supporting component 9481 and a second supporting component 9482, wherein the first supporting component 9481 and the second supporting component 9482 are arranged between a bottom surface of the second carrier 943 and the top surface of the first carrier 942, wherein the first supporting component 9481 and the second supporting component 9482 are movably connected with the second carrier 943, respectively, wherein the first supporting component 9481 and the second supporting component 9482 are respectively arranged at two opposite sides of the bottom surface of the second carrier 943 along the optical axis direction to cooperate with the second driving element 945 to provide guidance for the movement of the second carrier 943.

Specifically, in a specific example of the present invention, the first supporting component 9481 is installed between the bottom surface of the third carrier side arm 9432 of the second carrier 943 and the top surface of the first rear section 94232 of the first carrier side arm 9423 of the first carrier 942, the second supporting component 9482 is installed between the bottom surface of the fourth carrier side arm 9433 of the second carrier 943 and the top surface of the second rear section 94242 of the second carrier side arm 9424 of the first carrier 942, the first supporting component 9481 and the second supporting component 9482 are arranged parallel to each other along the optical axis direction, so that the first supporting component 9481 and the second supporting component 9482 can stably support the movement of the second carrier 943. The first supporting component 9481 and the second supporting component 9482 are at the same height to avoid tilting of the second carrier 943 during movement.

Specifically, in this embodiment of the present invention, a pair of second upper tracks is provided on a top surface of the first carrier side arm 9423 of the first carrier 942 and a top surface of the second carrier side arm 9424 of the first carrier 942, corresponding to this, and a pair of second lower tracks is provided on a bottom surface of the third carrier side arm 9432 of the second carrier 943 and a bottom surface of the fourth carrier side arm 9433 of the second carrier 943, wherein the pair of second upper tracks and the pair of second lower tracks define a pair of accommodating cavities therebetween, wherein the first supporting component 9481 and the second supporting component 9482 are respectively accommodated in the pair of accommodating cavities. Specifically, in one specific example of the present invention, the pair of second upper tracks are provided at the first rear section 94232 of the first carrier side arm 9423 of the first carrier 942 and the second rear section 94242 of the second carrier side arm 9424 of the first carrier 942, that is, the second guiding device 948 has a height lower than the top surface of the first carrier 942.

In this specific example of the present invention, the first supporting component 9481 and the second supporting component 9482 are rolling balls, which are placed in the accommodating cavities formed by the second upper tracks and the second lower tracks, and the movement trajectory of the rolling balls is limited within the accommodating cavities, wherein the rolling balls can move along the optical axis direction within the accommodating cavities to provide guidance for the movement of the second carrier 943. Further, the number of each of the first supporting component 9481 and the second supporting component 9482 is at least 91, wherein in this specific example of the present invention, the number of the first supporting component 9481 is 92, and the number of the second supporting component 9482 is 92, to provide a smoother support for the second carrier 943 and avoid tilting of the second carrier 943 during movement. Further, in some embodiments of the present invention, the middle part of the second upper track and the second lower track (i.e., the middle part of each of the accommodating cavities) is divided, so that the accommodating cavity at one side is divided into two half accommodating cavities, and the accommodating cavity at another side is divided into two half accommodating cavities, this design allows two rolling balls arranged at the same side to be respectively placed in the two half accommodating cavities to prevent the rolling balls from be concentrated at s single side during movement and causing tilting of the second carrier 94.

Similarly, in this embodiment of the present invention, the first supporting component 9481 and the second supporting component 9482 can also be implemented as sliders or other components having guiding functions, which is not a limitation of the present invention.

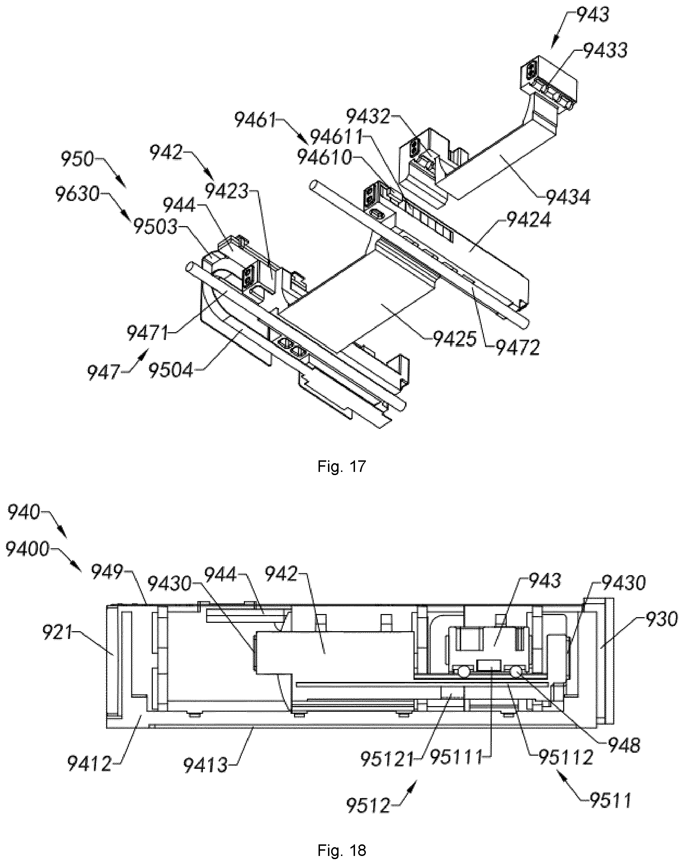

In order to make the guiding of the first guiding device 947 and the second guiding device 948 smoother, that is, to stably clamp the first guiding device 947 between the first carrier 942 and the driver housing 941, and to stably clamp the second guiding device 948 between the second carrier 943 and the first carrier 942, that is, to make the first carrier 942, the first guiding device 947, and the second carrier 943 have a stable and compact relative positional relationship, and to make the second carrier 943, the first carrier 942, and the second guiding device 948 have a stable and compact relative positional relationship, in this embodiment of the present invention, as shown in FIGS. 18 to 20, the drive component 940 further comprises a magnetic attraction component, more specifically, the magnetic attraction component comprises a first magnetic attraction component 9511 and a second magnetic attraction component 9512.

As shown in FIGS. 18 to 20, in this embodiment of the present invention, the first magnetic attraction component 9511 comprises a first magnet 95112 and a first magnetic attraction element 95111 provided at the first carrier 942 and corresponded to the first magnet 95112, wherein the interaction force between the first magnet 95112 and the first magnetic attraction element 95111 stably clamps the second guiding device 948 between the first carrier 942 and the second carrier 943, that is, maintains a relatively stable positional relationship between the second carrier 943 and the first carrier 942.

In a specific example of the present invention, the first magnet 95112 is provided on the bottom surface of the third carrier side arm 9432 and the bottom surface of the fourth carrier side arm 9433 of the second carrier 943, more specifically, the first magnet 95112 is provided in the middle of the second lower track on the bottom surface of the third carrier side arm 9432 and the bottom surface of the fourth carrier side arm 9433, that is, the first magnet 95112 is used as a separator in the middle of the second lower track, and two rolling balls are respectively provided in two half accommodating cavities separated by the first magnet 95112, that is, two rollers are provided at two sides of the first magnet 95112 to prevent the rolling balls from being concentrated at one side and causing the second carrier 943 to tilt when moving.

Preferably, in order to avoid an increase in height, in this specific example, a first groove is provided in the middle of the second lower track, and the first magnet 95112 is placed in the first groove: the first magnet 95112 is completely accommodated within the first groove, or at least partially exposed, wherein the height at which the first magnet 95112 is exposed from the first groove is smaller than the height of the rolling balls to avoid affecting the movement of the second carrier 943.

In this embodiment of the present invention, the first magnetic attraction element 95111 is arranged on the first carrier 942 and corresponded to the first magnet 95112, wherein the first magnetic attraction element 95111 and the first magnet 95112 attract each other, so that the second carrier 943 and the first carrier 942 are pressed against each other, in this way, the relative stable positional relationship between the second carrier 943 and the first carrier 942 is maintained, the second guiding device 948 is clamped between the first carrier 942 and the second carrier 943 by the magnetic attraction force between the first magnetic attraction element 95111 and the first magnet 95112, and the second carrier 943 is frictionally coupled with the first carrier 942 through the second guiding device 948.

In this specific example of the present invention, the first magnetic attraction element 95111 is embedded in the first carrier 942 through an insert molding process to avoid an increase in the height of the first carrier 942, moreover, the first magnetic attraction element 95111 can be formed to have a larger size without occupying the space position of the drive component 940, thereby meeting a greater magnetic attraction force. In other examples of the present invention, of course, the first magnetic attraction element 95111 can also be formed on the lower surface of the first carrier 942 through a secondary injection molding, which is not a limitation of the present invention. The number of the first magnetic attraction elements 95111 is two, which are respectively provided at two opposite sides of the first carrier 942 and the second carrier 943.

As shown in FIGS. 18 to 20, in the present embodiment, the second magnetic attraction component 9512 comprises a second magnet 95121 provided at the first carrier 942, wherein the second magnet 95121 and the first guiding device 947 attract each other, so that the first carrier 942 and the driver housing 941 are pressed against each other, in this way, a relatively stable positional relationship between the first carrier 942 and the driver housing 941 is maintained, the first guiding device 947 is clamped between the first carrier 942 and the driver housing 941 by the magnetic attraction force of the second magnet 95121, and the first carrier 942 is frictionally coupled with the driver housing 941 through the first guiding device 947. In other words, in the present embodiment, the first guiding device 947 is clamped between the first carrier 942 and the driver housing 941 by the magnetic attraction force between the second magnetic attraction component 9512 and the first guiding device 947.

As described above, in some specific examples of the present invention, the first guiding element 9471 and/or the second guiding element 9472 of the first guiding device 947 are made of magnetic attraction material, in this way, a magnetic attraction force is generated between the first guiding element 9471 and/or the second guiding element 9472 of the first guiding device 947 and the second magnetic attraction component 9512, so that the first carrier 942 and the driver housing 941 can be pressed against each other, a relatively stable positional relationship between the first carrier 942 and the driver housing 941 can be achieved, and the first guiding device 947 is clamped between the first carrier 942 and the driver housing 941 by the magnetic attraction force of the second magnet 95121, and the first carrier 942 is frictionally coupled with the driver housing 941 through the first guiding device 947. That is to say, in the embodiment of the present invention, the first guiding device 947 not only guides the movement of the first carrier 942, but also cooperates with the second magnetic attraction component 9512 for self-positioning.

In a specific example of the present invention, a second groove is provided on the bottom surface of the first carrier 942, and the second magnet 95121 is placed in the second groove: the second groove can be completely accommodated inside the second groove, or at least partially exposed, the part of the second magnet 95121 that is exposed in the second groove does not touch the surface of the first guiding device 947 to avoid affecting the movement of the first carrier 942. The second magnet 95121 can be embedded in the second groove or held in the second groove by magnetic attraction force between the second magnet 95121 of the first magnetic attraction component 9511 and the first magnetic attraction element 95111. In another specific example of the present invention, the second magnet 95121 is integrally embedded inside the first carrier 942 through an insert molding process.

Specifically, being corresponded to the first guiding element 9471 and the second guiding element 9472 of the first guiding device 947, in this embodiment of the present invention, the second magnetic attraction component 9512 comprises a pair of second magnets 95121, wherein one of the second magnets 95121 is installed at the first carrier 942 and corresponded to the first guiding element 9471, and another second magnet 95121 is installed at the second carrier 943 and corresponded to the second guiding element 9472, wherein the first guiding element 9471 and the second guiding element 9472 are made of magnetic attraction material to respectively cooperate with the second magnet 95121 to generate the magnetic attraction force. Specifically, the pair of second magnets 95121 is respectively provided on the bottom surface of the first carrier side arm 9423 and the bottom surface of the second carrier side arm 9424. It is worth mentioning that, in this embodiment of the present invention, the direction of the magnetic attraction force is perpendicular to the guiding direction of the first guiding device 947.

As shown in FIGS. 18 to 20, one of the second magnets 95121 and another of the second magnets 95121 are symmetrically arranged with respect to the optical axis on the first carrier 942. Moreover, preferably, in this embodiment of the present invention, the center of one of the second magnets 95121, the center of another of the second magnets 95121, and the center of gravity of the first carrier 942 are located in the same horizontal line. Of course, in another specific example of the present invention, the center of one of the second magnets 95121, the center of another of the second magnets 95121, and the center of gravity of the first carrier 942 can also be not in the same horizontal line, for example, the two second magnets 95121 can deviate from the horizontal line where the center of gravity of the first carrier 942 is located in opposite directions, that is, the line connecting the centers of the two second magnets 95121 intersects with the horizontal line where the center of gravity of the first carrier 942 is located, wherein one of the second magnets 95121 is close to the third side and the other one of the second magnets 95121 is close to the fourth side, this design keeps the first carrier 942 stable inside the driver housing 941 and avoids magnetic interference with a first position sensing device that will be described later.

Preferably, the center of one of the second magnets 95121, the center of another of the second magnets 95121, and the center of gravity of the first carrier 942 have the same height with respect to the inner bottom surface of the driver housing 941.

It is worth mentioning that, in the present embodiment, the first magnetic attraction element 95111 is provided between the first magnet 95112 and the second magnet 95121, and the first magnetic attraction element 95111 has a size larger than the first magnet 95112 and the second magnet 95121. The magnetic attraction force generated between the first magnetic attraction element 95111 and the first magnet 95112 makes the second carrier 943 and the first carrier 942 be pressed against each other, the magnetic attraction force between the first magnetic attraction element 95111 and the second magnet 95121 can also make the second magnet 95121 be fixed at the first carrier 942. Due to the limitation of the internal space of the drive component 940, the first magnet 95112 and the second magnet 95121 cannot increase the magnetic attraction force by increasing their size, and the first magnetic attraction element 95111 having a larger size can increase the mutual attraction force between the first magnetic attraction element 95111 and the first magnet 95112 and the mutual attraction force between the first magnetic attraction element 95111 and the second magnet 95121.

As shown in FIGS. 18 to 20, in the embodiment of the present invention, the first magnet 95112, the first magnetic attraction element 95111 and the second magnet 95121 are stacked along the height direction, wherein the first magnetic attraction element 95111 can separate the magnetic field between the first magnet 95112 and the second magnet 95121 to avoid magnetic interference between the first magnet 95112 and the second magnet 95121. Specifically, the first magnetic attraction element 95111 is located between the first magnet 95112 and the second magnet 95121 in the height direction defined by the drive component 940.

Specifically, in this embodiment of the present invention, the first magnetic attraction element 95111 has a size larger than the stroke of the first magnet 95112, so that the magnetic force of the first magnetic attraction element 95111 is concentrated downwards. When the first magnetic attraction element 95111 is not set or the size of the first magnetic attraction element 95111 is too small or the first magnetic attraction element 95111 is not provided between the first magnet 95112 and the second magnet 95121, the first magnet 95112 and the second magnet 95121 will attract each other, thereby affecting the movement of the second carrier 943. Further, the second magnet 95121 can be provided below the first magnetic attraction element 95111 and in contact with the first magnetic attraction element 95111 to increase the magnetism of the second magnet 95121.

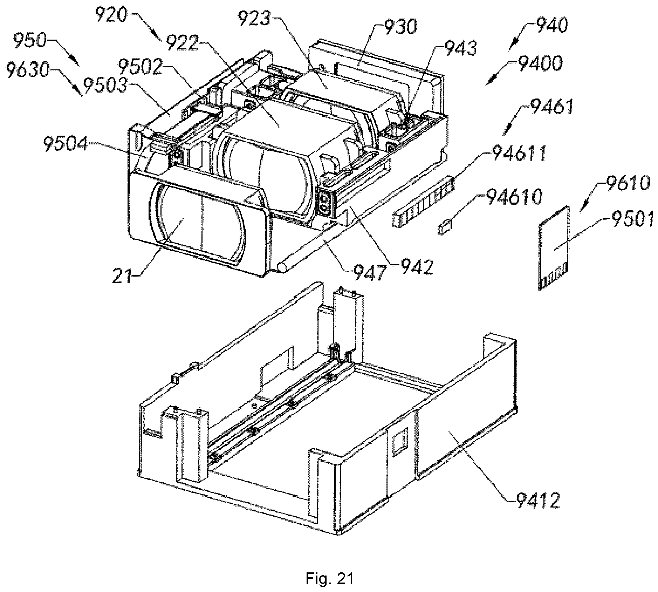

As shown in FIG. 21, in this embodiment of the present invention, the drive component 940 further comprises a position sensing component for sensing the positions of the first carrier 942 and the second carrier 943, wherein the position sensing component comprises a first position sensing device 9461 and a second position sensing device 9462.

In this embodiment of the present invention, the first position sensing device 9461 is provided between the first carrier 942 and the driver housing 941 to sense the position of the first carrier 942. Further, the first position sensing device 9461 is provided between the first carrier 942 and a side arm of the driver housing 941 to avoid increasing the height of the drive component 940. In other embodiments of the present invention, the first position sensing device 9461 can also be provided between the first carrier 942 and the bottom or the top of the driver housing 941.

Specifically, in this embodiment of the present invention, the first position sensing device 9461 comprises a first position sensing element 94610 and the first position sensing magnet 94611. In a specific example of the present invention, the first position sensing magnet 94611 is provided at the outer side arm of the first carrier 942, and the first position sensing element 94610 is provided at the inner side arm of the driver housing 941, which are opposite to each other. Further, a third groove is defined on an outer surface of the first carrier side arm 9423 of the first carrier 942 or an outer surface of the second carrier side arm 9424 of the first carrier 942, and the first position sensing magnet 94611 is placed in the third groove, a first through hole is provided on an inner side surface of the first side arm of the driver housing 941 or an inner side surface of the second side arm of the driver housing 941, and the first through hole is extended from the inner side surface of the first side arm of the driver housing 941 or the inner side surface of the second side arm of the driver housing 941 to the outer side surface of the first side arm or the outer side surface of the second side arm. The third groove is opposite to the first through hole , and the first position sensing magnet 94611 is provided in the third groove, while the first position sensing element 94610 is provided in the first through hole , that is, the first position sensing magnet 94611 is corresponded to the first position sensing element 94610. The first position sensing element 94610 can sense the movement position of the first position sensing magnet 94611, and of course, the sensed position information can be fed back and processed after the movement position of the first position sensing magnet 94611 is detected. In a specific example of the present invention, the first position sensing magnet 94611 is a magnetic grating.

In this embodiment of the present invention, the second position sensing device 9462 is provided between the second carrier 943 and the first carrier 942 to sense the position of the second carrier 943. Further, the second position sensing device 9462 is provided between the side arms of the second carrier 943 and the first carrier 942 to avoid increasing the height of the drive component 940. In other embodiments of the present invention, the second position sensing device 9462 can also be provided between the bottoms or the tops of the first carrier 942 and the second carrier 943.

Specifically, in this embodiment of the present invention, the second position sensing device 9462 comprises the second position sensing element 94620. In a specific example of the present invention, the second position sensing element 94620 is provided inside the first receiving groove 9420 of the first carrier 942, and is corresponded to the driving magnet 9452 to sense the movement position of the driving magnet 9452, of course, after sensing the movement position of the driving magnet 9452, the sensed position information can be fed back and processed. In a specific example of the present invention, the second position sensing element 94620 is provided inside the driving coil 9451 and corresponded to the driving magnet 9452.

More specifically, in this exemplary embodiment of the present invention, the first position sensing element 94610 and the second position sensing element 94620 are Hall elements; in other exemplary embodiments of the present invention, the first position sensing element 94610 and the second position sensing element 94620 are drive chips, which are suitable for obtaining the position changes of the first position sensing magnet 94611 and the driving magnet 9452 while controlling the corresponding current.

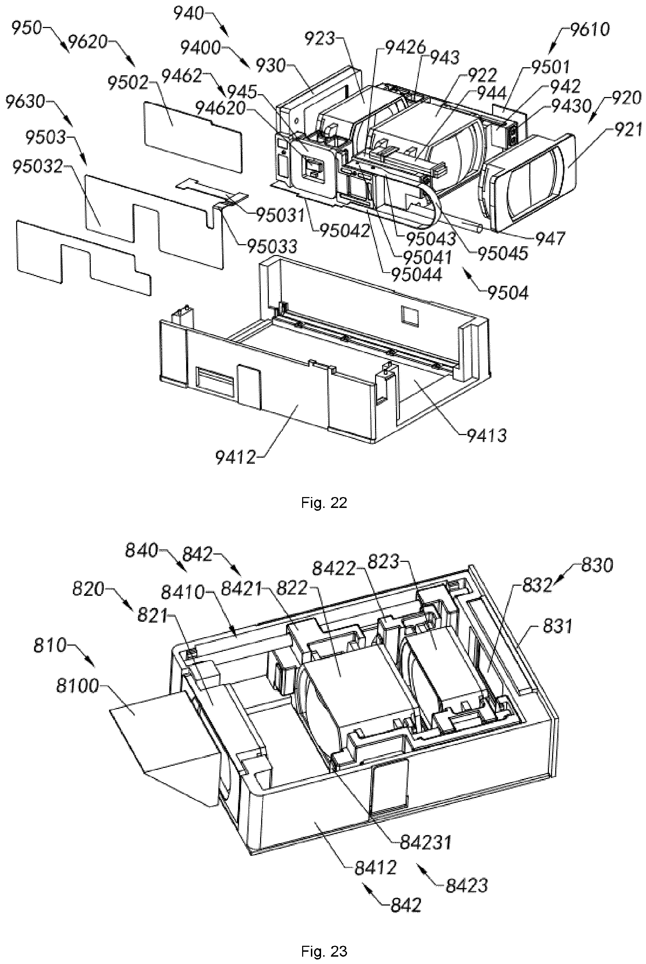

As shown in FIGS. 21 and 22, in this exemplary embodiment of the present invention, the drive component 940 further comprises a conductive component 950 for electrical conduction, wherein the conductive component 950 comprises a first conducting element 9610, a second conducting element 9620, and a third conducting element 9630. As mentioned above, the first position sensing element 94610 is disposed in the first through hole of the driver housing 941, and in order to simplify the electric connection structure of the first position sensing element 94610, the first conducting element 9610 is disposed in the first through hole corresponded to the outer side of the first side arm or the second side arm of the driver housing 941, that is, the first conducting element 9610 and the first position sensing element 94610 are disposed at the same side, this design allows the first position sensing element 94610 to be disposed on the first conducting element 9610 to achieve electrical conduction of the first position sensing element 94610. In a specific example of the present invention, the first conducting element 9610 is the first circuit board 9501, and more specifically, the first circuit board 9501 is preferably a flexible board.

In this embodiment of the present invention, the second conducting element 9620 is provided on the outer side surface of the first carrier side arm 9423 of the first carrier 942 or the outer side surface of the second carrier side arm 9424 of the first carrier 942, wherein the second conducting element 9620 is corresponded to the first receiving groove 9420 of the first carrier 942, that is, the second conducting element 9620 and the driving coil 9451 are provided at the same side, and the driving coil 9451 is directly and electrically connected with the second conducting element 9620 to simplify the circuit conduction of the second driving element 945. In a specific example of the present invention, the second conducting element 9620 is a second circuit board 9502, more specifically, the second circuit board 9502 is preferably implemented as a flexible board.

In this embodiment of the present invention, the third conducting element 9630 comprises a third circuit board 9503 and a fourth circuit board 9504, wherein the third circuit board 9503, the fourth circuit board 9504 and the first driving element 944 are arranged at the same side to simplify the circuit connection of the first driving element 944. Further, in this embodiment of the present invention, the third circuit board 9503 comprises a first electric connection terminal 95031 and a second electric connection terminal 95032, wherein the first electric connection terminal 95031 of the third circuit board 9503 is fixed with the first driving element 944 and electrically connected with the piezoelectric driving part 9441 of the first driving element 944, the second electric connection terminal 95032 of the third circuit board 9503 is extended to the outer side surface of the driver housing 941 and is suitable for being electrically connected with the photosensitive component 930, and the first electric connection terminal 95031 and the second electric connection terminal 95032 of the third circuit board 9503 are connected by a first bending portion 95033. More specifically, in this embodiment of the present invention, the second electric connection terminal 95032 of the third circuit board 9503 is fixed to the outer side surface of the first side arm of the driver housing 941 or the outer side surface of the second side arm of the driver housing 941, moreover, the second electric connection terminal 95032 can be extended towards the fourth side of the driver housing 941, that is, towards the photosensitive component 930 and be electrically connect with the circuit board of the photosensitive component 930. Further, a reinforcing plate can be provided at the second electric connection terminal 95032 of the third circuit board 9503 to increase the hardness of the second electric connection terminal 95032.

Specifically, in this embodiment of the present invention, the fourth circuit board 9504 comprises a first segment 95043 having a third electric connection terminal 95041 and a second segment 95044 having a fourth electrical connection terminal 95042, wherein, the first segment 95043 is fixed at the first carrier 942, and the second segment 95044 is fixed at the driver housing 941, wherein the first segment 95043 and the second segment 95044 are at least partially overlapped in the height direction defined by the drive component 940. In addition, as shown in FIG. 22, in this embodiment of the present invention, the fourth circuit board 9504 further comprises a second bending portion 95045 extended between the first segment 95043 and the second segment 95044 in a bent manner.

In a specific example of the present invention, the third electric connection terminal 95041 is fixed at the first carrier 942 and electrically connected to the second circuit board 9502, and the fourth electric connection terminal 95042 is fixed at the driver housing 941 and electrically connected to the third circuit board 9503, more specifically, the first segment 95043 of the fourth circuit board 9504 is fixed on the top surface of the first carrier 942, and the second segment 95044 of the fourth circuit board 9504 is fixed on the inner bottom surface of the driver housing 941. That is, in this specific example, the fourth circuit board 9504 is positioned between the second circuit board 9502 and the third circuit board 9503 to be electrically connected to the second circuit board 9502 and the third circuit board 9503 by the fourth circuit board 9504 .

Further, in this specific example, the bottom of the third side arm or the bottom of the fourth side arm of the driver housing 941 has a second through hole, and a terminal of the fourth electric connection terminal 95042 is electrically connected to the third circuit board 9503 through the second through hole.

Specifically, in this embodiment of the present invention, the first segment 95043 is parallel to the second segment 95044, and the extension direction of the first segment 95043 and the second segment 95044 is consistent with the direction defined by the optical axis. In terms of shape, in this embodiment of the present invention, the first segment 95043, the second segment 95044, and the second bending portion 95045 have a u-shaped structure.

In order to illustrate the specific extension method of the first segment 95043, the second segment 95044, and the second bending portion 95045, in this embodiment of the present invention, the first carrier 942 is divided into a first part and a second part according to the positions of the first mounting chamber 9421 and the second mounting chamber 9422, wherein the first mounting chamber 9421 is located in the first part, and the second mounting chamber 9422 is located in the second part. Correspondingly, in this embodiment of the present invention, the first segment 95043 of the fourth circuit board is extended from the third electric connection terminal 95041 and the second part of the first carrier 942 to the first part of the first carrier 942, and the second segment 95044 of the fourth circuit board is extended from the first part of the first carrier 942 to the second part of the first carrier 942, wherein the second bending portion 95045 is bent and extended between the first segment 95043 and the second segment 95044. In other words, in this embodiment of the present invention, a u-shaped opening formed by the first segment 95043, the second segment 95044 and the second bending portion 95045 is corresponded to the photosensitive component 930.

In order to meet the travel of the first carrier 942, in this embodiment of the present invention, the sum of the lengths of the first segment 95043 and the second segment 95044 is greater than the travel of the first carrier 942, in this way, when the first driving element 944 drives the first carrier 942 to move with respect to the driver housing 941 along the direction defined by the optical axis, the shape of the second bending portion 95045 remains unchanged, and the change in length of a first straight segment is equal to the change in length of a second straight segment.

Correspondingly, when the first carrier 942 moves towards the third side (i.e., towards the light inflecting element 910) along the optical axis direction, the first carrier 942 drives the third electric connection terminal 95041 to move, and the fourth electric connection terminal 95042 is fixed at the driver housing 941 without moving, so that the length of the first segment 95043 is decreased and the length of the second segment 95044 is increased while maintaining the curved segment u-shaped structure unchanged. Correspondingly, when the first carrier 942 moves towards the third side (i.e., towards the photosensitive component 930) along the optical axis direction, the first carrier 942 drives the third electric connection terminal 95041 to move, and the fourth electric connection terminal 95042 is fixed at the driver housing 941 without moving, so that the length of the first segment 95043 is increased and the length of the second segment 95044 is decreased while maintaining the curved segment u-shaped structure unchanged.

As shown in FIGS. 23 to 32B, the camera module according to the embodiments of the present invention is described, comprising a photosensitive component 830, a zoom lens 820 held on the photosensitive path of the photosensitive component 830, and a drive component 840 for driving the zoom lens 820 to achieve optical zoom function. It should be understood that in the present invention, the camera module can be implemented as an upright camera module or as a periscope camera module, wherein when the camera module is implemented as a periscope zoom camera module, the camera module further comprises a light inflecting component 810 for inflecting the imaging light, wherein the zoom lens 820 and the photosensitive component 830 are located at the light inflecting path of the light inflecting component 810.

More specifically, in a specific example of the present invention, the light inflecting component 810 comprises a light inflecting element 8100 for inflecting the imaging light from the subject being photographed, thereby reducing the overall height dimension of the camera module, allowing the camera module to be horizontally inserted into a mobile electronic device. Here, considering manufacturing tolerances, in actual operation, there may be an error of up to 1 ° in the angle at which the light inflecting element 8100 inflects the imaging light, which should be understandable to those skilled in the art.

In a specific embodiment, the light inflecting element 8100 can be implemented as a mirror or a light inflecting prism (e.g., a triangular prism). When the light inflecting element 8100 is implemented as a light refracting prism, the incident light surface of the light refracting prism is perpendicular to an emergent light surface thereof, and a light reflecting surface of the light refracting prism is inclined at a 45° angle with respect to the incident light surface and the emergent light surface, in this way, the imaging light can undergo at a 90° angle at the incident light surface and exit from the emergent light surface in a direction perpendicular to the emergent light surface. In one embodiment of the present invention, the camera module may comprise a greater number of light inflecting elements 8100 to meet the size requirements of the camera module, for example, the light inflecting elements 8100 can be arranged at the image side of the camera module or between two optical lenses thereof.

It is worth mentioning that, in some examples of the present invention, the light inflecting component 810 may also comprise a light inflecting drive for rotating and/or translating the light inflecting element 8100, which achieves the function of optical image stabilization or optical zoom by changing the propagation path of the imaging light.

As shown in FIG. 23, in the embodiment of the present invention, the zoom lens 820 is held in the light inflecting path of the light inflecting component 810 to receive the imaging light from the light inflecting component 810 and converge the imaging light. Accordingly, the zoom lens 820 comprises a third lens part 821, a first lens part 822, and a second lens part 823 (i.e., the third lens part 821, the first lens part 822, and the second lens part 823 are sequentially arranged from the incident light side to the exiting light side of the zoom camera module) are coaxially arranged along the optical axis defined by the zoom lens 820, wherein the first lens part 822 and the second lens part 823 can be adjusted with respect to the third lens part 821 under the action of the drive component 840, thereby adjusting the optical performance of the zoom camera module, including but not limited to optical focusing and optical zoom functions. Specifically, the first lens part 822 and the second lens part 823 can be adjusted by the drive component 840 to adjust the focal length of the zoom lens 820 of the zoom camera module, so as to clearly capture objects at different distances.

The first lens part 822 comprises a first lens barrel and at least one optical lens disposed within the first lens barrel. In a specific example of the present invention, the first lens part 822 is implemented as a zooming lens part, wherein the zooming lens part is adapted for being driven by the drive component 840 to move along the optical axis direction defined by the zoom lens 820, thereby achieving the optical zoom function of the zoom camera module, so that the zoom camera module can achieve clear shooting of objects at different distances.

It is worth mentioning that, in other examples of the present invention, the first lens part 822 may also not be provided with the first lens barrel, and it only comprises the at least one optical lens, for example, it only comprises multiple optical lenses that are mutually fitted together. In other examples of the present invention, the first lens part 822 can also implemented as a "bare lens".

In this embodiment of the present invention, the second lens part 823 comprises a second lens barrel and at least one optical lens disposed within the second lens barrel. In a specific example of the present invention, the second lens part 823 is implemented as a focusing lens part, wherein the focusing lens part is adapted to be driven by the drive component 840 to move along the optical axis direction defined by the zoom lens 820, thereby achieving the focusing function of the zoom camera module. More specifically, the optical focusing achieved by driving the focusing lens part can compensate the focus shift caused by the movement of the zooming lens part, thereby compensating the imaging performance of the zoom camera module and ensuring that its imaging quality meets the predetermined requirements.

It is worth mentioning that, in other examples of the present invention, the second lens part 823 may also not be provided with the second lens barrel, and it only comprises the at least one optical lens, for example, it only comprises multiple optical lenses that are mutually fitted together. In other examples of the present invention, the second lens part 823 can be implemented as a "bare lens".

The third lens part 821 comprises a third lens barrel and at least one optical lens disposed within the third lens barrel. In a specific example of the present invention, the third lens part 821 is implemented as a fixed lens part, wherein the fixed lens part is adapted at be fixed to a non-moving part of the drive component 840, so as to maintain the fixed lens part at a constant position in the zoom lens 820.

It is worth mentioning that, in other examples of the present invention, the third lens part 821 may also not be provided with the third lens barrel, and it only comprises the at least one optical lens, for example, it only comprises multiple optical lenses that are mutually fitted together. In other examples of the present invention, the third lens part 821 can be implemented as a "bare lens".

More specifically, as shown in FIG. 23, in the embodiment of the present invention, from the incident light side to the exiting light side of the zoom periscope camera module, the third lens part 821, the first lens part 822, and the second lens part 823 are sequentially arranged, wherein the incident light side is adjacent to the light inflecting component 810, and the exiting light side is adjacent to the photosensitive component 830. In a specific example of the present invention, the second lens part 823, the first lens part 822, and the third lens part 821 are respectively implemented as a focusing lens part, a zooming lens part, and a fixed lens part, that is, in the zoom lens 820, the zooming lens part is located between the fixed lens part and the focusing lens part, that is, when the imaging light from the light inflecting component 810 passes through the zoom lens 820, it will sequentially pass through the fixed lens part, then through the zooming lens part, and then through the focusing lens part.

In other examples of the present invention, the relative positional relationship between the fixed lens part, the zooming lens part, and the focusing lens part can also be adjusted. For example, in a specific embodiment of the present invention, the fixed lens part is provided between the zooming lens part and the focusing lens part. In another specific embodiment, the focusing lens part is provided between the fixed lens part and the zooming lens part. It should be understood that, in the embodiment of the present invention, the relative positional relationship between the fixed lens part, the zooming lens part, and the focusing lens part can be adjusted according to the optical design requirements and structural design requirements of the zoom camera module.

Considering the structural design of the zoom camera module, preferably, the focusing lens part and the zooming lens part are adjacently arranged. That is, according to the positions of the various parts of the zoom lens 820 described in the present invention, preferably configured as follows: the zooming lens part is located between the fixed lens part and the focusing lens part, or the focusing lens part is located between the fixed lens part and the zooming lens part. It should be understood that the zooming lens part and the focusing lens part are the parts that need to be moved in the zoom lens 820, therefore, arranging the focusing lens part and the zooming lens part adjacent to each other can facilitate the arrangement of the drive component 840, which will be further described in detail in the specific description of the drive component 840.

It is worth mentioning that, in the example shown in FIG. 23, although the zoom lens 820 is exemplified as comprising a first lens part 822, a second lens part 823, and a third lens part 821, those skilled in the art should understand that in other examples of the present invention, the specific number selections of the first lens part 822, the second lens part 823, and the third lens part 821 are not limited in the present invention, and can be adjusted according to the optical design requirements of the zoom camera module.

As shown in FIGS. 23 to 25, in the present embodiment of the present invention, the photosensitive component 830 is corresponded to the zoom lens 820, which is used to receive the imaging light from the zoom lens 820 and perform imaging, wherein the photosensitive component 830 comprises a circuit board 831 and a photosensitive chip 832 mounted on the circuit board 831, electronic components, connectors, a base, and a filter element (not shown in the figures). The circuit board 831 comprises a circuit board body, a connecting strip, and a connector part (not shown in the figures), wherein the connecting strip connects the circuit board body and the connector part and realizes electrical conduction between the circuit board body and the connector part. The photosensitive chip 832 and the electronic components are electrically connected to the circuit board body, and the connector is installed in the connector part.

Correspondingly, the photosensitive chip 832 is used to receive the external light collected by the zoom lens 820 and is electrically connected to the mobile electronic device through the circuit board 831. The photosensitive chip 832 comprises a photosensitive area and a non-photosensitive area, wherein the photosensitive chip 832 is electrically connected to the circuit board 831 through bonding pads located at the non-photosensitive area of the photosensitive chip 832, for example, the photosensitive chip 832 is electrically connected to a circuit board body of the circuit board 831 through wire bonding, soldering, FC process (flip chip), or RDL (redistribution layer technology). The photosensitive chip 832 is suitable for being fixed to a front side of the circuit board body (the side of the circuit board 831 facing the zoom lens 820 is defined as the front side, and the opposite side of the circuit board 831 is the bottom surface of the circuit board 831) through an adhesive. In some embodiments of the present invention, the circuit board body has a groove or a through hole (circuit board through hole) in the middle thereof, wherein the photosensitive chip 832 is installed and fixed in the groove or the circuit board through hole of the circuit board body, thereby reducing the influence of the thickness of the circuit board body on the thickness of the photosensitive component 830 and reducing the height of the camera module.

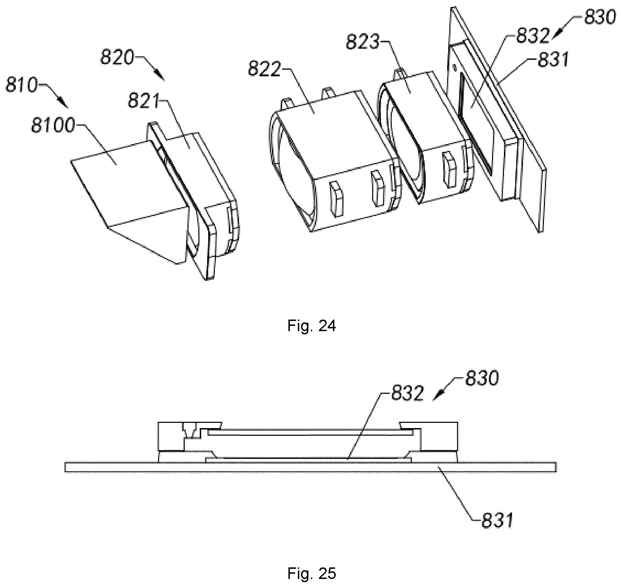

As shown in FIG. 25, in a specific example of the present invention, the photosensitive component 830 comprises a circuit board 831, a photosensitive chip 832 electrically connected to the front side of the circuit board body of the circuit board 831, electronic components electrically connected to the circuit board body, a molded base integrally formed on the circuit board body through molding process, a filter element support adhesively fixed to the molded base, and a filter element adhesively fixed to the filter element support by flip-chip bonding. In one embodiment of the present invention, the molded base wraps at least a part of the front side of the circuit board body and the electronic components, thereby reducing the contamination caused by dust or dirt that may be present on the surface of the circuit board body or the electronic components to the photosensitive chip 832. In another embodiment of the present invention, the molded base comprises at least a part of the front side of the circuit board body, the electronic components, and a non-photosensitive area of the photosensitive chip 832.

The filter element is held on the photosensitive path of the photosensitive chip for filtering the imaging light entering the photosensitive chip. In a specific example, the filter element is installed at the base of the photosensitive component 830 and corresponded to at least the photosensitive region of the photosensitive chip 832, wherein the base is implemented as a separately molded bracket, which is attached to the surface of the circuit board body by an adhesive medium and used to support other components; or the base is implemented as a molded base, which is integrally molded at a predetermined position on the circuit board body by a molding process; or the base comprises both a bracket and a molded base, the bracket is fixed on the molded base and the filter element is installed, which are not limited in the present invention. It should be noted that, in other examples of the present invention, the filter element can also be installed in other positions of the camera module, for example, the filter element is formed inside the zoom lens 820 (for example, as a filter film layer attached to the surface of a certain optical lens of the zoom lens 820).

In the zoom process, in order to achieve optical zoom, the current practice is to first move the zooming part to a preset position through a driving element; and then, move the focusing part through another driving element to focus, so as to achieve clear imaging of the optical zoom camera module, and complete the optical zoom process in this way. However, with the increasing requirements of consumers for zoom accuracy, zoom speed, and the size of the optical zoom camera module, these design schemes have gradually become difficult to meet the requirements.

Accordingly, in the embodiment of the present invention, the zoom camera module adopts a "parent-child" drive scheme to provide a drive support for zoom drive, and the "parent-child" drive scheme can drive the zoom camera module to achieve optical zoom and/or optical focus adjustment at a relatively faster speed.

Specifically, in the embodiment of the present invention, the drive component 840 comprises: a driver housing 841, a first driving part and a second driving part located within the driver housing 841, wherein the first drive part is movably disposed within the driver housing 841, and the second drive part is movably disposed at the first drive part. In the embodiment of the present invention, the third lens part 821 is fixedly installed in the driver housing 841, the first lens part 823 is suitable for being installed at the first driving part, and the second lens part 823 is suitable for being installed in the second driving part, thus, when the first driving part moves with respect to the driver housing 841, the second driving part can move along with the first driving part with respect to the driver housing 841, that is, when the first driving part is driven within the driver housing 841, the first lens part 822 installed in the first driving part and the second lens part 823 installed in the second driving part can move simultaneously.

Further, the second driving part, which is movably installed at the first driving part, can move with respect to the first driving part after being driven, so that the second lens part 823 can independently move with respect to the first lens part 822 to adjust the effective focal length of the zoom lens 820 of the camera module by adjusting the relative distance between the first lens part 822 and the second lens part 823.

In the embodiment of the present invention, the first driving part is configured to simultaneously drive the first lens part 822 and the second lens part 823 to move along the direction defined by the optical axis after being started, the second driving part is configured to independently drive the second lens part 823 to move along the direction defined by the optical axis after being started, for ease of explanation, this optical variable driving scheme is defined as a "parent-child type", where the main driving part is the first driving part and the assist driving part is the second driving part.

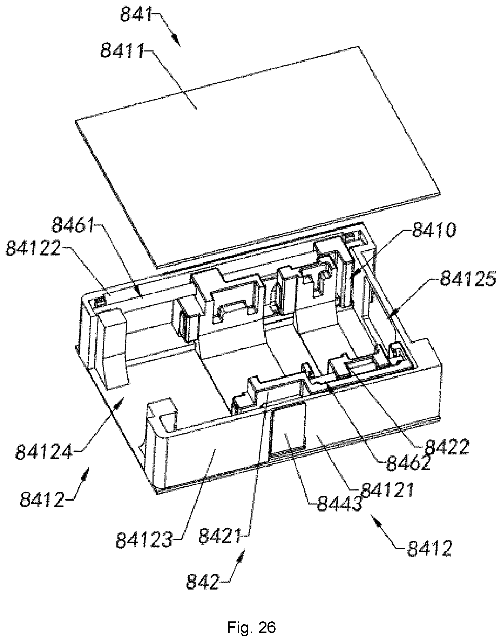

As shown in FIGS. 26 to 32B, in the present invention, the drive component 840 comprises the driver housing 841, the driving carrier 842, and the driving element 843. As shown in FIG. 26, in a specific example of the present invention, the driver housing 841 comprises a top cover 8411 and a base 8412 interlocked with each other, wherein the base 8412 and the top cover 8411 form an accommodating space 8410 for accommodating the driving element 843 and the driving carrier 842 therein.

More specifically, in this specific example, the base 8412 comprises a base bottom 84121, a first base side arm 84122 formed around the base bottom 84121, a second base side arm 84123, an incident light side mounting portion 84124, and the exiting light side mounting portion 84125, wherein the first base side arm 84122 and the second base side arm 84123 are extended upwardly from a first side and a second side of the base bottom 84121, which are opposite to each other, and the incident light side mounting portion 84124 and the exiting light side mounting portion 84125 are extended upwardly from a third side and a fourth side of the base bottom 84121, which are opposite to each other, wherein the first side is parallel to the second side, and the third side is parallel to the fourth side, and the first side (the second side) is perpendicular to the third side (the fourth side). That is, in this embodiment of the present invention, the first base side arm 84122 is fixed at the first side of the base bottom 84121 (i.e., the first side of the drive component 840), the second base side arm 84123 is fixed at the second side of the base bottom 84121 (i.e., the second side of the drive component 840), the incident light side mounting portion 84124 is fixed at one side of the base bottom 84121, which is far away from the photosensitive component 830 (i.e., the third side), and the exiting light side mounting portion 84125 is fixed at another side of the base bottom 84121, which is close to the photosensitive component 830 (i.e., the fourth side). Accordingly, in this specific example, the top cover 8411 is engaged with the tops of the first base side arm 84122, the second base side arm 84123, the incident light side mounting portion 84124, and the exiting light side mounting portion 84125 to form the accommodating space 8410 in cooperation with the top cover 8411.

In one embodiment, the base bottom 84121, the first base side arm 84122, the second base side arm 84123, the incident light side mounting portion 84124, and the exiting light side mounting portion 84125 are integrally formed by injection molding.

Referring to FIG. 23, the incident light side mounting portion 84124 of the base 8412 has a mounting position recessed inwardly, and the third lens part 821 of the zoom lens 820 is fixed to the incident light side mounting portion 84124 by the mounting position of the incident light side mounting portion 84124. The exiting light side mounting portion 84125 of the base 8412 has an accommodating position recessed inwardly, and the photosensitive component 830 is fixed to the base 8412 by being fixed to the exiting light side mounting portion 84125, wherein the accommodating position of the exiting light side mounting portion 84125 is adapted to accommodate a part of the photosensitive component 830, for example, the accommodating position of the exiting light side mounting portion 84125 accommodates the filter element holder, the filter element, and the molded base, so that the length dimension of the camera module can be reduced.

In one embodiment of the present invention, the circuit board body of the photosensitive component 830 is fixed to the exiting light side mounting portion 84125 by an adhesive medium, and the filter element holder of the photosensitive component 830 is fixed to the exiting light side mounting portion 84125 by an adhesive medium. In one embodiment of the present invention, the light inflecting component 810 can also be fixed to the incident light side mounting portion 84124 of the base 8412.

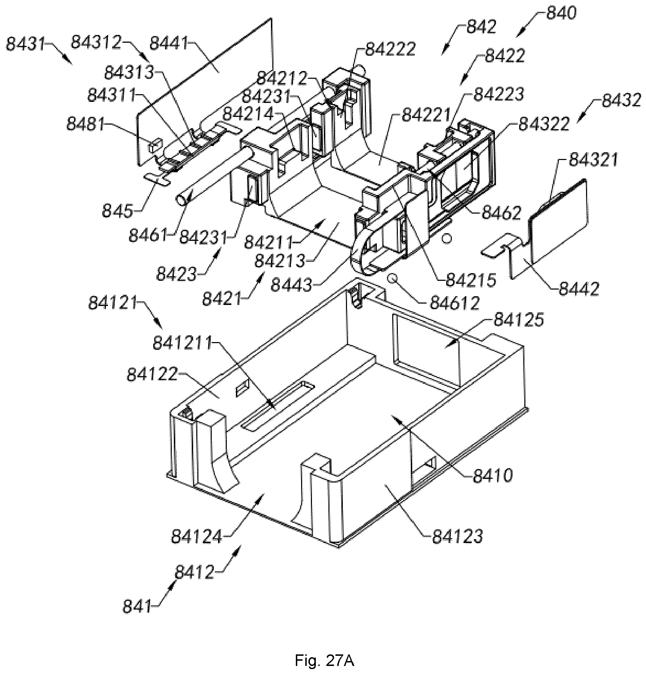

As shown in FIG. 27A, the driving carrier 842 comprises a first carrier 8421 movably installed in the accommodating space 8410 of the driver housing 841 and a second carrier 8422 movably installed at the first carrier 8421, wherein the first carrier 8421 has a lens mounting chamber 84211 for installing the first lens part 822 therein and a carrier mounting chamber 84212 for installing the second carrier 8422 therein. Correspondingly, the driving element 843 comprises a first driving element 8431 and a second driving element 8432, wherein the first driving element 8431 is capable of driving the first carrier 8421 to move with respect to the driver housing 841 along the straight line of the optical axis of the zoom lens 820, thereby simultaneously driving the first lens part 822 and the second carrier 8422 installed with the second lens part 823 to move in the direction defined by the optical axis, wherein the second driving element 8432 is capable of driving the second carrier 8422 to move with respect to the first carrier 8421 in the direction defined by the optical axis, thereby only driving the second lens part 823 to move, in this way, a "parent-child" driving scheme is formed.

In a specific example of the present invention, the first carrier 8421 comprises a first carrier connecting portion 84213, a first carrier side arm 84214 extended upwardly from the first carrier connecting portion 84213 at the first side thereof, and a second carrier side arm 84215 extended upwardly from the first carrier connecting portion 84213 at the second side thereof, wherein the first carrier connecting portion 84213 is extended between the first carrier side arm 84214 and the second carrier side arm 84215 to connect the bottom of the first carrier side arm 84214 and the bottom of the second carrier side arm 84215. In this embodiment of the present invention, the first carrier connecting portion 84213, the first carrier side arm 84214, and the second carrier side arm 84215 form a "u"-shaped mounting chamber and an opening communicating with the mounting chamber at the top of the first carrier 8421, wherein the mounting chamber of the first carrier 8421 has a lens mounting chamber 84211 and a carrier mounting chamber 84212, wherein the lens mounting chamber 84211 is formed by the first carrier connecting portion 84213, the first carrier side arm 84214, and the second carrier side arm 84215, and the carrier mounting chamber 84212 is formed by the first carrier side arm 84214 and the second carrier side arm 84215. Accordingly, through the opening at the top of the first carrier 8421, the first lens part 822 can be installed into the lens mounting chamber 84211 of the first carrier 8421 from the top of the first carrier 8421, and the second carrier 8422 can be installed into the carrier mounting chamber 84212 of the first carrier 8421 from the top of the first carrier 8421.

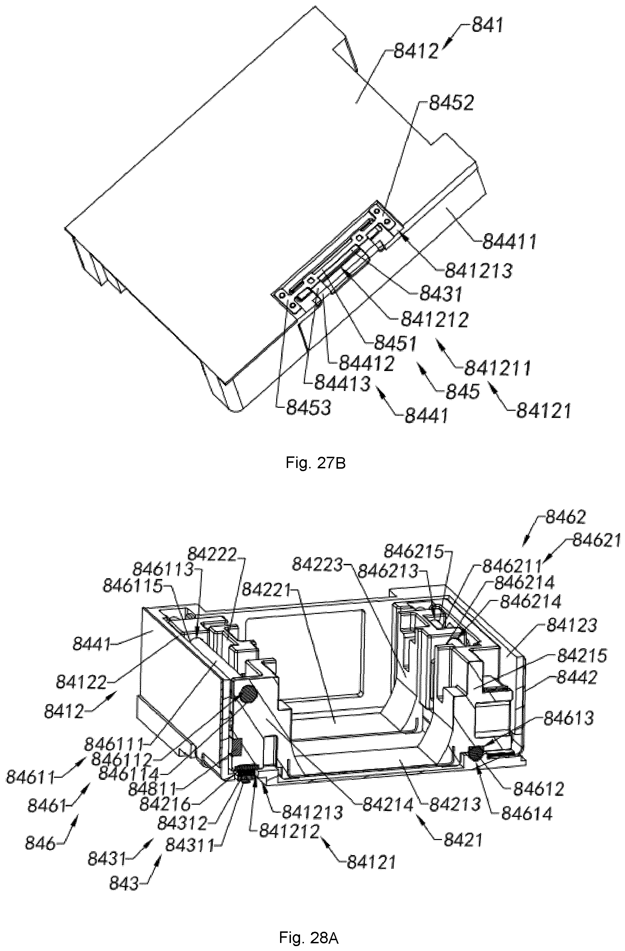

FIG. 28A shows a cross-sectional schematic diagram of the drive component 840, in one embodiment of the present invention, the first carrier connecting portion 84213 comprises a first connecting portion body and a first reinforcing plate, wherein the first reinforcing plate and the first connecting portion body are integrally formed to form the first carrier connecting portion 84213 by insert molding, so that the first reinforcing plate can maintain a strong structural strength under the condition of a relatively thin thickness, which is suitable for enhancing the structural strength of the first carrier connecting portion 84213 and reducing the height of the first carrier 8421, thereby reducing the height of the drive component 840. In a specific example of the present invention, the material of the first reinforcing plate is a metal material such as stainless steel.

In this specific example, the second carrier 8422 comprises a second carrier connecting portion 84221, a third carrier side arm 84222 located at the first side, and a fourth carrier side arm 84223 located at the second side. The second carrier connecting portion 84221 connects the bottom of the third carrier side arm 84222 and the bottom of the fourth carrier side arm 84223 to form a "u"-shaped mounting cavity and an opening at the top of the second carrier 8422, and the second lens part 823 is suitable for being installed in the mounting cavity of the second carrier 8422 from the top of the second carrier 8422 through the opening at the top of the second carrier 8422.

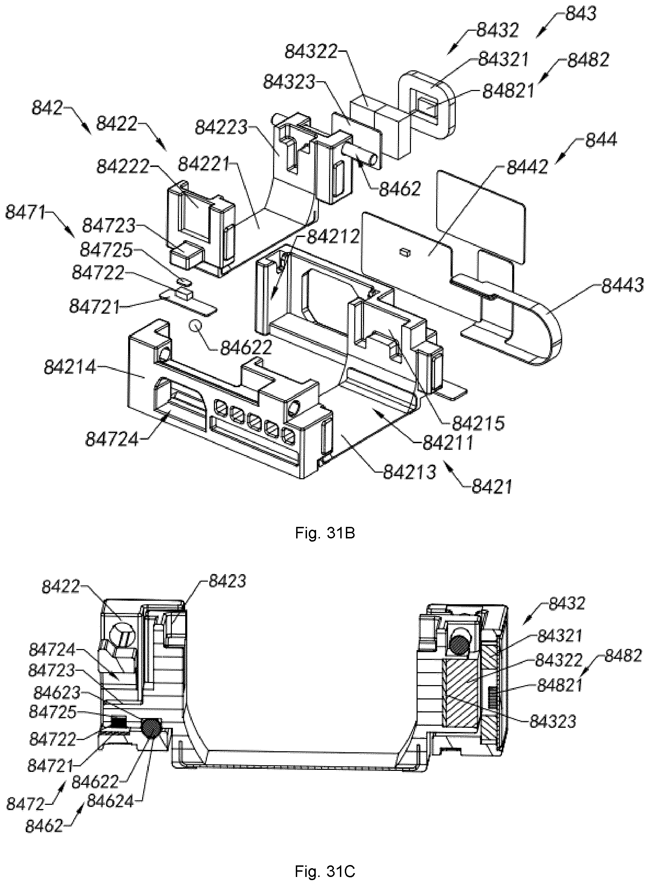

Referring to FIGS. 31B and 31C, in this specific example, the second carrier connecting portion 84221 comprises a second connecting portion body and a second reinforcing plate, wherein the second reinforcing plate and the second connecting portion body are integrally formed to form the second carrier connecting portion 84221 by insert molding, wherein the second reinforcing plate can maintain a strong structural strength with a relatively thin thickness, which is suitable for enhancing the structural strength of the second carrier connecting portion 84221 and reducing the height of the second carrier 8422, thereby reducing the height of the drive component 840. In a specific example of the present invention, the material of the second reinforcing plate is a metal material such as stainless steel.

Preferably, in this embodiment of the present invention, the first carrier side arm 84214 of the first carrier 8421 has a third carrier side arm groove, and the second carrier side arm 84215 of the first carrier 8421 has a fourth carrier side arm groove, wherein the third carrier side arm groove has an opening extended upwardly and inwardly, and the fourth carrier side arm groove has an opening extended upwardly and inwardly, so that when the second carrier 8422 is installed at the first carrier 8421, the third carrier side arm 84222 of the second carrier 8422 can be provided in the third carrier side arm groove of the first carrier side arm 84214, and the fourth carrier side arm 84223 of the second carrier 8422 can be provided in the fourth carrier side arm groove of the second carrier side arm 84215. By defining the third carrier side arm groove and the fourth carrier side arm groove, the width dimension of the drive component 840 can be reduced.

In a specific example of the present invention, the first driving element 8431 is implemented as a piezoelectric actuator, compared to an electromagnetic motor or a shape memory alloy actuator, the piezoelectric actuator is suitable for providing larger driving force to meet the driving force requirements of simultaneously driving the first carrier 8421, the first lens part 822, the second lens part 823, and the second carrier 8422, and the piezoelectric actuator has high driving accuracy and low susceptibility to external magnetic interference, without affecting other electromagnetic driving elements 843.

Specifically, in this embodiment of the present invention, the piezoelectric actuator comprises a piezoelectric driving part 84311 and a friction driving part 84312, wherein the piezoelectric driving part 84311 is made of piezoelectric material and the piezoelectric driving part 84311 can be strained and deformed by applying with two 90° phase-shifted sine signals the piezoelectric driving part 84311 of the first driving element 8431, and the piezoelectric driving part 84311 can undergo resonance by using high-frequency AC voltage. The friction driving part 84312 is drivably connected to the piezoelectric driving part 84311, for example, the friction driving part 84312 is fixed to the piezoelectric driving part 84311, so that the deformation generated by the piezoelectric driving part 84311 can be transmitted to the friction driving part 84312 to drive the first carrier 8421 to move.

In this embodiment of the present invention, the friction driving part 84312 comprises at least one friction head 84313, wherein the first driving element 8431 is in frictional contact with the first carrier 8421 through the at least one friction head 84313 of the friction driving part 84312. The friction driving part 84312 is drivably connected with the piezoelectric driving part 84311, so that when the piezoelectric driving part 84311 is energized, the friction driving part 84312 can be deformed with the deformation of the piezoelectric driving part 84311, thereby driving the at least one friction head 84313 to generate unidirectional oscillatory motion along a predetermined direction (such as the optical axis direction), wherein the friction driving part 84312 provides the driving force for driving the first carrier 8421 to move under the action of the piezoelectric driving part 84311. It is worth mentioning that in this embodiment of the present invention, the number of friction heads 84313 can be multiple, for example, four, so as to make the first driving element 8431 be suitable for stably outputting linear driving force.

In this embodiment of the present invention, the piezoelectric driving part 84311 is provided with a traveling wave signal, the piezoelectric driving part 84311 deforms under the inverse piezoelectric effect to drive the friction driving part 84312 to move in a traveling wave manner, and the deformation of the piezoelectric driving part 84311 is transmitted to the friction driving part 84312, and the driving force for driving the first carrier 8421 is provided through the traveling wave motion of the friction driving part 84312. In another embodiment of the present invention, the piezoelectric driving part 84311 can also be energized by a standing wave signal and the deformation of the piezoelectric driving part 84311 drives the friction driving part 84312 to move in a standing wave manner along a predetermined direction, which is not a limitation of the present invention.

Specifically, in this embodiment of the present invention, the first driving element 8431 is provided at a lower portion of the first carrier 8421, or more specifically, the first driving element 8431 is provided at a bottom of the first carrier 8421. It can be understood that in an internal space of the driver housing 841, the lower portion of the first carrier 8421 has a relatively large available space and does not increase the overall height dimension of the drive component 840, in other words, the first driving element 8431 is provided inside the space of the lower portion of the first carrier 8421 in the driver housing 841, which is advantageous for improving the utilization of the internal space of the drive component 840, making the drive component 840 have a more compact structure.

Accordingly, in this embodiment of the present invention, the at least one friction head 84313 of the first driving element 8431 is in frictional contact with the bottom surface of the side arm of the first carrier 8421, that is, the first driving element 8431 is provided on the bottom surface of the first carrier side arm 84214 of the first carrier 8421 and the first driving element 8431 is fixed at the driver housing 841, for example, in this specific example, the first driving element 8431 is fixed at the base bottom 84121 of the base 8412.

In one embodiment of the present invention, in order to increase the frictional contact force between the first driving element 8431 and the first carrier 8421, the first carrier side arm 84214 further comprises a friction member 84216 provided on the bottom surface of the first carrier side arm 84214, wherein the friction member 84216 is corresponded to the first driving element 8431 to provide a friction surface for the first driving element 8431. Accordingly, the friction member 84216 is capable of providing a larger frictional force, and the first driving element 8431 drives the friction member 84216 to move by frictional contact between the friction driving part 84312 and the friction member 84216, thereby driving the first carrier 8421 to move along a predetermined direction, and the friction member 84216 has a length along the axial direction greater than the moving stroke of the first carrier 8421.

In a specific example, the friction member 84216 has a rectangular structure, which is fixed to the bottom surface of the first carrier side arm 84214 through a groove formed upwardly on the bottom surface of the first carrier side arm 84214. In other specific examples, the friction member 84216 is a coating formed on the bottom surface of the first carrier side arm 84214 through spraying, spinning, or other methods.

As shown in FIG. 27B, in the embodiment of the present invention, the drive component 840 further comprises a conductive component 844 for electrically connecting the driving element 843 and the photosensitive component 830, wherein the conductive component 844 comprises a first circuit board 8441 for electrically connecting the first driving element 8431 with the photosensitive component 830 or an external power source such as a mobile electronic device. More specifically, in the embodiment of the present invention, the first circuit board 8441 is implemented as a first flexible board, and the first flexible board is electrically connected with the first driving element 8431 and the circuit board 831 of the photosensitive component 830. For example, in a specific example of the present invention, the first flexible board is attached to the outer side surface of the first base side arm 84122 by adhesive, thereby being fixed to the base 8412.

In order to reduce the overall height dimension of the drive component 840, further, in a specific example of the present invention, the base bottom 84121 has a base through groove 841211 passing through an inner bottom surface and an outer bottom surface thereof, wherein the first driving element 8431 is provided in the base through groove 841211. That is, in this embodiment of the present invention, the base bottom 84121 has a base through groove 841211 defined at a position opposite to the first driving element 8431, and the base through groove 841211 has a base receiving through groove 841212 for receiving at least a part of the piezoelectric driving part 84311 of the first driving element 8431 and a base receiving recess 841213 for receiving a part of the first flexible board (that is, at least a part of the first circuit board 8441 is provided in the base receiving recess 841213), the base receiving through groove 841212 is communicated with the base receiving recess 841213, and the base receiving recess 841213 is extended to the bottom surface of the base bottom 84121. In a specific example of the present invention, the size of the base receiving recess 841213 is larger than that of the base receiving through groove 841212.

Correspondingly, the first driving element 8431 exposes the piezoelectric driving part 84311 of the first driving element 8431 through the base through groove 841211 of the base 8412, and the first flexible board attached on the first base side arm 84122 is electrically connected to the first driving element 8431 by being bent, that is, in this embodiment, at least a part of the first circuit board 8441 is disposed within the base receiving recess 841213 and electrically connected to the first driving element 8431. In a specific example of the present invention, the first flexible board comprises a first vertical portion 84411, a first bending portion 84412 and a first electric connection portion 84413 integrated with each other, wherein the first bending portion 84412 connects the first vertical portion 84411 and a first electric connection portion 84413, and the plane of the first vertical portion 84411 is almost perpendicular to the plane of the first electric connection portion 84413 by bending the bending portion 84412 at an angle of nearly 90°, so that , wherein the first electric connection portion 84413 comprises at least two electric connection terminals.

The first vertical portion 84411 is attached on the outer surface of the first base side arm 84122 of the base 8412 and is electrically connected to the piezoelectric driving part 84311 of the first driving element 8431 through at least two electric connection ends of the first electric connection portion 84413 extended from the bottom side of the first flexible board in a direction perpendicular to the first vertical portion 84411, wherein the at least two electric connection ends of the first flexible board are at least partially accommodated in the base receiving recess 841213, and each of the at least two electric connection ends of the first flexible board can realize conduction of at least one conductive circuit. The first flexible board can be composed of a flexible circuit board that is easy to bend; or it can be composed of a flexible and rigid composite board that can only be partially bent, for example, the first vertical portion 84411 is composed of a rigid circuit board, and the first bending portion 84412 and the first electric connection portion 84413 are composed of the flexible circuit board.

That is, in the embodiment of the present invention, by defining the base through groove 841211 on the base bottom 84121, not only the first driving element 8431 can be accommodated therein to further improve the space utilization of the driver housing 841, the overall height dimension of the drive component 840 can be reduced; and, the piezoelectric driving part 84311 of the first driving element 8431 is exposed through the base through groove 841211, which also facilitates the layout of the first circuit board 8441. That is, in the embodiment of the present invention, by installing the first driving element 8431 in the base through groove 841211, not only the installation structure design of the first driving element 8431 can be optimized, but also the circuit structure design of the first driving element 8431 can be simplified.

In order to ensure that the friction driving part 84312 of the first driving element 8431 can drive the first carrier 8421 to move through friction contact, it is necessary to apply a certain pre-pressure force between the friction driving part 84312 of the first driving element 8431 and the first carrier 8421, so that the friction driving part 84312 can be pressed against the friction member 84216 of the first carrier side arm 84214. Accordingly, the drive component 840 comprises a pre-pressure force component 845 which is provided in the base through groove 841211 of the base bottom 84121 to provide a pre-pressure force for enabling the friction driving part 84312 to be in contact with the first carrier 8421 frictionally.

In one embodiment of the present invention, the pre-pressure force component 845 can be a spring, the spring comprises a first spring fixing portion 8451, a spring body 8452, and a second spring fixing portion 8453 integrated with each other. The spring is fixed in the base receiving recess 841213 of the base bottom 84121 by adhesive bonding or thermal riveting. For example, in the example shown in FIG. 27B, the first spring fixing portion 8451 and the second spring fixing portion 8453 are fixed at two opposite sides of the base through groove 841211, so that the pre-pressure force component 845 is bridged in the base through groove 841211.

Correspondingly, the pre-pressure force component 845 is directly abutted against the first driving element 8431 through the spring body 8452 or indirectly abutted against the first driving element 8431 through pressing the spring body 8452 on the first soft board to provide a pre-pressure force to the first driving element 8431, so that the friction driving part 84312 of the first driving element 8431 and a side arm (friction member 84216) of the first carrier 8421 can be abutted against each other. The spring body 8452 can be abutted to the first driving element 8431 by bonding or contacting. In a specific example, the spring body 8452 comprises a first spring abutting part and a second spring abutting part symmetrically distributed, and the first spring abutting part and the second spring abutting part are respectively abutted against a rear surface of the first driving element 8431 (here, a side surface of the friction driving part 84312 of the first driving element 8431 is the front surface, and an opposite side surface is the rear surface), so that the spring body 8452 can be abutted to the first driving element 8431.

It should be noted that, in the embodiment of the present invention, the pre-pressure force component 845 has a sheet-like structure, that is, the thickness dimension of the pre-pressure force component 845 itself is relatively thin, which also helps to reduce the overall height dimension of the drive component 840.

It is worth mentioning that in some embodiments of the present invention, the first driving element 8431 is bonded to the base bottom 84121 through an adhesive medium, and the elasticity of the adhesive medium can provide a pre-pressure force to the first driving element 8431, in other words, the adhesive medium forms a pre-pressure force component 845 that provides a pre-pressure force to the first driving element 8431.

In one embodiment of the present invention, the driver housing 841 further comprises a light-shielding component (not shown in the FIGS. ) that is used to prevent dirt, stray light, etc. from entering the driver housing 841 through the base through groove 841211, wherein the light-shielding component is fixed to the base bottom 84121 and covers the base through groove 841211, the pre-pressure force component 845 and the first driving element 8431.

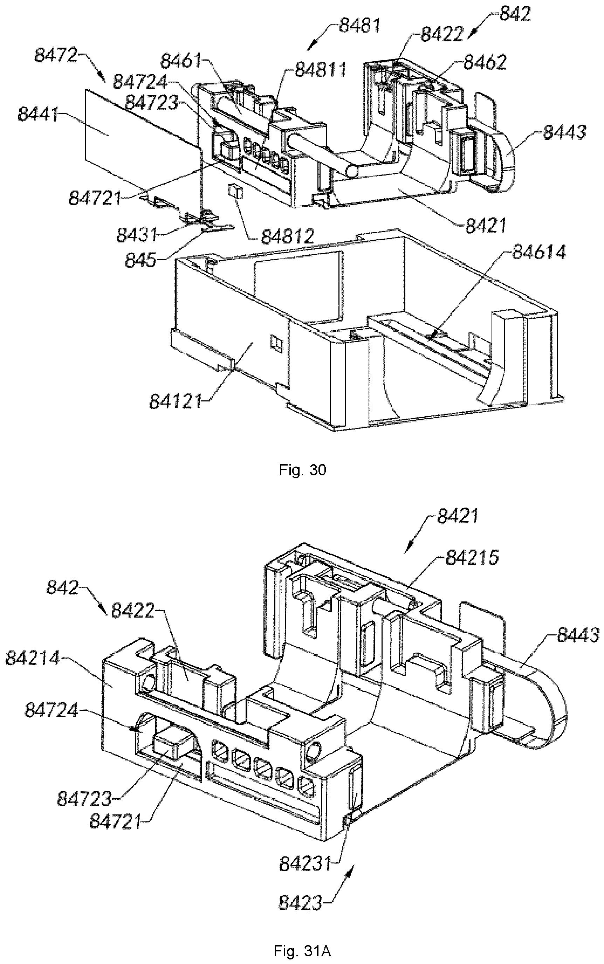

As mentioned above, when the first driving element 8431 drives the first carrier 8421 to move with respect to the driver housing 841, the first carrier 8421 is capable of simultaneously carrying the second carrier 8422 to move with respect to the driver housing 841, and the second carrier 8422 can further move with respect to the first carrier 8421. Specifically, as shown in FIG. 31A to FIG. 31B, the second carrier 8422 is installed in the carrier mounting chamber 84212 of the first carrier 8421 along the height direction, and the first carrier 8421 is driven to move along a straight line direction where the optical axis of the first carrier 8421 is located through the second driving element 8432, which is provided between the second carrier 8422 and the first carrier 8421.

Preferably, in this embodiment of the present invention, the second driving element 8432 is arranged at the second side of the drive component 840, and the second driving element 8432 and the first driving element 8431 are respectively arranged at two sides of the drive component 840. Of course, in some examples of the present invention, the second drive component 840 and the first driving element 8431 can also be arranged at the same side of the drive component 840.

In one embodiment of the present invention, the second driving element 8432 is implemented as a coil-magnet pair, which is a voice coil motor (VCM). The voice coil motor is a mature motor solution in the prior art, with high control accuracy, fast response, and low noise, and its thrust is relatively small, the stroke is short, and it is easily affected by electromagnetic interference. Therefore, in the present invention, a piezoelectric actuator is used as the first driving element 8431 to simultaneously drive the first carrier 8421, the second driving element 8432 and the second carrier 8422, and a coil-magnet pair is used as the second driving element 8432 to drive the second carrier 8422 to move, thereby utilizing the characteristics of the piezoelectric actuator, which does not generate a magnetic field and has a large thrust and long stroke, in conjunction with the coil-magnet pair, a "parent-child" optical zoom is achieved.

In a specific example of the present invention, the second driving element 8432 comprises a driving magnet 84321 fixed on an outer side surface of the fourth carrier side arm 84223 and a driving coil 84322 directly or indirectly fixed at the second carrier side arm 84215 and corresponded to the driving magnet 84321. Specifically, the fourth carrier side arm 84223 has a driving magnet groove concaved inwardly on the outer side surface of the fourth carrier side arm 84223, and the driving magnet 84321 is fixed on the outer side surface of the fourth carrier side arm 84223 by being mounted in the driving magnet groove, and the driving magnet 84321 is located in the driving magnet groove of the fourth carrier side arm 84223 and is corresponded to the driving coil 84322.

In one embodiment of the present invention, the second driving element 8432 further comprises a driving magnetic conductive plate 84323 fixed to the driving magnet 84321 and is far away from the driving coil 84322, and the driving magnetic conductive plate 84323 is fixed in the driving magnet groove of the second carrier side arm 84215 by adhesive or insert molding, wherein the driving magnet 84321 is fixed at the second carrier side arm 84215 by being fixed on the driving magnetic conductive plate 84323, and a magnetic attractive force is generated between the driving magnet 84321 and the driving magnetic conductive plate 84323 adsorbs the driving magnet 84321.

It is worth mentioning that in another embodiment of the present invention, the second driving element 8432 comprises a driving magnet 84321 fixed at the second carrier side arm 84215 and a driving coil 84322 disposed and corresponded to the driving magnet 84321 and fixed on the outer side surface of the fourth carrier side arm 84223.

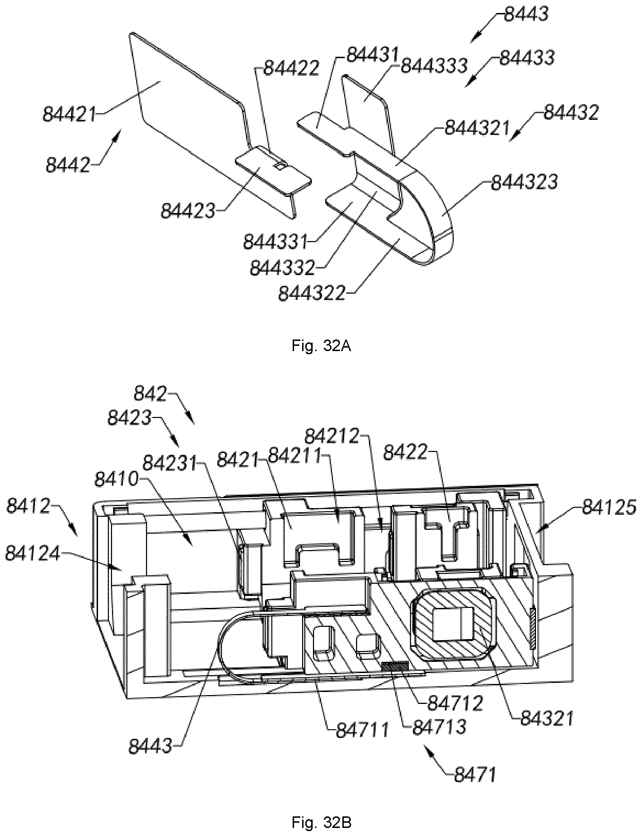

Referring to FIGS. 32A and 32B, the conductive component 844 further comprises a second conductive component for electrically connecting the driving coil 84322 to the photosensitive component 830 or an external power source such as a mobile electronic device, wherein the second conductive component comprises a second electric connection board 8442 for fixing and electrically connecting the driving coil 84322, and a third electric connection board 8443 for electrically connecting the second electric connection board 8442 to the photosensitive component 830 or an external power source such as a mobile electronic device.

More specifically, in the embodiment of the present invention, the second circuit board is implemented as a second flexible board, and the third circuit board is implemented as a third flexible board, wherein the second flexible board comprises an attaching portion 84421, a second bending portion 84422, and a second connecting portion 84423, wherein the attaching portion 84421 is used for attaching the driving coil 84322, and the second connecting portion 84423 is used for electrically connecting the third flexible board, the second bending portion 84422 is used to connect the attaching portion 84421 with the second connecting portion 84423, and the second flexible board bends at 90° through the second bending portion 84422, so that the plane where the second connecting portion 84423 is located is perpendicular to the plane where the attaching portion 84421 is located. The third flexible board comprises a flexible board movable portion 84431, a flexible board deformation portion 84432, and a flexible board fixing portion 84433 integrated with each other, wherein the flexible board deformation portion 84432 comprises a movable end deformation portion 844321 connected to the flexible board movable portion 84431, a fixed end deformation portion 844322 connected to the flexible board fixing portion 84433, and a connecting deformation portion 844323 for connecting the movable end deformation portion 844321 and the fixed end deformation portion 844322. More specifically, in the embodiment of the present invention, the flexible board fixing portion 84433 comprises a third horizontal portion 844331, a third bending portion 844332 and a third vertical portion 844333 integrated with each other, wherein the third bending portion 844332 connects the third horizontal portion 844331 and the third vertical portion 844333, and the flexible board fixing portion 84433 bends at 90° through the third bending portion 844332, so that the plane where the third vertical portion 844333 is located is perpendicular to the plane where the third horizontal portion 844331 is located.

Correspondingly, in this embodiment of the present invention, at the side where the imaging light of the drive component 840 is incident (the incident light side), the second carrier side arm 84215 has a flexible board fixing position, and the second connecting portion 84423 of the second flexible board is fixed at the flexible board fixing position, wherein the third flexible board is fixed and is electrically connected with the second connecting portion 84423 of the second flexible board through the flexible board movable portion 84431, so as to electrically connect the second flexible board with the photosensitive component 830 or an external power source such as a mobile electronic device through the third flexible board. In this way, when the first driving element 8431 drives the first carrier 8421 to move along the straight line where the zoom lens 820 is located, the first carrier 8421 drives the second flexible board to move with respect to the base 8412 of the driver housing 841, and the flexible board fixing portion 84433 of the third flexible board is fixed to the base 8412 of the driver housing 841, and the flexible board movable portion 84431 of the third flexible board is fixed to the second flexible board, thereby allowing the flexible board movable portion 84431 to move with respect to the flexible board fixing portion 84433.

In order to reduce the resistance caused by the movement of the third flexible board to the first carrier 8421, the flexible board deformation portion 84432 is suitable to achieve the above purpose through its own deformation, specifically, the movable end deformation portion 844321 and the fixed end deformation portion 844322 are parallel to each other and are respectively connected above and below the connecting deformation portion 844323, wherein the connecting deformation portion 844323 is curved in an arc shape, and in a specific example of the present invention, the connecting deformation portion 844323 is bent in a semi-circular arc shape. When the first carrier 8421 moves towards the incident light side (i.e., the direction which is far away from the photosensitive component 830), the length of the movable end deformation portion 844321 is decreased, while the length of the fixed end deformation portion 844322 is increased; when the first carrier 8421 moves towards the exiting light side of the drive component 840 (i.e., towards the direction which is close to the photosensitive component 830), the length of the movable end deformation portion 844321 is increased, while the length of the fixed end deformation portion 844322 is decreased.

It should be noted that, in the embodiment of the present invention, when the first carrier 8421 is driven by the first driving element 8431, there is an overlap between the movable end deformation portion 844321 of the flexible board deformation portion 84432 and the fixed end deformation portion 844322 of the flexible board deformation portion 84432 in the height direction defined by the drive component 840, that is, the movable end deformation portion 844321 and the flexible board deformation portion 84432 are at least partially overlapped with each other in the height direction defined by the drive component 840. Further, in the embodiment of the present invention, the movable end deformation portion 844321, the connecting deformation portion 844323 and the fixed end deformation portion 844322 of the flexible board deformation portion 84432 form a u-shaped structure. Preferably, the u-shaped structure has an opening facing the photosensitive component 830.

In one embodiment of the present invention, when the first carrier 8421 moves, the shape of the connecting deformation portion 844323 of the flexible board deformation portion 84432 remains unchanged, and the sum of the lengths of the fixed end deformation portion 844322 and the movable end deformation portion 844321 is greater than the maximum stroke of the first carrier 8421, in this way, the resistance caused by the third flexible board to the movement of the first carrier 8421 does not increase. In another embodiment of the present invention, when the first carrier 8421 moves, the shape of the connecting deformation portion 844323 of the flexible board deformation portion 84432 can be deformed, so that the length of the third flexible board can be relatively shorter, in this way, the space dimension reserved for the third flexible board by the drive component 840 can be smaller, thereby reducing the length dimension of the drive component 840.

The first flexible board can be composed of a flexible circuit board that is easy to bend; or it can be composed of a flexible and rigid composite board that can only be partially bent, for example, the second bending portion 84422 is made of a flexible circuit board, while the attaching portion 84421 and the second connecting portion 84423 are made of a rigid circuit board. The third flexible board can be made of a flexible circuit board that is easy to bend; it can also be made of a flexible and rigid composite board that can only be partially bent, for example, the third bending portion 844332 of the flexible board deformation portion 84432 and the third bending portion 844332 of the flexible board fixing portion 84433 are made of a flexible circuit board, and the flexible board movable portion 84431, the third horizontal portion 844331 and the third vertical portion 844333 of the flexible board fixing portion 84433 are made of a rigid circuit board.

In one embodiment of the present invention, as shown in FIG. 26 and FIG. 28A, the second base side arm 84123 of the base 8412 has a third flexible board through hole, wherein the third vertical portion 844333 of the third flexible board passes through the third flexible board through hole and is extended to an outer side of the second base side arm 84123 of the base bottom 84121 and attached to the outer side of the second base side arm 84123 at an inner side of the base bottom 84121 through the bending of the third bending portion 844332 of the third flexible board, thereby being suitable for being connected to an external power supply such as the photosensitive component 830 or a mobile electronic device.

Specifically, in this embodiment of the present invention, the second carrier side arm 84215 has a coil through hole defined at a position opposite to the driving magnet 84321, wherein the coil through hole is extended from the fourth carrier side arm groove of the second carrier side arm 84215 to the outer surface of the second carrier side arm 84215, in other words, the coil through hole connects the fourth carrier side arm groove and the outer surface of the second carrier side arm 84215. The driving coil 84322 is attached on the attaching portion 84421 of the second flexible board and is fixed to the outer surface of the second carrier side arm 84215 through the attaching portion 84421 by adhesive, wherein the driving coil 84322 is corresponded to the driving magnet 84321 through the coil through hole, and at least a part of the driving coil 84322 is accommodated in the coil through hole. The second flexible board further comprises a driving reinforcing plate attached on the outer side of the attaching portion 84421 (the driving coil 84322 is mounted on the inner side, and the outer side is the opposite side) , which enhances the structural strength of the attaching portion 84421 of the second flexible board and protects the attaching portion 84421.

In order to make the movement of the driving carrier 842 more stable and smooth, in this embodiment of the present invention, the drive component 840 further comprises a guiding component 846 for providing guidance and support to the driving carrier 842, specifically, in this embodiment of the present invention, the guiding component 846 comprises a first guiding device 8461 and a second guiding device 8462.

As shown in FIGS. 26, 28A to 29B, the first guiding device 8461 comprises a first guiding element 84611 for guiding the first carrier 8421 and a first supporting component 84612 for supporting the first carrier 8421, wherein the first guiding element 84611 is adapted to guide the first carrier 8421 to move along the direction defined by the optical axis within the driver housing 841. Referring to FIG. 26, in this embodiment of the present invention, the first guiding element 84611 is implemented as a first guiding rod 846111. Further, as shown in FIG. 26, at a first side of the drive component 840, the incident light side of the base 8412 has a first guiding rod fixing position, and the exiting light side attaching portion 84125 of the base 8412 has a second guiding rod fixing position, wherein the first carrier side arm 84214 has at least one guiding hole therein, and the first guiding rod 846111 passes through the at least one guiding hole of the first carrier side arm 84214 and is fixed to the first guiding rod fixing position and the second guiding rod fixing position through two ends of the first guiding rod 846111, thereby being fixed at the first side of the base 8412. That is, in this embodiment of the present invention, the first guiding element 84611 passes through the first guiding hole and is fixed to two opposite sides of the driver housing 841.

In one specific example of the present invention, the first carrier side arm 84214 has two guiding holes coaxially distributed: a first guiding hole 846112 and a second guiding hole 846113, which are respectively located at two ends of the first carrier 8421, wherein the first guiding rod 846111 passes through the first guiding hole 846112 and the second guiding hole 846113, and is fixed to the first guiding rod fixing position and the second guiding rod fixing position through two ends of the first guiding rod 846111, thereby being fixed to the first side of the base 8412. In one embodiment of the present invention, the first guiding hole 846112 and the second guiding hole 846113 have the same size and the same height, thereby keeping the first guiding rod 846111 parallel to the optical axis of the zoom lens 820.

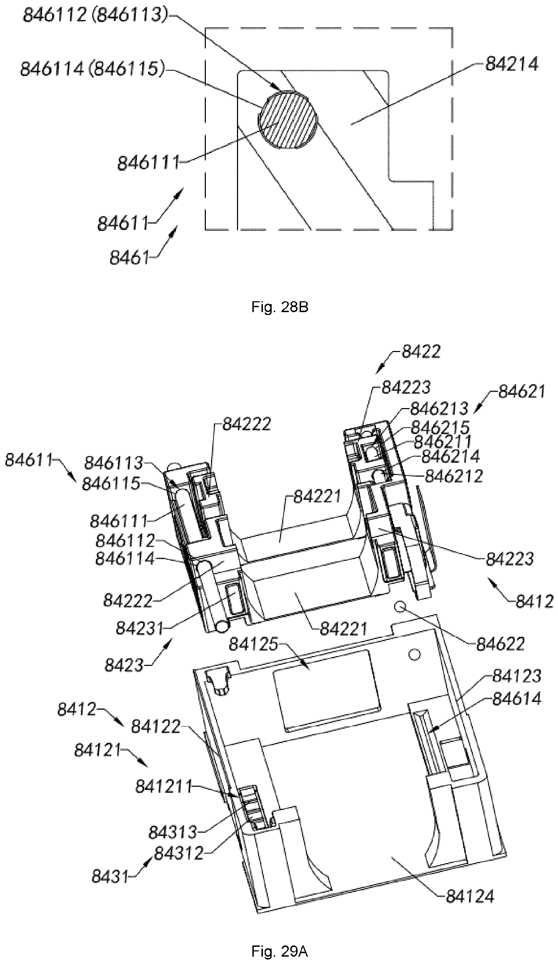

The first carrier 8421 is slidably fixed at the first guiding rod 846111 through the first guiding hole 846112 and the second guiding hole 846113 at the first carrier side arm 84214, wherein the first guiding rod 846111 is parallel to the optical axis direction of the zoom lens 820, wherein when the first driving element 8431 drives the first carrier 8421 to move, the first carrier 8421 moves along the optical axis, and the first guiding rod 846111 acts as a guide. As shown in FIG. 28B, in a specific example of the present invention, the first carrier side arm 84214 forms a first guiding hole wall of the first guiding hole 846112, which comprises at least three first protruding portions 846114 protruding inwardly, and the at least three first protruding portions 846114 are in contact with the first guiding rod 846111, so that when the first carrier 8421 moves along the optical axis, the friction between the first guiding rod 846111 and the first guiding hole wall can be reduced to reduce the driving resistance; the first carrier side arm 84214 forms a second guiding hole wall of the second guiding hole 846113, which comprises at least three second protruding portions 846115 protruding inwardly, and the at least three second protruding portions 846115 are in contact with the first guiding rod 846111, so that when the first carrier 8421 moves along the optical axis, the friction between the first guiding rod 846111 and the second guiding hole wall can be reduced to reduce the driving resistance. In one embodiment of the present invention, the at least three first protruding portions 846114 and the at least three second protruding portions 846115 have the same height of inward protrusion, so as to keep the first guiding rod 846111 parallel to the optical axis of the zoom lens 820.

It should be noted that, in this embodiment of the present invention, the first guiding element 84611 and the first driving element 8431 are located at the first side of the first carrier 8421, and the first guiding element 84611 is positioned above the first driving element 8431, that is, the first guiding rod 846111 and the first driving element 8431 are located at the first side of the drive component 840 and the first guiding rod 846111 is positioned above the first driving element 8431, so that when the first driving element 8431 drives the first carrier 8421 to move, the possibility of the first carrier 8421 rotating around the first guiding rod 846111 and causing positional deviation can be reduced.

In one embodiment of the present invention, as shown in FIG. 28A, specifically, in this embodiment of the present invention, the position the first driving element 8431 acts on the first carrier 8421 is aligned with the center of the cross-section of the first guiding element 84611, or, the position the first driving element 8431 acts on the first carrier 8421 is located at one side of the cross-section center of the first guiding element 84611, which is far away from the optical axis, wherein the friction contact point between the friction driving part 84312 and the first carrier 8421 is the point of action the first driving element 8431 acts on the first carrier 8421. That is to say, in this embodiment of the present invention, in a vertical direction perpendicular to the base bottom 84121, the center of the friction driving part 84312 of the first driving element 8431 is aligned with the axis of the first guiding rod 846111, and/or the center of the friction driving part 84312 of the first driving element 8431 is located at an outer side (the first side, i.e., the side away from the optical axis of the zoom lens 820) of the axis of the first guiding rod 846111, so that the pressure of the first driving element 8431 on the first carrier 8421 does not cause the first carrier 8421 to rotate around the first guiding rod 846111. Specifically, the center of the at least one friction head 84313 of the friction driving part 84312 is aligned with the axis of the first guiding rod 846111, and/or the center of the at least one friction head 84313 of the friction driving part 84312 is located at the outer side (the first side, i.e., the side away from the optical axis of the zoom lens 820) of the axis of the first guiding rod 846111.

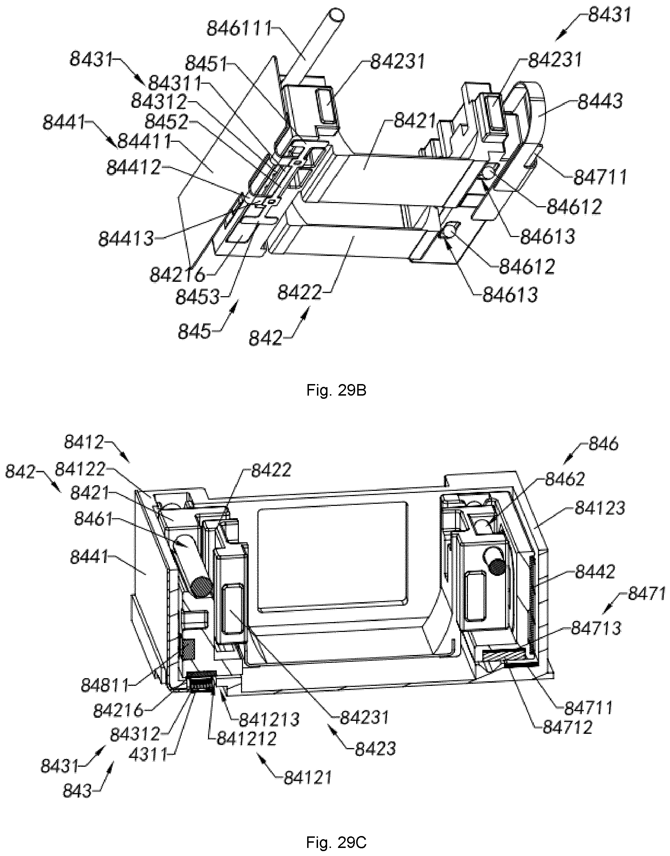

Referring to FIG. 29A and FIG. 29B, in the embodiment of the present invention, the bottom surface of the second carrier side arm 84215 of the first carrier 8421 has a first upper groove and a second upper groove extended along the optical axis direction (i.e., the length direction of the drive component 840) of the zoom lens 820 and are arranged separating from each other, wherein the first upper groove and the second upper groove form a first upper track 84613, and the inner bottom surface of the base bottom 84121 has a first lower track 84614 extended along the optical axis direction (i.e., the length direction of the drive component 840) of the zoom lens 820. Accordingly, in the embodiment of the present invention, the first supporting component 84612 is provided between the first upper track 84613 and the first lower track 84614 to support the first carrier 8421 and maintain the height position stability of the first carrier 8421.

It should be noted that, in this embodiment of the present invention, the first supporting component 84612 and the first guiding rod 846111 are located at two opposite sides of the first carrier 8421, more specifically, the first supporting component 84612 and the first guiding rod 846111 are respectively located at the first and second sides of the first carrier 8421, which are opposite to each other. More specifically, in this embodiment of the present invention, the first supporting component 84612 is located at the second side of the first carrier 8421, and the first guiding rod 846111 is located at the first side of the first carrier 8421. Further, the first guiding rod 846111 is located at an upper portion of the first carrier 8421, and the first supporting component 84612 is located at a lower portion of the first carrier 8421, so that the first guiding rod 846111 and the first supporting component 84612 provide relative stability and balance to the first carrier 8421 from diagonally opposite positions on the upper and lower portions of the first carrier 8421.

In one embodiment of the present invention, the first supporting component 84612 is implemented as a rolling ball, and the first supporting component 84612 comprises at least one rolling ball, specifically, the number of rolling balls in the first supporting component 84612 is two, the two rolling balls of the first supporting component 84612 are positioned between the bottom surface of the second carrier side arm 84215 of the first carrier 8421 and the top surface of the base bottom 84121, thereby supporting the first carrier 8421 and maintaining the height position of the first carrier 8421 stable, avoiding rotation of the first carrier 8421 around the first guiding rod 846111, and reducing the frictional resistance when the first carrier 8421 moves by rotating the rolling balls.

Specifically, the first upper track 84613 and the first lower track 84614 are corresponded to each other to form a first ball track, wherein the two rolling balls of the first supporting component 84612 are respectively provided between the first upper groove and the first lower track 84614, and between the second upper groove and the first lower track 84614, and by the extension direction of the first lower track 84614, at least two rolling balls of the first supporting component 84612 can provide guiding when the first carrier 8421 moves. In a specific example of the present invention, referring to FIG. 28A, the cross-section of the first upper groove and the second upper groove is rectangular, and the cross-section of the first lower track 84614 is trapezoidal, so that there are only three contact points between the two rolling balls of the first supporting component 84612 and the first ball track, which reduces the contact area while maintaining a good ball positioning effect.

In other embodiments of the present invention, at least one rolling ball of the first supporting component 84612 can be fixed to the first upper track 84613 or the first lower track 84614 by adhesive or welding, in this way, the at least one rolling ball can provide smaller friction resistance and avoid the problem of abnormal noise caused by the at least one rolling ball in the camera module.

In other embodiments of the present invention, the first supporting component 84612 can also be implemented as other components, such as a slider. The first supporting component 84612 comprises at least one slider, and the at least one slider of the first supporting component 84612 protrudes downwardly from the bottom surface of the second carrier side arm 84215 to reduce the friction resistance when the at least one slider of the first supporting component 84612 slides between the first lower track 84614 and the first carrier 8421 with respect to the base bottom 84121. Alternatively, the at least one slider of the first supporting component 84612 protrudes upwardly from the top surface of the base bottom 84121 to reduce the friction resistance when the at least one slider of the first supporting component 84612 slides between the first upper track 84613 and the first carrier 8421 with respect to the base bottom 84121.

As shown in FIG. 31A and FIG. 31C, the second guiding device 8462 for guiding and supporting the second carrier 8422 comprises a second guiding element 84621 for guiding the second carrier 8422 and a second supporting component 84622 for supporting the second carrier 8422 at the first carrier 8421. Specifically, in this embodiment of the present invention, the second guiding element 84621 is implemented as a second guiding rod 846211 extended along a direction defined by the optical axis.

More specifically, as shown in FIG. 31A, in this embodiment of the present invention, at the second side of the drive component 840, a third guiding rod and a fourth guiding rod fixing position is provided at two ends of the fourth carrier side arm groove along the optical axis direction, wherein the fourth carrier side arm 84223 has at least one guiding hole therein, and the second guiding rod 846211 passes through the at least one guiding hole of the fourth carrier side arm 84223 and is fixed to the third guiding rod fixing position and the fourth guiding rod fixing position through two ends of the second guiding rod 846211, thereby being fixed in the fourth carrier side arm groove. That is to say, in this embodiment of the present invention, the second guiding rod 846211 is provided along the direction defined by the optical axis and is arranged in an upper portion of the second carrier 8422.

In a specific example of the present invention, the fourth carrier side arm 84223 has two guiding holes distributed coaxially: the third guiding hole 846212 and the fourth guiding hole 846213, wherein the third guiding hole 846212 and the fourth guiding hole 846213 are respectively located at the two ends of the fourth carrier side arm 84223 of the second carrier 8422, wherein the second guiding rod 846211 passes through the third guiding hole 846212 and the fourth guiding hole 846213, and is fixed to the third guiding rod fixing position and the fourth guiding rod fixing position through two ends of the second guiding rod 846211, thereby being fixed at the second side of the base 8412. The second guiding rod 846211 and the first guiding rod 846111 are respectively arranged on two sides of the drive component 840. In one embodiment of the present invention, the third guiding hole 846212 and the fourth guiding hole 846213 have the same size and the same height, thereby keeping the second guiding rod 846211 parallel to the optical axis of the zoom lens 820 and the first guiding rod 846111.

The second carrier 8422 is slidably fixed to the second guiding rod 846211 through the third guiding hole 846212 and the fourth guiding hole 846213 located at the fourth carrier side arm 84223, wherein the second guiding rod 846211 is parallel to the optical axis direction of the zoom lens 820, so that when the second driving element 8432 drives the second carrier 8422 to move, the second carrier 8422 moves in a straight line direction along the optical axis, and the second guiding rod 846211 plays a guiding role.

As shown in FIG. 31C, in a specific example of the present invention, the fourth carrier side arm 84223 defines a third guiding hole wall of the third guiding hole 846212, which comprises at least three third protruding portions 846214 protruded inwardly, wherein the at least three third protruding portions 846214 are in contact with the second guiding rod 846211, so that when the second carrier 8422 moves along the optical axis, the friction between the second guiding rod 846211 and the third guiding hole wall can be reduced, thereby reducing the driving resistance; the fourth carrier side arm 84223 defines a fourth guiding hole wall of the fourth guiding hole 846213, which comprises at least three fourth protruding portions 846215 protruded inwardly, wherein the at least three fourth protruding portions 846215 are in contact with the second guiding rod 846211, so that when the second carrier 8422 moves along the optical axis, the friction between the second guiding rod 846211 and the fourth guiding hole wall can be reduced, thereby reducing the driving resistance.

In one embodiment of the present invention, the at least three third protruding portions 846214 and the at least three fourth protruding portions 846215 have the same height of inward protrusion, so as to keep the second guiding rod 846211 parallel to the optical axis of the zoom lens 820 and the first guiding rod 846111. In the present invention, the second guiding rod 846211 and the first guiding rod 846111 are respectively located at two opposite sides of the drive component 840, so that the internal component arrangement of the drive component 840 is more reasonable, avoiding excessive lateral dimensions of the drive component 840. At the same time, the first carrier 8421 and the second carrier 8422 can be provided at a position relatively in the middle of the base 8412 of the driver housing 841, preventing the first lens part 822 and the second lens part 823 of the zoom lens 820 mounted on the first carrier 8421 and the second carrier 8422 from having a large eccentricity with respect to the drive component 840.

Referring to FIG. 31B and FIG. 31C, a second upper track 84623 is provided on the bottom surface of the third carrier side arm 84222 of the second carrier 8422 and extended along the optical axis direction (i.e., the length direction of the drive component 840) of the zoom lens 820; a second lower track 84624 is downwardly recessed and formed on the bottom surface of the third carrier side arm groove of the first carrier side arm 84214 of the first carrier 8421 and extended downwardly along the optical axis direction (i.e., the length direction of the drive component 840) of the zoom lens 820. The second supporting component 84622 is provided between the second upper track 84623 and the second lower track 84624 to support the second carrier 8422 and maintain the height position stability of the second carrier 8422. It should be noted that, in this embodiment of the present invention, in the height direction of the drive component 840, the height of the second supporting component 84622 is higher than the height of the first supporting component 84612.

In one embodiment of the present invention, the second supporting component 84622 is implemented as a rolling ball, and the second supporting component 84622 comprises at least one rolling ball, wherein the at least one rolling ball of the second supporting component 84622 is positioned between the bottom surface of the third carrier side arm 84222 and the bottom surface of the third carrier side arm groove of the first carrier side arm 84214, thereby supporting the second carrier 8422 and maintaining the height position of the second carrier 8422 stable, avoiding the rotation of the second carrier 8422 around the second guiding rod 846211, and reducing the friction resistance when the second carrier 8422 moves by rotating the rolling ball.

Specifically, the second upper track 84623 and the second lower track 84624 are corresponded to each other to form the second rolling ball track, wherein the at least one rolling ball of the second supporting component 84622 is provided in the second rolling ball track, and the at least one rolling ball of the second supporting component 84622 can provide guiding effect when the second carrier 8422 moves by the extension direction of the second lower track 84624. In a specific example of the present invention, referring to FIG. 28C, the cross-section of the second upper track 84623 is rectangular, and the cross-section of the second lower track 84624 is trapezoidal, so that there are only three contact points between the at least one rolling ball of the second supporting component 84622 and the second rolling ball track to reduce the contact area while maintaining a good rolling ball positioning effect..

In other embodiments of the present invention, at least one rolling ball of the second supporting component 84622 can be fixed to the second upper track 84623 or the second lower track 84624 by adhesive or welding, in this way, the at least one rolling ball can provide smaller friction resistance and avoid the problem of abnormal noise caused by the at least one rolling ball in the camera module.

In other embodiments of the present invention, the second supporting component 84622 can also be implemented as other components, such as a slider. The second supporting component 84622 comprises at least one slider, and the at least one slider of the second supporting component 84622 protrudes downwardly from the bottom surface of the third carrier side arm 84222 to reduce the friction resistance by sliding between the at least one slider of the second supporting component 84622 slides and the second lower track 84624 when the second carrier 8422 moves with respect to the first carrier 8421. Alternatively, the at least one slider of the second supporting component 84622 protrudes upwardly from the bottom surface of the third carrier side arm groove of the first carrier side arm 84214 to reduce the frictional resistance by sliding between the at least one slider of the second supporting component 84622 and the second upper track 84623 when the second carrier 8422 moves with respect to the first carrier 8421.

It should be noted that, in this embodiment of the present invention, two guiding rods (i.e., the first guiding rod 846111 and the second guiding rod 846211) are used to respectively guide the movement of the first carrier 8421 and the movement of the second carrier 8422, instead of choosing to use one guiding rod to simultaneously guide the movement of both the first carrier 8421 and the second carrier 8422, the reason for this is that in this embodiment of the present invention, the second driving element 8432 is implemented as a voice coil motor, and it is necessary to arrange the second supporting component 84622 and the second magnetic attraction component 8472 (which will be explained later) at the same side of the voice coil motor, the second magnet 84722 of the second magnetic attraction component 8472 will affect the drive of the voice coil motor, so it is necessary to use two guiding rods provided at two opposite sides to respectively guide the movement of the first carrier 8421 and the second carrier 8422. Further, after adopting two guiding rods, if the first guiding rod 846111 and the second guiding rod 846211 are provided at the same side of the drive component 840, there will not be enough space at that side to arrange the second supporting component 84622 and the second magnetic attraction component 8472 therein, therefor, preferably, the first guiding rod 846111 and the second guiding rod 846211 are provided at two opposite sides of the drive component 840, more specifically, at the first side and the second side of the drive component 840, which are opposite to each other.

In addition, in this embodiment of the present invention, the first guiding rod 846111 runs through an upper portion of the first carrier along the direction defined by the optical axis, and the second guiding rod runs through an upper portion of the second carrier along the direction defined by the optical axis. Preferably, the first guiding rod 846111 and the second guiding rod 846211 are provided in the same height plane defined by the driver housing 841.

Since the guidance of the first carrier 8421 is achieved by a guiding rod (i.e., the first guiding rod 846111) to avoid rotation of the first carrier 8421 with respect to the first guiding rod 846111 when the first carrier 8421 is driven. Further, in this embodiment of the present invention, the drive component 840 comprises a magnetic attraction component 847 for stabilizing the first carrier 8421 and the second carrier 8422, wherein the magnetic attraction component 847 comprises a first magnetic attraction component 8471 making the first carrier 8421 be attracted to the driver housing 841.

Specifically, in this embodiment of the present invention, the first magnetic attraction component 8471 is provided at another side opposite to the first guiding rod 846111, in other words, the first magnetic attraction component 8471 is provided at the second side of the drive component 840. Specifically, as shown in FIG. 29B and FIG. 29C, the first magnetic attraction component 8471 comprises a first magnetic attraction element 84711 and a first magnet 84712 located at the second side of the drive component 840, wherein the first magnetic attraction element 84711 is fixed to the base bottom 84121 by adhesive or insert molding, and the first magnet 84712 is fixed to the bottom surface of the second carrier side arm 84215. The magnetic attraction force between the first magnetic attraction element 84711 and the first magnet 84712 presses the second carrier side arm 84215 against the base bottom 84121 and clamps the first supporting component 84612 (such as at least one rolling ball) between the bottom surface of the second carrier 8422 and the top surface of the base bottom 84121, so that the second carrier side arm 84215 is adsorbed on the base bottom 84121, and the first carrier 8421 is frictionally coupled to the base bottom 84121 of the driver housing 841 through the first supporting component 84612. The magnetic attraction force between the first magnetic attraction element 84711 and the first magnet 84712 provides a force towards the base bottom 84121 to the second carrier side arm 84215 of the first carrier 8421, thereby maintaining a relatively stable positional relationship between the first carrier 8421 and the base bottom 84121, preventing the first carrier 8421 from rotating around the first guiding rod 846111.

In one embodiment of the present invention, the bottom surface of the second carrier side arm 84215 has a first magnet groove, and the first magnet 84712 is fixed to the bottom surface of the second carrier side arm 84215 by being fixed inside the first magnet groove, thereby reducing the height of the drive component 840.

Further, it should be noted that in this embodiment of the present invention, the first magnetic attraction component 8471 and the first supporting component 84612 are located at the same side of the drive component 840. More specifically, the first supporting component 84612 is located at the side of the first magnetic attraction component 8471, which is close to the optical axis, that is, the first supporting component 84612 is located at an inner side of the first magnetic attraction component 8471, so that the first magnetic attraction component 8471 can make the first carrier 8421 be attracted to the driver housing 841 by a smaller magnetic attraction force. It should be understood that under the action of the first magnetic attraction component 8471, the first supporting component 84612 is stably clamped between the first carrier 8421 and the base bottom 84121, so that the first carrier 8421, the first supporting component 84612, and the base 8412 have a stable relative positional relationship.

In a specific example of the present invention, the first magnetic attraction component 8471 further comprises a first magnetic attraction magnetic conductive plate 84713 attached to one side of the first magnet 84712, which is far away from the first magnetic attraction element 84711, wherein the first magnetic attraction magnetic conductive plate 84713 is adapted to enhance the magnetic field of the side of the first magnet 84712, which faces the first magnetic attraction element 84711, thereby enhancing the magnetic attraction force between the first magnet 84712 and the first magnetic attraction element 84711, in other words, the first magnet 84712 is located between the first magnetic attraction magnetic conductive plate 84713 and the first magnetic attraction element 84711. Specifically, the first magnetic attraction magnetic conductive plate 84713 is fixed in a first magnet slot of the bottom surface of the second carrier side arm 84215 by adhesive or insert molding, wherein the first magnet 84712 is fixed on the bottom surface of the second carrier side arm 84215 by being adsorbed to the first magnetic attraction magnetic conductive plate 84713, and is arranged opposite to the first magnetic attraction element 84711, wherein there is no gap between the first magnet 84712 and the first magnetic attraction magnetic conductive plate 84713 due to the magnetic absorbing effect.

It is worth mentioning that, as shown in FIG. 32B, in one embodiment of the present invention, the first magnetic attraction element 84711 is fixed to the base bottom 84121 by, for example, adhesive bonding, wherein the third horizontal portion 844331 of the third flexible board is provided between the first magnetic attraction element 84711 and the base bottom 84121, specifically, the base bottom 84121 has a flexible board groove, and the third horizontal portion 844331 of the third flexible board is provided in the flexible board groove of the base bottom 84121 and located under the magnetic attraction element 84711, in this way, the gap between the first magnet 84712 and the first magnetic attraction element 84711 can be configured to be relatively small, and the movement of the first carrier 8421 will not be interfered by the third horizontal portion 844331 of the third flexible board. In one embodiment of the present invention, the third horizontal portion 844331 is fixed to the base bottom 84121, and the first magnetic attraction element 84711 is suitable for being adhesive bonded with the third horizontal portion 844331.

Since the guidance of the second carrier 8422 is achieved by a guiding rod (i.e., the first guiding rod 846211) to avoid rotation of the second carrier 8422 with respect to the second guiding rod 846211 when the second carrier 8422 is driven. Further, in this embodiment of the present invention, the magnetic attraction component 847 further comprises a second magnetic attraction component 8472 that acts on the second carrier 8422 to cause the second carrier 8422 to be attracted to the first carrier 8421.

Specifically, in this embodiment of the present invention, the second magnetic attraction component 8471 is provided at another side opposite to the second guiding rod 846211, in other words, the second magnetic attraction component 8471 is provided at the first side of the drive component 840. In other words, the second magnetic attraction component 8472 and the second driving element 8432 are located at the first side and second side of the drive component 840 which are opposite to each other, which can avoid electromagnetic interference between the second magnetic attraction component 8472 and the second driving element 8432.

Correspondingly, in this embodiment of the present invention, the second magnetic attraction component 8472 comprises the second magnetic attraction element 84721 and the second magnet 84722 corresponded to each other, wherein the second magnetic attraction element 84721 is fixed to the first carrier side arm 84214 of the first carrier 8421, and the second magnet 84722 is fixed to the third carrier side arm 84222, wherein the third carrier side arm 84222 is subjected to a force towards the base bottom 84121 by the magnetic attraction force between the second magnetic attraction element 84721 and the second magnet 84722, thereby maintaining a relatively stable positional relationship between the second carrier 8422 and the first carrier 8421, and preventing the second carrier 8422 from rotating around the second guiding rod 846211. In other embodiments of the present invention, the second magnet 84722 is fixed to the first carrier side arm 84214 of the first carrier 8421, and the second magnetic attraction element 84721 is fixed to the third carrier side arm 84222.

In a specific embodiment of the present invention, as mentioned above, a first guiding rod 846111 is provided at an upper portion of the first side of the drive component 840, and it is necessary to simultaneously arrange the second magnetic attraction component 8472 and the second supporting component 84622 between the first carrier 8421 and the second carrier 8422 of the drive component 840, therefore, in order to meet the structural design requirements, the structures of the second carrier 8422 and the first carrier 8421 are specially designed. Specifically, as shown in FIGS. 31A and 31B, the third carrier side arm 84222 of the second carrier 8422 has a magnetic attraction protrusion 84723 extended outwardly, and the first carrier side arm 84214 of the first carrier 8421 has a magnetic absorbing through hole 84724 communicated the outer side surface of the first carrier side arm 84214 with the third carrier side arm groove, wherein at least a part of the magnetic attraction protrusion 84723 extended outwardly from the third carrier side arm 84222 passes through the magnetic absorbing through hole 84724.

Accordingly, the second magnetic attraction element 84721 is fixed to the bottom side of the magnetic absorbing through hole 84724 of the first carrier side arm 84214 by adhesive or injection molding of the fixture, wherein the second magnet 84722 is fixed to the bottom surface of the magnetic attraction protrusion 84723 of the third carrier side arm 84222. The magnetic attraction force between the second magnetic attraction element 84721 and the second magnet 84722 presses the third carrier side arm 84222 against the bottom surface of the third carrier side arm groove of the first carrier side arm 84214 and clamps the second supporting component 84622 (such as at least one rolling ball) located between the bottom surface of the third carrier side arm 84222 and the bottom surface of the third carrier side arm groove of the first carrier side arm 84214, thereby causing the third carrier side arm 84222 to be attracted on the bottom surface of the third carrier side arm groove, wherein the second carrier 8422 is frictionally coupled to the bottom surface of the third carrier side arm groove by the second supporting component 84622. The magnetic attraction force between the second magnetic attraction element 84721 and the second magnet 84722 provides a force towards the bottom surface of the third carrier side arm groove of the first carrier 8421 to the third carrier side arm 84222 of the second carrier 8422 , thereby maintaining a relatively stable positional relationship between the second carrier 8422 and the first carrier 8421 and preventing the second carrier 8422 from rotating around the second guiding rod 846211.

In one embodiment of the present invention, the bottom surface of the magnetic attraction protrusion 84723 has a second magnet groove concaved upwardly, wherein the second magnet 84722 is fixed to the bottom surface of the magnetic attraction protrusion 84723 by being fixed inside the second magnet groove, thereby reducing the height of the drive component 840.

In a specific example of the present invention, the second magnetic attraction component 8472 further comprises a second magnetic attraction magnetic conductive plate 84725 attached to a side of the second magnet 84722, which is far away from the second magnetic attraction element 84721, wherein the second magnetic attraction magnetic conductive plate 84725 is configured to enhance the magnetic field of the second magnet 84722, which faces a side of the second magnetic attraction element 84721, thereby increasing the magnetic attraction force between the second magnet 84722 and the second magnetic attraction element 84721, in other words, the second magnet 84722 is located between the second magnetic attraction magnetic conductive plate 84725 and the second magnetic attraction element 84721. Specifically, the second magnetic attraction magnetic conductive plate 84725 is fixed in a second magnet slot of the bottom surface of the second carrier side arm 84723 by adhesive or insert molding, wherein the second magnet 84722 is fixed on the bottom surface of the magnetic attraction protrusion 84723 by being adsorbed to the second magnetic attraction magnetic conductive plate 84725, and is arranged opposite to the second magnetic attraction element 84721, wherein there is no gap between the second magnet 84722 and the second magnetic attraction magnetic conductive plate 84725 due to the magnetic absorbing effect.

In the present invention, the first magnetic attraction component 8471 is provided at a side corresponded to the first guiding rod 846111 to provide a force to the second carrier side arm 84215 of the first carrier 8421, which has a direction towards the base bottom 84121 of the base 8412, thereby preventing the rotation of the first carrier 8421 around the first guiding rod 846111; the second magnetic attraction component 8472 is provided at a side corresponded to the second guiding rod 846211 to provide a force to the third carrier side arm 84222 of the second carrier 8422, which a direction towards the base bottom 84121 of the base 8412, thereby preventing the rotation of the second carrier 8422 around the second guiding rod 846211.

It should be noted that, in the present embodiment, the second magnetic attraction component 8472 and the second supporting component 84622 are located at the same side of the drive component 840, more specifically, the second magnetic attraction component 8472 and the second supporting component 84622 are located at the first side of the drive component 840, so that the drive component 840 has a more compact structure through the described design. Specifically, in the present embodiment, the second supporting component 84622 is located at a side of the second magnetic attraction component 8472, which is close to the optical axis, that is, the second supporting component 84622 is located at an inner side of the second magnetic attraction component 8472, so that the second magnetic attraction component 8472 can attract the second carrier 8422 towards the first carrier 8421 through a smaller magnetic force. It should be understood that under the action of the second magnetic attraction component 8472, the second supporting component 84622 is stably clamped between the second carrier 8422 and the first carrier 8421, so that the first carrier 8421, the second supporting component 84622, and the second carrier 8422 have a stable relative positional relationship.

Further, in the embodiment of the present invention, the drive component 840 comprises a position sensing component 848 for obtaining the position information of the first carrier 8421 and the second carrier 8422, wherein the position sensing component 848 comprises a first position sensing component 8481 for sensing and detecting the position information of the first carrier 8421 and a second position sensing component 8482 for sensing and detecting the position information of the second carrier 8422. FIG. 30 shows a placement position of the first position sensing component 8481 according to one embodiment of the present invention, specifically, the first position sensing component 8481 is positioned at the first side of the drive component 840, wherein the first position sensing component 8481 is positioned between the first carrier side arm 84214 of the first carrier 8421 and the first base side arm 84122 of the base 8412. The first position sensing component 8481 comprises a first position sensing magnet 84811 and a first position sensing element 84812 corresponded to the first position sensing magnet 84811, in a specific example of the present invention, the first carrier side arm 84214 has a first position sensing magnet groove, which is formed by being inwardly recessed from an outer surface of the first carrier side arm 84214, wherein the first base side arm 84122 has a position sensing element through hole, wherein the first position sensing magnet 84811 is installed in the position sensing magnet groove and fixed to the first carrier side arm 84214, and the first position sensing element 84812 is electrically connected to the first vertical portion 84411 of the first flexible board and passes through the position sensing element through hole, and then is fixed to the first base side arm 84122, so that the first position sensing element 84812 is corresponded to the first position sensing magnet 84811. The first position sensing element 84812 can be a hall element, a drive chip with position sensing function, a TMR magnetic resistance sensor, or other position sensing elements suitable for sensing magnetic field position changes, wherein the first position sensing magnet 84811 can be a magnet or a magnetic grid, which is not a limitation of the present invention.

In another embodiment of the present invention, the first position sensing component 8481 can also be provided at the second side of the drive component 840, which is provided between the second carrier side arm 84215 and the second base side arm 84123.

The driving carrier 842 further comprises an anti-collision component 8423 to prevent the first carrier 8421 and the second carrier 8422 from colliding with other components of the drive components 840, such as a driver housing 841, thereby maintaining the stability of the drive components 840. In a specific example of the present invention, the anti-collision component 8423 comprises at least two anti-collision members 84231 provided at the incident light side (the side where imaging light enters) of the first carrier 8421, and at least two anti-collision members 84231 provided at the exiting light side (the side where imaging light exits) of the first carrier 8421 to prevent direct collision between the first carrier 8421 and the incident light side attaching portion 84124 and the exiting light side attaching portion 84125 of the base 8412 of the driver housing 841; the anti-collision component 8423 further comprises at least two anti-collision members 84231 provided at the incident light side of the second carrier 8422, and at least two anti-collision members 84231 provided at the exiting light side of the second carrier 8422, to prevent direct collision between the second carrier 8422 and the first carrier 8421. In one embodiment of the present invention, the anti-collision members 84231 are made of a flexible material and are fixed to the first carrier 8421 or the second carrier 8422 by adhesive or secondary injection molding.

The drive component 840 further comprises a second position sensing component 8482 for obtaining the position information of the second carrier 8422. As shown in FIG. 31B, the second position sensing component 8482 comprises a second position sensing element 84821 fixed and electrically connected to the second position sensing element 84821 of the second flexible circuit board, wherein the second position sensing element 84821 is provided at the second side of the drive component 840, and the second position sensing component 8482 is provided between the fourth carrier side arm 84223 of the second carrier 8422 and the second carrier side arm 84215 of the first carrier 8421. The second position sensing element 84821 is provided in the middle of the driving coil 84322 and is corresponded to the driving magnet 84321 to sense the position change of the driving magnet 84321, thereby obtaining the position information of the second carrier 8422. The second position sensing element 84821 can be a hall element, a drive chip with position sensing function, a TMR magnetic resistance sensor, or other position sensing elements suitable for sensing magnetic field position changes, which is not a limitation of the present invention.

In another embodiment of the present invention, the second position sensing component 8482 can also be provided at the first side of the drive component 840, which is provided between the third carrier side arm 84222 and the first carrier side arm 84214. Accordingly, in order to provide a magnetic field for the second position sensing element 84821, the second position sensing component 8482 further comprises a second position sensing magnet, which is fixed to the second carrier 8422, and the second position sensing element 84821 is fixed to the first carrier 8421.

In summary, the zoom camera module based on the present invention embodiment has been elucidated, wherein the zoom camera module adopts a "parent-child" drive scheme to provide support for zoom drive at the structural end, and utilizes an optimized drive control scheme to enable the zoom camera module to perform optical zoom at a relatively fast rate.

## Claims

1. A drive component, comprising:
a driver housing;
a first carrier accommodated within the driver housing and adapted for receiving a first lens part therein, wherein the first lens part has an optical axis;
a first driving element for driving the first carrier to move within the driver housing along a direction defined by the optical axis; and
a first guiding device for guiding the first carrier to move within the driver housing along the optical axis, wherein the first guiding device is clamped between the first carrier and the driver housing.

2. The drive component, as claimed in claim 1, further comprising a second magnetic attraction component provided at the first carrier, and the first guiding device is clamped between the first carrier and the driver housing by a magnetic attraction force between the second magnetic attraction component and the first guiding device.

3. The drive component, as claimed in claim 2, wherein the magnetic attraction force has a direction perpendicular to a guiding direction of the first guiding device.

4. The drive component, as claimed in claim 3, wherein the first guiding device comprises a first guiding element and a second guiding element provided between a bottom surface of the first carrier and an inner bottom surface of the driver housing, and the first guiding element and the second guiding element are extended along the optical axis and are symmetrically arranged with respect to the optical axis.

5. The drive component, as claimed in claim 4, wherein the second magnetic attraction component comprises a pair of second magnets, wherein one of the pair of second magnets is installed at the first carrier and corresponded to the first guiding element, and another of the pair of second magnets is installed at a second carrier and corresponded to the second guiding element, wherein the first guiding element and the second guiding element are made of magnetic material to respectively cooperate with the second magnets to generate the magnetic attraction force.

6. The drive component, as claimed in claim 5, wherein the first guiding element is a first guiding rod fixed to the driver housing and extended between the bottom surface of the first carrier and the inner bottom surface of the driver housing along the optical axis, and the second guiding element is a second guiding rod fixed to the driver housing and extended between the bottom surface of the first carrier and the inner bottom surface of the driver housing along the direction defined by the optical axis.

7. The drive component, as claimed in claim 5, wherein one of the pair of second magnets and another of the pair of second magnets are symmetrically arranged at the first carrier with respect to the optical axis.

8. The drive component, as claimed in claim 7, wherein the center of one of the pair of second magnets, the center of another of the pair of second magnets and the center of gravity of the first carrier are in the same horizontal line.

9. The drive component, as claimed in claim 7, wherein the center of one of the pair of second magnets, the center of another of the pair of second magnets and the center of gravity of the first carrier have the same height with respect to the inner bottom surface of the driver housing.

10. The drive component, as claimed in claim 4, wherein the first driving element is a piezoelectric actuator, and the piezoelectric actuator is disposed between an inner upper surface of the driver housing and the first carrier, wherein the piezoelectric actuator and the first guiding element are located at the same side of the first carrier, and the second guiding element and the piezoelectric actuator are located at two different sides of the first carrier.

11. The drive component, as claimed in claim 10, wherein the piezoelectric actuator comprises a piezoelectric acting part and a friction driving part drivably coupled with the piezoelectric acting part, wherein the friction driving part comprises at least one friction head abutted against a top surface of the first carrier, wherein the drive component further comprises a pre-pressure force device disposed between the inner upper surface of the driver housing and the first driving element, wherein the first carrier further comprises a friction member formed on a top surface thereof, and the friction head of the first driving element is pressed against the friction member.

12. The drive component, as claimed in claim 5, wherein the drive component further comprises a second carrier accommodated within the driver housing and movably installed at the first carrier, wherein the second carrier is adapted for receiving a second lens part therein, and a second driving element for driving the second carrier to move with respect to the first carrier, wherein the second driving element is a voice coil motor.

13. The drive component, as claimed in claim 12, wherein the drive component further comprises a second guiding device formed between the first carrier and the second carrier and used for guiding the second carrier to move with respect to the first carrier along the direction defined by the optical axis, and the second guiding device is clamped between the first carrier and the second carrier.

14. The drive component, as claimed in claim 13, wherein the drive component further comprises a first magnetic attraction component, wherein the first magnetic attraction component comprises a first magnet provided in the second carrier and a first magnetic attraction element provided in the first carrier and corresponded to the first magnet, so as to make the second guiding device be clamped between the second carrier and the first carrier by a magnetic attraction force between the first magnet and the first magnetic attraction element.

15. The drive component, as claimed in claim 14, wherein the first carrier has a second groove inwardly recessed from the bottom surface thereof, wherein the second magnet is held in the second groove by a magnetic attraction force of the first magnetic attraction component.

16. A zoom camera module, comprising:
any one of the drive components as claimed in claims 1-15;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

17. The zoom camera module, as claimed in claim 16, further comprising: a light inflecting element for inflecting an imaging light, wherein the third lens part, the second lens part and the first lens part are held on an optical inflecting path of the light inflecting element.

18. A drive component, comprising:
a driver housing;
a first carrier accommodated within the driver housing and adapted for receiving a first lens part therein, wherein the first lens part has an optical axis;
a first driving element for driving the first carrier to move within the driver housing along a direction defined by the optical axis; and
a first guiding device, wherein the first driving element and the first guiding device are arranged at two opposite sides of the first carrier,
wherein the first guiding device comprises a first guiding element for guiding the first carrier to move along the optical axis within the driver housing, and an actuation point where the first driving element acts on the first carrier is aligned with a center of a cross-section of the first guiding element in the height direction defined by the drive component.

19. The drive component, as claimed in claim 18, wherein the first guiding element is a piezoelectric actuator, wherein the piezoelectric actuator comprises a piezoelectric acting part and a friction driving part drivably coupled with the piezoelectric acting part, and the friction driver part comprises at least one friction head pressed against a top surface of the first carrier, wherein the position of the friction head is pressed against the top surface of the first carrier is the position where the first driving element acts on the first carrier.

20. The drive component, as claimed in claim 19, wherein the first guiding element is a first guiding rod clamped between a bottom surface of the first carrier and an inner bottom surface of the driver housing, wherein the position where the friction head is pressed against the top surface of the first carrier is aligned with the center of the cross-section of the first guiding rod in the height direction defined by the drive component.

21. The drive component, as claimed in claim 20, wherein a connecting line between the center of the cross-section of the first guiding rod and the center of the cross-section of the friction head is perpendicular to a straight line defined by the first guiding rod.

22. The drive component, as claimed in claim 21, wherein the first guiding device further comprises a second guiding rod clamped and disposed between the bottom surface of the first carrier and the inner bottom surface of the driver housing, and the second guiding rod and the first guiding rod are symmetrically arranged with respect to the optical axis.

23. The drive component, as claimed in claim 22, wherein the first guiding rod and the first driving element are located at the same side of the first carrier, and the second guiding rod and the first driving element are located at two different sides of the first carrier.

24. The drive component, as claimed in claim 22, further comprising a second magnetic attraction component provided at the first carrier, and the second guiding rod and the first guiding rod of the first guiding device are clamped between the first carrier and the driver housing by a magnetic attraction force between the second magnetic attraction component and the first guiding device.

25. The drive component, as claimed in claim 24, wherein the second magnetic attraction component comprises a pair of second magnets, wherein one of the pair of second magnets is installed at the first carrier and corresponded to the first guiding rod, and another of the pair of second magnets is installed at the second carrier and corresponded to the second guiding rod, wherein the first guiding rod and the second guiding rod are made of magnetic material to respectively cooperate with the pair of second magnets to generate the magnetic attraction force.

26. The drive component, as claimed in claim 18, wherein the drive component further comprises a pre-pressure force device disposed between an inner upper surface of the driver housing and the first driving element, and the first carrier further comprises a friction member formed on a top surface thereof, and the friction head of the first driving element is pressed against the friction member.

27. The drive component, as claimed in claim 18, wherein the drive component further comprises a second carrier accommodated within the driver housing and movably installed at the first carrier, wherein the second carrier is adapted for receiving a second lens part therein, and a second driving element for driving the second carrier to move with respect to the first carrier, wherein the second driving element is a voice coil motor.

28. The drive component, as claimed in claim 27, wherein the drive component further comprises a second guiding device formed between the first carrier and the second carrier and used for guiding the second carrier to move with respect to the first carrier along the direction defined by the optical axis, and the second guiding device is clamped between the first carrier and the second carrier.

29. The drive component, as claimed in claim 28, wherein the drive component further comprises a first magnetic attraction component, wherein the first magnetic attraction component comprises a first magnet provided in the second carrier and a first magnetic attraction element provided in the first carrier and corresponded to the first magnet, so as to make the second guiding device be clamped between the second carrier and the first carrier by a magnetic attraction force between the first magnet and the second magnetic attraction element.

30. The drive component, as claimed in claim 29, wherein the first carrier has a second groove inwardly recessed from the bottom surface thereof, wherein the second magnet is held in the second groove by a magnetic attraction force of the first magnetic attraction component.

31. A zoom camera module, comprising:
any one of the drive components as claimed in claims 18-30;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

32. The zoom camera module, as claimed in claim 31, further comprising: a light inflecting element for inflecting an imaging light, wherein the third lens part, the second lens part and the first lens part are held on an optical inflecting path of the light inflecting element.

33. A drive component, comprising:
a driver housing;
a first carrier accommodated within the driver housing and having a first mounting chamber for installing a first lens part therein, wherein the first lens part has an optical axis;
a first driving element for driving the first carrier to move within the driver housing along a direction defined by the optical axis; and
a conductive component comprising a third circuit board and a fourth circuit board, wherein the third circuit board comprises a first electric connection terminal and a second electric connection terminal opposite to the first electric connection terminal, and the first electric connection terminal is electrically connected to the first driving element, wherein the fourth circuit board comprises a first segment having a third electric connection terminal and a second segment having a fourth electric connection terminal, wherein the first segment is fixed at the first carrier, the second segment is fixed at the drive housing, and at least a part of the first segment and at least a part of the second segment are overlapped with each other in a height direction defined by the drive component.

34. The drive component, as claimed in claim 33, wherein the fourth circuit board further comprises a second bending portion bent and extended between the first segment and the second segment.

35. The drive component, as claimed in claim 34, wherein the first segment of the fourth circuit board is fixed at a top surface of the first carrier, and the second segment of the fourth circuit board is fixed at an inner bottom surface of the driver housing.

36. The drive component, as claimed in claim 35, wherein the first segment of the fourth circuit board is fixed at the first carrier by fixing the third electric connection terminal at the top surface of the first carrier, and the second segment of the fourth circuit board is fixed at the driver housing by fixing the second electric connection terminal at the inner bottom surface of the driver housing.

37. The drive component, as claimed in claim 36, wherein the first segment is parallel to the second segment.

38. The drive component, as claimed in claim 37, wherein each of the first segment and the second segment has an extension direction consistent with the direction defined by the optical axis.

39. The drive component, as claimed in claim 38, wherein the first carrier comprises a first part and a second part adjacent to each other along the direction defined by the optical axis, wherein the first mounting chamber is located in the first part, wherein the first segment of the fourth circuit board is extended from the third electric connection terminal and the second part of the first carrier to the first part of the first carrier, and the second segment of the fourth circuit board is extended from the first part of the first carrier to the second part of the first carrier, and the second bending portion is bent and extended between the first segment and the second segment.

40. The drive component, as claimed in claim 39, wherein the first segment, the second segment and the second bending portion define a U-shaped structure.

41. The drive component, as claimed in claim 40, wherein the sum of the lengths of the first segment and the second segment is greater than the stroke of the first carrier.

42. The drive component, as claimed in claim 41, wherein when the first driving element drives the first carrier to move with respect to the driver housing along the direction defined by the optical axis, a changing length of a first straight segment is equal to a changing length of the second straight segment.

43. The drive component, as claimed in claim 42, wherein the second electric connection terminal of the third circuit board is extended to an outer side of the driver housing and is adapted to be electrically connected with a photosensitive component, wherein the third circuit board further comprises a first bending portion bent and extended between the first electric connection terminal and the second electric connection terminal , wherein the fourth electric connection terminal of the fourth circuit board is electrically connected with the third circuit board.

44. The drive component, as claimed in claim 43, wherein the first carrier further has a second mounting chamber located in the second part, wherein the drive component further comprises a second carrier installed movably in the second mounting chamber and a second driving element for driving the second carrier to move with respect to the first carrier along the direction defined by the optical axis.

45. The drive component, as claimed in claim 44, wherein the conductive component further comprises a second circuit board disposed in the second part, wherein one end of the second circuit board is electrically connected with the second driving element, and another end of the second circuit board is electrically connected with the third electric connection terminal of the fourth circuit board.

46. The drive component, as claimed in claim 45, wherein the second circuit board is disposed on an outer surface of the second carrier, or the second circuit board is disposed on an inner side surface of the second part of the first carrier.

47. A zoom camera module, comprising:
any one of the drive components as claimed in claims 33-46;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

48. The zoom camera module, as claimed in claim 47, further comprising: a light inflecting element for inflecting an imaging light, wherein the third lens part, the second lens part and the first lens part are held on an optical inflecting path of the light inflecting element.

49. A drive component, comprising:
a driver housing;
a first carrier accommodated within the driver housing and having a first mounting chamber for installing a first lens part therein, wherein the first lens part has an optical axis;
a first driving element for driving the first carrier to move within the driver housing along a direction defined by the optical axis;
a pre-pressure force device disposed between the first driving element and the driver housing and adapted to provide a pre-pressure force pressing the first driving element against the first carrier, wherein a first end of the pre-pressure force device is fixed at one side of the driver housing, and a second end of the pre-pressure force device is fixed at another side of the driver housing, wherein the first end and the second end of the pre-pressure force device are opposite to each other, and the one side of the driver housing and the another side of the driver housing are opposite to each other.

50. The drive component, as claimed in claim 49, wherein the pre-pressure force device is extended between two opposite sides of the driver housing along the direction defined by the optical axis.

51. The drive component, as claimed in claim 49, wherein the pre-pressure force device is extended between two opposite sides of the driver housing along a width direction defined by the driver housing.

52. The drive component, as claimed in claim 50, wherein the pre-pressure force device comprises a first fixed portion and a second fixed portion fixed respectively between two opposite sides of the drive housing, a first deforming portion extended from the first fixed portion and a second deforming portion extended from the second fixed portion, and a main body portion extended between the first deforming portion and the second deforming portion, wherein an end of the first fixed portion forms the first end, and an end of the second fixed portion forms the second end, wherein the main body portion is pressed against the first driving element to apply a pre-pressure force on the first driving element through the main body portion, so as to make the first driving element be contacted with the first carrier.

53. The drive component, as claimed in claim 52, wherein the first fixed portion, the second fixed portion and the main body portion are located on the same height plane.

54. The drive component, as claimed in claim 53, wherein the first fixed portion and the second fixed portion are located in the same height plane, and the main body portion is lower than the height plane where the first fixed portion and the second fixed portion are located.

55. The drive component, as claimed in claim 53 or 54, wherein each of the first fixed portion, the second fixed portion and the main body portion have an extension directions consistent with the extension direction of the first driving element.

56. The drive component, as claimed in claim 51, wherein the first driving element is a piezoelectric actuator, and the piezoelectric actuator is provided between a top surface of the first carrier and the driver housing, wherein the piezoelectric actuator comprises a piezoelectric acting part and a friction driving part movably connected with the piezoelectric acting part, wherein the friction driving part is pressed against the top surface of the first carrier through the pre-pressure force provided by the pre-pressure force device.

57. The drive component, as claimed in claim 56, wherein the drive component further comprises a first guiding device for guiding the first carrier to move within the driver housing along the direction defined by the optical axis, wherein the pre-pressure force applied on the first driving element by the pre-pressure force device has a direction perpendicular to a guiding direction of the first guiding device.

58. The drive component, as claimed in claim 57, wherein the first guiding device comprises a first guiding element and a second guiding element provided at two opposite sides of the first carrier, wherein the first guiding element and the pre-pressure force device are located at the same side of the first carrier, and the second guiding element and the pre-pressure force device are located at different sides of the first carrier.

59. The drive component, as claimed in claim 58, wherein the pre-pressure force applied to the first driving element by the pre-pressure force device has a direction perpendicular to an extension direction of the first guiding element.

60. The drive component, as claimed in claim 59, wherein the first guiding element is a first guiding rod extended along the direction defined by the optical axis.

61. The drive component, as claimed in claim 56, wherein the drive component further comprises a second carrier movably installed at the first carrier, wherein the second carrier is adapted for receiving a second lens part therein and a second driving element for driving the second carrier to move with respect to the first carrier.

62. The drive component, as claimed in claim 61, wherein the drive component further comprises a second guiding device disposed between the first carrier and the second carrier for guiding the second carrier to move with respect to the first carrier along the direction defined by the optical axis, wherein the pre-pressure force provided by the pre-pressure force device to the first driving element has a direction perpendicular to a guiding direction of the second guiding device.

63. A zoom camera module, comprising:
any one of the drive components as claimed in claims 49-62;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

64. The zoom camera module, as claimed in claim 63, further comprising: a light inflecting element for inflecting an imaging light, wherein the third lens part, the second lens part and the first lens part are held on an optical inflecting path of the light inflecting element.

65. A drive component, comprising:
a driver housing;
a first carrier movably installed within the driver housing and adapted for receiving a first lens part therein;
a second carrier movably installed in the first carrier and adapted for receiving a second lens part therein, wherein the first lens part and the second lens part define an optical axis;
a driving element for driving the first carrier and/or the second carrier to move; and
a plurality of magnetic attraction components comprising a first magnetic attraction component and a second magnetic attraction component, wherein the first magnetic attraction component comprises at least one first magnet provided at the second carrier and a first magnetic attraction element provided at the first carrier and corresponded to the at least one first magnet, and the second magnetic attraction component comprises at least one second magnet provided at the first carrier, wherein the at least one first magnet, the first magnetic attraction element and the at least one second magnet are stacked in a height direction defined by the drive component.

66. The drive component, as claimed in claim65, wherein the first magnetic attraction element is located between the first magnet and the second magnet in the height direction defined by the driving component.

67. The drive component, as claimed in claim 66, wherein the first magnetic attraction element has a size larger than the stroke of the first magnet.

68. The drive component, as claimed in claim 67, wherein the first carrier has at least one second groove inwardly recessed from a bottom surface thereof, wherein the at least one second magnet is held in the at least one second groove by a magnetic attraction force between the at least one second magnet and the first magnetic attraction element.

69. The drive component, as claimed in claim 66, wherein the drive component further comprises a first guiding device for guiding the first carrier to move along the direction defined by the optical axis within the drive housing, wherein the first guiding device is clamped between the first carrier and the driver housing by the magnetic attraction force between the second magnetic attraction component and the first guiding device.

70. The drive component, as claimed in claim 69, wherein the first guiding device comprises a first guiding element and a second guiding element symmetrically are arranged with respect to the optical axis, and the first guiding element and/or the second guiding element are made of magnetic attraction material.

71. The drive component, as claimed in claim 70, wherein the at least one second magnet comprises a pair of second magnets, wherein one of the pair of second magnets is corresponded to the first guiding element, and another of the pair of second magnets is corresponded to the second guiding element.

72. The drive component, as claimed in claim 71, wherein one of the pair of second magnets and another of the pair of second magnet have the same height with respect to a bottom surface of the drive housing.

73. The drive component, as claimed in claim 69, further comprising a second guiding device for guiding the second carrier to move with respect to the first carrier along the direction defined by the optical axis, wherein the second guiding device is clamped between the first carrier and the second carrier by a magnetic attraction force between the first magnet and the first magnetic attraction element.

74. The drive component, as claimed in claim 73, further comprising a first guide groove and a second guide groove formed between the first carrier and the second carrier, wherein the first guide groove and the second guide groove are symmetrically arranged with respect to the optical axis, and the second guiding device comprises at least one first rolling ball installed in the first guide groove and at least one second rolling ball installed in the second guide groove.

75. The drive component, as claimed in claim 74, wherein the at least one first magnet comprises a pair of first magnets, wherein one of the pair of first magnets is installed in the first guide groove, and another of the pair of first magnets is installed in the second guide groove.

76. The drive component, as claimed in claim 75, wherein the second carrier further has a pair of first grooves inwardly recessed from a bottom surface of the second carrier and located in the first guide groove and the second guide groove, wherein the pair of the first magnets are respectively installed in the pair of first grooves.

77. The drive component, as claimed in claim 75, wherein the pair of the first magnets are corresponded to the first magnetic attraction element at the same time.

78. A zoom camera module, comprising:
any one of the drive components as claimed in claims 65-77;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

79. The zoom camera module, as claimed in claim 78, further comprising: a light inflecting element for inflecting an imaging light, wherein the third lens part, the second lens part and the first lens part are held in a light inflecting path of the light inflecting element.

80. A drive component, comprising:
a driver housing;
a first carrier movably installed within the driver housing, wherein the first carrier is adapted for installing a first lens part therein, and the first lens part has an optical axis;
a first driving element for driving the first carrier to move within the driver housing along a direction defined by the optical axis; and
a first guiding device for guiding the first carrier to move within the driver housing along the direction defined by the optical axis, wherein the first guiding device comprises a first guiding element extended along the direction defined by the optical axis; wherein the first guiding element and the first driving element are located at a first side of the first carrier, and the first guiding element is located on the first driving element.

81. The drive component, as claimed in claim 80, wherein the first driving element is provided at a lower portion of the first carrier, and the first guiding element is provided at an upper portion of the first carrier.

82. The drive component, as claimed in claim 81, wherein the first driving element is provided between an inner bottom surface of the driver housing and a lower surface of the first carrier, and the first guiding element is formed through the upper portion of the first carrier.

83. The drive component, as claimed in claim 82, wherein the first carrier has a first guiding hole formed through the upper portion thereof, and the first guiding element passes through the first guiding hole and is fixed at two opposite sides of the driver housing.

84. The drive component, as claimed in claim 83, wherein the first carrier has at least three protruding portions inwardly extended from a hole wall of the first guiding hole, and the at least three protruding portions are in contact with the first guiding element.

85. The drive component, as claimed in claim 82, wherein the driver housing comprises a base and a top cover interlocked with each other, wherein an inner bottom surface of the base defines the inner bottom surface of the driver housing, wherein the base has a base through groove formed between the inner bottom surface and an outer bottom surface thereof, and the first driving element is installed in the base through groove.

86. The drive component, as claimed in claim 80, wherein an acting point where the first driving element acts on the first carrier is aligned with a cross section center of a first guiding element.

87. The drive component, as claimed in claim 80, wherein the acting point where the first driving element acts on the first carrier is located at one side of the cross section center of the first guiding element, which is far away from the optical axis.

88. The drive component, as claimed in claim 86 or 87, wherein the first driving element is a piezoelectric actuator, and the piezoelectric actuator comprises a piezoelectric acting part and a friction driving part drivably connected with the piezoelectric acting part, wherein the friction driving part is in contact with the first carrier frictionally, wherein a friction contact point between the friction driving part and the first carrier is the acting point where the first driving element acts on the first carrier.

89. The drive component, as claimed in claim 85, wherein the first driving element is a piezoelectric actuator, and the piezoelectric actuator comprises a piezoelectric acting part and a friction driving part drivably connected with the piezoelectric acting part, wherein at least a part of the piezoelectric acting part is located inside the base through groove, and the friction driving part is extended out of the base through groove and is in contact with the first carrier frictionally.

90. The drive component, as claimed in claim 89, wherein the base through groove has a base receiving through groove inwardly recessed from an inner bottom surface of the base and a base receiving recess inwardly recessed from an outer bottom surface of the base, wherein the base receiving through groove is communicated with the base receiving recess, wherein at least a part of the piezoelectric acting part is disposed inside the base receiving through groove.

91. The drive component, as claimed in claim 90, wherein the drive component further comprises a first circuit board partially disposed inside the base receiving recess and electrically connected with the piezoelectric acting part.

92. The drive component, as claimed in claim 91, wherein the drive component further comprises a pre-pressure force component disposed in the base receiving recess to enable the friction driving part of the piezoelectric actuator to be contacted with the first carrier frictionally.

93. The drive component, as claimed in claim 92, wherein the pre-pressure force component comprises a first spring fixing portion, a second spring fixing portion corresponded to the first spring fixing portion, and a spring body portion extended between the first spring fixing portion and the second spring fixing portion, wherein the first spring fixing portion and the second spring fixing portion are fixed at two opposite sides of the base through groove, and the spring body portion is abutted against the piezoelectric actuator or the at least a part of the first circuit board provided inside the base receiving recess to provide a pre-pressure force for contacting the friction driving part of the piezoelectric actuator with the first carrier frictionally.

94. The drive component, as claimed in claim 80, further comprising a first magnetic attraction component enabling the first carrier to be attracted to the driver housing, and the first magnetic attraction component is disposed at a second side of the first carrier, which is opposite to the first side.

95. The drive component, as claimed in claim 94, wherein the first magnetic attraction component comprises a first magnet provided on the bottom surface of the first carrier and a first magnetic attraction element provided on the inner bottom surface of the base and corresponded to the first magnet.

96. The drive component, as claimed in claim 95, wherein the first guiding device comprises a first supporting component disposed between the first carrier and the driver housing and the first supporting component is located at the second side of the first carrier, which is opposite to the first side.

97. The drive component, as claimed in claim 80, further comprising a second carrier movably installed at the first carrier and a second driving element for driving the second carrier to move with respect to the first carrier.

98. A zoom camera module, comprising:
any one of the drive components as claimed in claims 80-97;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

99. The zoom camera module, as claimed in claim 98, further comprising: a light inflecting element for inflecting an imaging light, wherein the third lens part, the second lens part and the first lens part are held in a light inflecting path of the light inflecting element.

100. A drive component, comprising:
a driver housing;
a first carrier movably installed within the driver housing and adapted for receiving a first lens part therein;
a second carrier movably installed at the first carrier and adapted for receiving a second lens part therein, wherein the first lens part and the second lens part are coaxially arranged along an optical axis defined by the first lens part and the second lens part;
a first driving element for driving the first carrier to move simultaneously the first carrier and the second carrier along a direction defined by the optical axis;
a first driving element for driving the second carrier to move with respect to the first carrier along the direction defined by the optical axis;
a first guiding device comprising a first guiding rod for guiding the first carrier to move with respect to the driver housing along the direction defined by the optical axis; and
a second guiding device comprising a second guiding rod for guiding the second carrier to move along the direction defined by the optical axis at the first carrier; wherein the first guiding rod and the second guiding rod are located at two opposite sides of the driving component.

101. The drive component, as claimed in claim 100, wherein the first guiding rod is extended along the direction defined by the optical axis, and the second guiding rod is extended along the direction defined by the optical axis, and the first guiding rod and the second guiding rod are parallel to each other.

102. The drive component, as claimed in claim 101, wherein the first guiding rod and the second guiding rod are provided in the same height plane defined by the driver housing.

103. The drive component, as claimed in claim 101, wherein the first guiding rod runs through an upper portion of the first carrier along the direction defined by the optical axis, and the second guiding rod runs through an upper portion of the second carrier along the direction defined by the optical axis.

104. The drive component, as claimed in claim 103, wherein the first driving element is provided at a lower portion of the first carrier, which is opposite to the upper portion.

105. The drive component, as claimed in claim 104, wherein the first driving element and the second driving element are arranged at two opposite sides of the driving component.

106. The drive component, as claimed in claim 105, wherein the first driving element is a piezoelectric actuator, and the second driving element is a voice coil motor.

107. The drive component, as claimed in claim 104, wherein the first guiding device further comprises a first supporting component disposed between the first carrier and the driver housing, wherein the first supporting component and the first guiding rod are located at two opposite sides of the first carrier.

108. The drive component, as claimed in claim 107, wherein the second guiding device further comprises a second supporting component arranged between the first carrier and the second carrier, and the second supporting component and the second guiding rod are located at two opposite sides of the second carrier.

109. The drive component, as claimed in claim 107, further comprising a first magnetic attraction component for enabling the first carrier to be attracted to the driver housing, wherein the first magnetic attraction component comprises a first magnet arranged at the first carrier and a first magnetic attraction element arranged on the inner bottom surface of the driver housing and corresponded to the first magnet, so as to enable the first carrier to be attracted to the driver housing by a magnetic attraction force between the first magnet and the first magnetic attraction element.

110. The drive component, as claimed in claim 109, wherein the first magnetic attraction component and the first supporting component are located at the same side of the drive component.

111. The drive component, as claimed in claim 108, further comprising a second magnetic attraction component for enabling the second carrier to be attracted to the first carrier, the second magnetic attraction component comprising a second magnet disposed at the second carrier and a second magnetic attraction element disposed at the first carrier and corresponded to the second magnet, so as to enable the second carrier to be attracted to the first carrier by a magnetic attraction force between the second magnet and the second magnetic attraction element.

112. The drive component, as claimed in claim 111, wherein the second magnetic attraction component and the second supporting component are located at the same side of the drive component.

113. The drive component, as claimed in claim 109, wherein the first magnet of the first magnetic attraction component is embedded in the first carrier and the first magnet is embedded in a position of the first carrier, which is far away from the second carrier.

114. The drive component, as claimed in claim 112, wherein the second carrier has a magnetic attraction protrusion extended outwardly, wherein the first carrier has a magnetic attraction through hole running therethrough, wherein the magnetic attraction protrusion is extended into the magnetic attraction through hole, wherein the second magnetic attraction element of the second magnetic attraction component is disposed in the magnetic attraction through hole, and the second magnet of the second magnetic attraction component is provided on the magnetic protrusion and corresponded to the second magnetic attraction element.

115. A zoom camera module, comprising:
any one of the drive components as claimed in claims 100-114;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

116. The zoom camera module, as claimed in claim 115, further comprising: a light inflecting element for inflecting an imaging light, wherein the third lens part, the second lens part and the first lens part are held in a light inflecting path of the light inflecting element.

117. A drive component, comprising:
a driver housing;
a first carrier movably installed within the driver housing, wherein the first carrier is adapted for installing a first lens part therein, and the first lens part has an optical axis;
a first driving element for driving the first carrier to move within the driver housing along a direction defined by the optical axis;
a first guiding device comprising a first guiding rod for guiding the first carrier to move with respect to the driver housing along the direction defined by the optical axis; and
a first magnetic attraction component for making the first carrier be attracted to the driver housing; wherein the first guiding rod and the first magnetic attraction component are located at two opposite sides of the drive component.

118. The drive component, as claimed in claim 117, wherein the first driving element and the first guiding rod are located at the first side of the drive component.

119. The drive component, as claimed in claim 118, wherein the first driving element is provided at a lower portion of the first carrier and the first guiding element is provided at an upper portion of the first carrier.

120. The drive component, as claimed in claim 119, wherein the first guiding rod runs through the upper portion of the first carrier along the direction defined by the optical axis.

121. The drive component, as claimed in claim 120, wherein the first carrier has a first guiding hole formed through the upper portion thereof, and the first guiding rod passes through the first guiding hole and is fixed at two opposite sides of the driver housing.

122. The drive component, as claimed in claim 121, wherein the first carrier has at least three protruding portions inwardly extended from a hole wall of the first guiding hole, and the at least three protruding portions are abutted against the first guiding rod.

123. The drive component, as claimed in claim 119, wherein the first magnetic attraction component comprises a first magnet provided at the first carrier and a first magnetic attraction element provided on an inner bottom surface of the driver housing and corresponded to the first magnet, so as to enable the first carrier to be attracted to the driver housing by a magnetic attraction force between the first magnet and the first magnetic attraction element.

124. The drive component, as claimed in claim 123, wherein the first guiding device further comprises a first supporting component disposed between the driver housing and the first carrier, wherein the first supporting component and the first magnetic attraction element are located at the same side of the driving component, and the first supporting component and the first guiding rod are located at two opposite sides of the drive component.

125. The drive component, as claimed in claim 124, wherein the first supporting component is located at one side of the first magnetic attraction component, which is close to the optical axis.

126. The drive component, as claimed in claim 117, further comprising a second carrier movably installed at the first carrier and a second driving element for driving the second carrier to move with respect to the first carrier.

127. The drive component, as claimed in claim 126, further comprising a second guiding device comprising a second guiding rod for guiding the second carrier to move with respect to the first carrier along the direction defined by the optical axis; and
a second magnetic attraction component for making the second carrier be attracted to the first carrier; wherein the second guiding rod and the second magnetic attraction component are located at two opposite sides of the drive component.

128. The drive component, as claimed in claim 127, wherein the second guiding rod runs through the upper portion of the second carrier along the direction defined by the optical axis, and two ends of the second guiding rod are fixed at the first carrier.

129. The drive component, as claimed in claim 128, wherein the second guiding rod and the second driving element are located at the same side of the second carrier and the second driving element and the second magnetic attraction component are located at two opposite sides of the second carrier.

130. The drive component, as claimed in claim 129, wherein the second magnetic attraction component comprising a second magnet disposed at the second carrier and a second magnetic attraction element disposed at the first carrier and corresponded to the second magnet, so as to enable the second carrier to be attracted to the first carrier by a magnetic attraction force between the second magnet and the second magnetic attraction element.

131. The drive component, as claimed in claim 130, wherein the second guiding device further comprises a second supporting component provided between the first carrier and the second carrier, the second supporting component and the second guiding rod are located at two opposite sides of the second carrier, and the second supporting component and the second magnetic attraction component are located at the same side of the second carrier.

132. The drive component, as claimed in claim 131, wherein the first supporting component is located at one side of the first magnetic attraction component, which is close to the optical axis.

133. A zoom camera module, comprising:
any one of the drive components as claimed in claims 117-132;
a third lens part fixedly installed at an incident light side of the driver housing;
a first lens part installed in the first carrier of the drive component;
a second lens part installed in the second carrier of the drive component; and
a photosensitive component provided at an exiting light side of the driver housing.

134. The zoom camera module, as claimed in claim 133, further comprising a light inflecting element for inflecting an imaging light, wherein the third lens part, the second lens part and the first lens part are held in a light inflecting path of the light inflecting element.
